(19) Europäisches Patentamt
European Patent Office
Office européen des brevets

(11) **EP 2 750 309 A1**

(12) **EUROPEAN PATENT APPLICATION**
published in accordance with Art. 153(4) EPC

(43) Date of publication:
**02.07.2014 Bulletin 2014/27**

(21) Application number: **12828400.7**

(22) Date of filing: **17.08.2012**

(51) Int Cl.:
***H04H 60/13*** *(2008.01)* ***H04H 20/08*** *(2008.01)*
***H04M 11/08*** *(2006.01)* ***H04N 7/173*** *(2011.01)*

(86) International application number:
**PCT/JP2012/070925**

(87) International publication number:
**WO 2013/031556 (07.03.2013 Gazette 2013/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2011 JP 2011184564**
**26.08.2011 JP 2011184565**
**17.05.2012 JP 2012112968**
**17.05.2012 JP 2012112969**

(71) Applicant: **Nippon Hoso Kyokai**
**Tokyo 150-8001 (JP)**

(72) Inventors:
- **BABA Akitsugu**
  **Tokyo 157-8510 (JP)**
- **MATSUMURA Kinji**
  **Tokyo 157-8510 (JP)**
- **MITSUYA Shigeaki**
  **Tokyo 157-8510 (JP)**
- **TAKECHI Masaru**
  **Tokyo 157-8510 (JP)**
- **FUJISAWA Hiroshi**
  **Tokyo 157-8510 (JP)**
- **SUNASAKI Shunji**
  **Tokyo 157-8510 (JP)**
- **HAMADA Hiroyuki**
  **Tokyo 157-8510 (JP)**

(74) Representative: **Tischner, Oliver**
**Lavoix Munich**
**Bayerstrasse 83**
**80335 München (DE)**

(54) **RECEIVER AND RECEPTION METHOD**

(57) A receiver includes: a terminal-side server unit configured to receive a request output by a device executing an application; a receiver-side server unit configured to receive a request output by an application execution unit executing an application; a connecting unit configured to establish connection among the terminal-side server unit or the receiver side-server unit, the application execution unit, and the terminal; and a bridge unit configured to bridge-connect the terminal-side server unit and the receiver-side server unit via the connection established by the connecting unit.

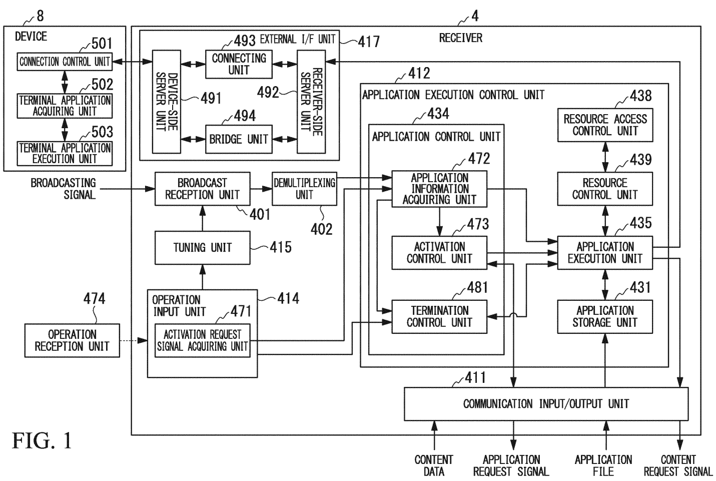

FIG. 1

EP 2 750 309 A1

## Description

TECHNICAL FIELD

The present invention relates to a receiver and a reception method.

Priority is claimed on Japanese Patent Applications No. 2011-184564 and No. 2011-184565 which are filed on August 26, 2011, and Japanese Patent Applications No. 2012-112968 and No. 2012-112969 which are filed on May 17, 2012, the content of which is incorporated herein by reference.

BACKGROUND ART

Recently, a study for implementing cooperative communication/broadcasting services has been made. As an example, the cooperative communication/broadcasting services are services in which a receiver used by a viewer receives broadcasting program content broadcast from a broadcasting station side and delivering content delivered from a service organization side via an electric communication line, such as the Internet, and cooperatively plays back those broadcasting program content and delivering content.

The receiver can receive the cooperative communication/broadcasting services by executing an application for displaying the broadcasting program content and the delivering content and outputting the sound thereof.

Additionally, an attempt to control a receiver and a communication terminal to cooperate with each other, thereby enabling a viewer to receive cooperative communication/broadcasting services using the communication terminal, has been made.

Conventionally, application execution engine platforms for digital broadcasting have been standardized and used (see, for example, Non-Patent Document 1). This document describes technical matters regarding use of network devices for controlling a device connected to a network and the functions of that device to be used in cooperation with data broadcast content.

Here, Patent Document 1 discloses technology of controlling a communication terminal and an information processing device to cooperate with each other based on a request from the communication terminal.

CITATION LIST

[Patent Document]

[Patent Document 1] Japanese Patent Unexamined Application, First Publication No. 2009-80593

[Non-Patent Document]

[Non-Patent Document 1] "APPLICATION EXCECUTION ENGINE PLATFORM FOR DIGITAL BROADCASTING", ARIB STD-B23, V1.2, Application of Radio Industries and Businesses, July 2009

DISCLOSURE OF INVENTION

Problems to be Solved by the Invention

For implementation of the function of cooperation between a receiver and a communication terminal, there has been a demand to notify, in real time, the communication terminal of information (application activation information and keyword) in accordance with broadcasting program, the contents thereof, the progress thereof, or the like. To give a real time notification of information, it is preferable for the receiver to give a notification of application to the communication terminal by push transmission. As disclosed in Patent Document 1, however, a conventional receiver has to give information in response to a request (polling) from a communication terminal. A mechanism that meets the requirements for that function has not been established yet.

Additionally, in a case where a receiver and a communication terminal are controlled to cooperate with each other, there has been a demand to control an application to be executed by the receiver and an application to be executed by the communication terminal to cooperate with each other. By the way, languages for client-side applications, such as HTML5, include one that cannot cause operation of communication on a master side (server side, host side) as a specification.

In other words, in a case where an application executed by each of the receiver and the communication terminal is an application described by a language, such as HTML5, each application is a client-side application, thereby causing a problem in that communication cannot be performed therebetween.

The present invention has been made in view of the above situations, and has an object to provide a receiver that can give a real time notification of information to a terminal to be operated cooperatively.

Additionally, the present invention has an object to provide a receiver that can control an application to be executed by the receiver and an application to be executed by the communication terminal to operate in cooperation with each other, irrespective of specifications of application languages.

Means for Solving the Problems

[1] A receiver according to one embodiment of the present invention includes: a connecting unit configured to establish a communication connection with a terminal having a communication function; a broadcast reception unit configured to receive a broadcasting signal; a demultiplexing unit configured to demultiplex a broadcasting stream from the broadcasting signal received by the broadcast reception unit; and a transmission unit configured to, in a case that predetermined first information is included in the broadcasting stream demultiplexed by the demultiplexer, transmit, by push transmission, second information related to the first information, to the terminal via the connection established by the connecting unit.

[2] Regarding the above receiver, the first information may include application specific information that specifies an application to be executed by a terminal device.

[3] The above receiver may further include: a control instruction reception unit configured to receive a control instruction to the receiver from the terminal via the connection established by the connecting unit; and a control unit configured to control the receiver based on the control instruction received by the control instruction receiver.

[4] Regarding the above receiver, the control instruction reception unit may be configured to receive, as a control instruction, a selection instruction that selects a predetermined broadcasting channel. Additionally, the control unit may be configured to control the broadcast reception unit to receive a broadcasting signal on the broadcasting channel specified, in accordance with the selection instruction received by the control instruction reception unit.

[5] The above receiver may further include: a communication input/output unit configured to communicate with an external device via a network; and a content execution unit configured to execute content that the communication input/output unit receives from the external device. In this case, the control instruction reception unit may be configured to receive a control instruction including content identification information indicating content to be executed by the content execution unit. Additionally, the control unit may be configured to control the communication input/output unit to acquire from the external device, content identified by the content identification information included in the control instruction received by the control instruction reception unit. Further, the control unit may be configured to control the content execution unit to execute the content.

[6] The above receiver may further include a search response unit configured to transmit a response including a connection address to be used by the connecting unit for the communication connection.

[7] A receiver according to another aspect of the present invention includes: a broadcast reception unit configured to receive a broadcasting signal; a demultiplexing unit configured to demultiplex a broadcasting stream from the broadcasting signal received by the broadcast reception unit; an application information acquisition unit configured to acquire from the broadcasting stream demultiplexed by the demultiplexing unit, information concerning an application to be executed by the receiver; an application execution unit configured to execute the application indicated by the information acquired by the application information acquisition unit; a server unit configured to receive a request output by the application execution unit executing the application and a request output by a terminal configured to execute an application executing the application; a connecting unit configured to establish connection among the server unit, the application execution unit, and the terminal; and a bridge unit configured to output to the terminal via the connection established by the connecting unit, the request that the server unit receives from the application execution unit, and to output to the application execution unit via the connection established, the request that the server unit receives from the terminal.

[8] Regarding the above receiver, the bridge unit may be configured to determine whether or not a relationship between an application to be executed by the application execution unit and an application to be executed by the terminal meets a predetermined condition. The bridge unit may be configured to, in a case that the condition is met, output to the terminal via the connection established by the connecting unit, the request that the server unit receives from the application execution unit, and to output to the application execution unit via the connection established, the request that the server unit receives from the terminal.

[9] Regarding the above receiver, the application execution unit and the terminal may be configured to, in a case that connection with the server unit is established, output type information to the connecting unit by execution of the application, the type information indicating a type of an application to be cooperated. Additionally, the predetermined condition used by the bridge unit may include a condition that the type information that the connecting unit receives from the application execution unit matches the type information received from the terminal.

[10] Regarding the above receiver, the application information acquisition unit may be configured to acquire from the broadcasting stream demultiplexed by the demultiplexing unit, information concerning an application to be executed by the terminal, in addition to the information concerning the application to be executed by the receiver. Additionally, the predetermined condition used by the bridge unit may include a condition that information concerning an application to be executed by the application execution unit and the information concerning the application to be executed by the terminal are included in the same broadcasting stream demultiplexed by the demultiplexing unit.

[11] Regarding the above receiver, the bridge unit may be configured to, in a case that a connection is established by the connecting unit, perform determination of the predetermined condition.

[12] Regarding the above receiver, the bridge unit may be configured to, in a case that it is determined that the predetermined condition is met, generate identification information that identifies the terminal and output the generated identification information to the application execution unit. The bridge unit may be configured to, in a case that the request that the server unit receives from the application execution unit includes the identification information, output the request to the terminal identified by the identification information. The bridge unit may be configured to, in a case that the server unit receives a request from the terminal identified by the identification information, output a combination of the request and the identification information to the application execution unit.

[13] A reception method according to another aspect of the present invention includes: a step of establishing a communication connection with a terminal having a communication function; a step of receiving a broadcasting signal; a step of demuliplexing a broadcasting stream from the broadcasting signal received by the broadcast reception unit; and a step of, in a case that predetermined first information is included in the broadcasting stream demultiplexed, transmitting, by push transmission, second information related to the first information, to the terminal via the connection established.

[14] A reception method according to another aspect of the present invention includes: a step of receiving a broadcasting signal; a step of demultiplexing a broadcasting stream from the broadcasting signal received; a step of acquiring from the broadcasting stream demultiplexed, information concerning an application to be executed; a step of executing the application indicated by the information acquired; a step of receiving a request output by executing the application or a request output from a terminal; a step of establishing a connection with the terminal; a step of outputting to the terminal via the connection established, the request output by executing the application; and a step of outputting to the application execution unit, the request output from the terminal.

Effects of the Invention

According to one aspect of the present invention, it is possible to give a notification of information to a terminal to be operated cooperatively, when a receiver retrieves information that is addressed to the terminal and included in a broadcasting signal received by the receiver, without a request (polling) from the terminal to be operated cooperatively. In other words, the receiver according to the present invention can give real-time notification of information to the terminal to be operated cooperatively.

According to another aspect of the present invention, a server unit configured to receive a request from an application to be executed by the receiver and a request from an application to be executed by the terminal is included. The server unit can output to an execution unit, a request that the server unit receives from the terminal, and output to the terminal, a request received from the execution unit. In other words, the receiver according to the present invention can control an application to be executed by the receiver and an application to be executed by the communication terminal to operate cooperatively, irrespective of specifications of languages of the applications.

BRIEF DESCRIPTION OF THE DRAWINGS

FIG. 1 is a block diagram illustrating a functional configuration of a reception system that is an embodiment of the present invention.

FIG. 2 is a diagram illustrating users of a cooperative communication/broadcasting system to which the present invention is applied and relationships thereamong.

FIG. 3 is a diagram illustrating the entire configuration of the cooperative communication/broadcasting system.

FIG. 4 is a diagram illustrating a terminal cooperation model of the cooperative communication/broadcasting system.

FIG. 5 is a conceptual diagram illustrating types of service in the cooperative communication/broadcasting system.

FIG. 6 is a diagram illustrating an example of a text expression of an AIT used for the cooperative communication/broadcasting system.

FIG. 7 is a diagram illustrating a life cycle of an application used in the cooperative communication/broadcasting system.

FIG. 8 is a diagram illustrating flow of data between organizations in the cooperative communication/broadcasting system.

FIG. 9 is a diagram illustrating flow of data in the entire cooperative communication/broadcasting system.

FIG. 10 is a diagram illustrating a sequence of a recommendation service in the cooperative communication/broadcasting system.

FIG. 11 is a diagram illustrating a transfer protocol stack in the cooperative communication/broadcasting system.

FIG. 12 is a diagram illustrating the concept of a terminal cooperation manager.

FIG. 13 is a diagram illustrating an example in which a receiver and a mobile terminal are controlled by WebSocket communication to be cooperated with each other.

FIG. 14 is a diagram illustrating an example in which an application for a receiver and an application for a mobile terminal are controlled by WebSocket communication to be cooperated with each other.

FIG. 15 illustrates an application management model in the cooperative communication/broadcasting system.

FIG. 16 illustrates a functional model of a secure manager in the cooperative communication/broadcasting system.

FIG. 17 is a diagram illustrating the concept of window presentation control method in the cooperative communication/broadcasting system.

FIG. 18 is a diagram illustrating a basic operational model of window presentation control in the cooperative communication/broadcasting system.

FIG. 19 illustrates an example of window presentation control in accordance with the policy level in the cooperative communication/broadcasting system.

FIG. 20 illustrates an example of presentation control at the time of a receipt of emergency earthquake report in the cooperative communication/broadcasting system.

FIG. 21 is a diagram illustrating the entire configuration of a cooperative communication/broadcasting system according to one embodiment of the present invention.

FIG. 22 is a functional block diagram illustrating an internal configuration of a receiver according to the embodiment.

FIG. 23 is a block diagram illustrating a detailed configuration of an application execution control unit according to the embodiment.

FIG. 24 is a block diagram illustrating a detailed configuration of a presentation control unit according to the embodiment.

FIG. 25 is a schematic diagram illustrating a front outer shape in a case where an infrared remote controller is used as an operation reception unit in one embodiment of the present invention.

FIG. 26 is a sequence chart illustrating a procedure of a process among a receiver according to the embodiment, a receiver application server, and a content delivery server.

FIG. 27 is a flowchart illustrating an operational procedure of operation in a case where the receiver according to the embodiment operates in accordance with an operation of the operation reception unit.

FIG. 28 is a flowchart illustrating an operational procedure of operation in a case where the receiver according to the embodiment operates in accordance with an operation of the operation reception unit.

FIG. 29 is a flowchart illustrating an operational procedure of operation of the receiver according to the embodiment.

FIG. 30 is a sequence chart illustrating a procedure of a process among the receiver according to the embodiment, a device, and a terminal application server

FIG. 31 is a sequence chart illustrating a procedure of a process of cooperation between the receiver and the device.

FIG. 32 is a sequence chart illustrating a procedure of cooperation among applications.

FIG. 33 is a flowchart illustrating a procedure of a bridge determination process performed by the receiver.

FIG. 34 is a diagram illustrating a data structure of an event information table.

BEST MODE FOR CARRYING OUT THE INVENTION

Hereinafter, embodiments of the present invention are explained with reference to drawings.

One embodiment of the present invention is a receiver that can, by a simple operation, switch between a state of receiving only a broadcasting service and a state of receiving a stream dependent service that is one of a plurality of service types of cooperative communication/broadcasting services. Additionally, the present embodiment is a receiver that can switch the currently received cooperative communication/broadcasting service to a broadcasting service based on a control from a cooperative communication/broadcasting service provider side. Further, the present embodiment is a receiver that can acquire from an external provider, in accordance with a request of the receiver, an application to be executed in the cooperative communication/broadcasting service and content data related to that application. Moreover, the present embodiment is a receiver and a reception system including the receiver and a device (terminal), which can dynamically change an application to be executed by a device to be operated cooperatively.

FIG. 1 is a block diagram illustrating a functional configuration of a receiver that is one embodiment of the present invention.

As shown in FIG. 1, a reception system includes a receiver 4 and a device 8.

The receiver 4 includes: a broadcast reception unit 401; a demultiplexing unit 402; a communication input/output unit 411; an application execution control unit 412; an operation input unit 414; a tuning unit 415; an external I/F unit 417; and an operation reception unit 474.

The application execution control unit 412 includes: an application storage unit 431; an application control unit 434; an application execution unit 435; a resource access control unit 438; and a resource control unit 439.

The application control unit 434 includes: an application information acquiring unit 472; an activation control unit 473; and a termination control unit 481.

The operation input unit 414 includes an activation request signal acquiring unit 471.

The external I/F unit 417 includes a device-side server unit 491; a receiver-side server unit 492; a connecting unit 493; and a bridge unit 494. Here, a configuration may be such that the external I/F unit 417 is provided for each device 8 to be connected to the device-side server unit 491 and each external I/F unit 417 is one-by-one connected to one device 8. Alternatively, a configuration may be such that the external I/F unit 417 includes one device-side server unit 491 and the device-side server side 491 is connected to multiple devices 8.

The device 8 includes: a connection control unit 501; a terminal application acquiring unit (simply referred to as a terminal appli acquiring unit in the same figure) 502; and a terminal application execution unit (simply referred to as a terminal appli execution unit) 503.

As explained above, the device 8 is a terminal (electronic device, information processing device) having a communication function, such as a cellular phone, a PDA, a smart phone, a tablet, a personal computer, or the like.

[Explanation Of Cooperative Communication/Broadcasting System To Which Present Invention Is Applied]

Here, a cooperative communication/broadcasting system to which the present invention is applied is explained. The cooperative communication/broadcasting system (communication/broadcasting integrated system, communication/broadcasting system, transmission and reception system) to which the present invention is applied is, for example, a Hybridcast (trademark) system, which provides cooperative communication/broadcasting services (Hybridcast (trademark) services, communication/broadcasting integrated services, communication/broadcasting services). Regarding cooperative communication/broadcasting services implemented by the cooperative communication/broadcasting system to which the present invention is applied, digital broadcasting services cooperate with communication services provided via the Internet or the like. Regarding cooperative communication/broadcasting services, for example, a receiver, such as a digital television, a personal computer, or a mobile terminal simultaneously displays on a window for a broadcasting program (hereinafter, also described as "a program") transmitted by broadcasting (hereinafter, also described as "a broadcast window" of display windows for a program), a window for a service or content (hereinafter, also described as "an application window" or "a display window for an application") that an application installed in that receiver acquires by communication.

[1. System Model]

[1.1 Users Of Cooperative Communication/Broadcasting System]

FIG. 2 is a diagram illustrating users of a cooperative communication/broadcasting system and relationships thereamong.

A broadcasting station that sends programs, which need organization, delivers to viewers, programs by means of broadcasting electric waves or via communication networks. In order to fulfill cooperative communication/broadcasting services, the broadcasting station provides metadata related to programs to a service organization.

The service organization that provides cooperative communication/broadcasting services produces and delivers content and applications (hereinafter, also described as "appli") for providing communication/broadcasting services to viewers. Hereinafter, a simply described "application" means an application for providing a cooperative communication/broadcasting service (an application for a cooperative communication/broadcasting service). A producer and a deliverer of content or an application need not be the same service organization. The broadcasting station may be the service organization. The service organization can provide information concerning links to other service organizations. To show that an application to be provided is a formal application, the service organization can apply a registration of the application to a system manager and acquire an approval therefrom. The approved application is not subjected to any operational limitations on the receiver. On the other hand, a window for displaying an unauthorized application cannot overlap a window for a program and the sound thereof, but can be displayed outside a window for a broadcast program by reducing the size of the window for the application. An approved application is referred to as an A (authorized) application. An unapproved application is referred to as a general application. Here, the A application is also referred to as a formal application, a registered application, an already-authorized application, a certified application, an official application, an authorized application, or an A (authorized)-type application. Additionally, the general application is also referred to as an informal application, an unauthorized application, an uncertified application, an unofficial application, a U (unauthorized)-type application, or a U application.

The system manager is an agent that certifies that an application to be provided to a viewer (receiver application) is an A application (formal). The system manager determines whether or not to approve the applied application if the right of the determination is delegated from the broadcasting station.

Applications for performing various settings may be installed in the receiver. In this case, a window for the application on the receiver may overlap a window for a program (video image).

A viewer who views a program broadcast by the broadcasting station receives cooperative communication/broadcasting services. The viewer can download and activate applications at will. Additionally, the viewer can overlap a window for an application on a window for a program (video image) at will.

[1.2 System Configuration Of Cooperative Communication/Broadcasting System]

FIG. 3 is a diagram illustrating the entire configuration of the cooperative communication/broadcasting system. The cooperative communication/broadcasting system is configured to be such that "a broadcasting station server group", "a service organization server group", and "a receiver" are functionally added to the existing broadcasting facility using electric waves.

The broadcasting station owns a broadcasting facility. Further, broadcasting stations constitute, manage, and operate the broadcasting station server group, or both the broadcasting station server group and the service organization server group. Additionally, service organizations constitute, manage, and operate the service organization server group. The system manager manages and operates a repository server. A receiver manufacturer manufactures and sells receivers. A viewer owns a receiver and receives cooperative communication/broadcasting services.

A receiver (Hybridcast (trademark) receiver, broadcast reception communication device) is mounted with a standardized common API (application program interface). Additionally, the receiver receives a broadcast in the existing format, such as a terrestrial digital broadcast and a BS (broadcasting satellite) digital broadcast.

The broadcasting facility multiplexes with broadcasting waves, signals for activating cooperative communication/broadcasting services. A multiplexing format will be explained later.

[1.3 Example Of Configuration Of Broadcasting Server Group]

The broadcasting server group manages and delivers content and metadata owned by the broadcasting station. For example, the broadcasting station server group includes various servers, a data storage unit (DB (database)), and an API. Servers constituting the broadcasting server group include a content management server, a viewer management server, a content delivery server, and a broadcasting station service server.

The content management server that manages content manages programs and metadata which are broadcasting content. The content management server includes a program management server that manages broadcast programs or programs to be broadcast, and a metadata management server that manages metadata related to programs. Metadata indicates, for example, a program title, a program ID, a program summary, casts, staffs, the broadcast date, a script, a caption, an explanation, and the like.

The viewer management server manages viewers (users). The content delivery server delivers content data by communication. The broadcasting station service server is a server for a broadcasting station to provide services to the service organization. Services to be provided by the broadcasting station service server include, for example, a social networking service operated by the broadcasting station, a weblog (blog) for each broadcast program, and the like.

The data storage unit of the broadcasting station server group includes content owned by the broadcasting station, a portion that stores metadata, and a database. There is an access limitation such that only the managing service organization may access those stored data, and others may not access those data.
The API for the broadcasting server group is an API that provides data in accordance with a request from the service organization server group. The API includes: a program that an application invokes to receive a service; and an execution unit that executes the invoked program.

[1.4 Example Of Configuration Of Service Organization Server Group]

The service server group managed and operated by the service organization manages and provides applications and content. The service server group includes a receiver application server, a service server, a content delivery server, a data storage unit (DB (database)), and an API.
The receiver application server is a server that manages applications of cooperative communication/broadcasting services. The service organization stores, manages, and delivers applications that run on the receiver. The service organization is constituted of a group or individuals. In accordance with a request from a receiver, the receiver application server informs the receiver of the storage place of an application file (application file will be explained later), and delivers the application file.
The service server is a server that provides services in accordance with a request from the application running on the receiver. The service server includes, for example, a multilingual caption server, a speech rate conversion sound server, a social TV server, a recommendation server, a program view server, a bookmark server, and the like.
The content delivery server is a server that provides content in accordance with a request from the application running on the receiver. The content delivery server includes, for example, a VOD (VideoOn Demand) delivery server, a caption delivery server, a multi-view delivery server, and the like.
The data storing unit of the service organization server group is a unit that stores content data, metadata, data generated by the service organization, viewer data, and application files. Only the managing service organization may access the data stored in the data storage unit, and others may not access those data.
The API of the service server group is an API that provides an application file, content, and a service in accordance with a request from the application running on the receiver.

[1.5 Receiver]

The receiver receives and displays a broadcast in the existing format, and executes a cooperative communication/broadcasting service. The broadcast in the existing format includes a satellite broadcast such as a terrestrial digital broadcast and a BS digital broadcast, and a data broadcast. Additionally, the receiver is connected to the Internet.
The receiver transmits a download request for an application to the service organization server based on the information multiplexed with the received broadcasting wave. The receiver executes an application program included in the downloaded application file, and thereby the application runs on the receiver. The application running on the receiver accesses the service organization server and thus acquires content.
Additionally, the receiver has a cooperative communication/broadcasting function that is a function necessary to execute a cooperative communication/broadcasting service, such as a synchronization function and an application control function. The API for the cooperative communication/broadcasting function is commonalized. For this reason, a production of an application is easy and an application is not dependent on the receiver.
Cooperative communication/broadcasting services have used a function of cooperating with a device, such as a personal computer and a mobile terminal.
The cooperative communication/broadcasting function includes a cooperative communication/broadcasting basic function and an option function that is mounted as appropriate. The receiver manufacturer mounts the cooperative communication/broadcasting basic function on every receiver. The application uses the cooperative communication/broadcasting function through the API. The cooperative communication/broadcasting function operates based on the API as will be explained later.
The API mounted on the receiver is defined so that operations of applications become identical without depending on the receiver. All applications execute processes of the receiver through the API. For this reason, the applications cannot access the functions unique to the receiver without through the API.

[1.6 Terminal Cooperation Model]

FIG. 4 is a diagram illustrating a terminal cooperation model of the cooperative communication/broadcasting system.
The receiver can provide services in cooperation with a terminal such as a mobile terminal. The terminal to be cooperated with includes, for example, a personal computer, a cellular phone, a tablet, a smart phone, a PDA (personal digital assistant), and the like. The receiver provides, as an API, a function available to another terminal as a receiver function. The API that provides a function available to other terminals is referred to as a terminal cooperation API. For example, using the terminal cooperation API, an application running on a mobile terminal can access broadcasting resources such as an acquisition of program information, and invoke a receiver function such as a playback control.

[1.6.1 Terminal Cooperation API]

The terminal cooperation API is an API for another terminal or an application running on that terminal to use receiver functions. A terminal to be cooperated with includes a terminal on a home network (LAN) and a terminal to be accessed via the Internet. The definition of an API that provides various operations will be explained later.

[1.6.2 Terminal Cooperation API Provision Process]

A terminal cooperation API provision process that operates on the receiver operates the terminal cooperation API. The terminal cooperation API provision process operates as a type of demon process that is resident and operates.

[1.6.3 Protocol To Invoke API]

For example, RESTful (REST: representation state transfer), UPnP (universal plug and play), XMPP (extensible messaging and presence protocol), or the like is used as the protocol that invokes a terminal cooperation API.

[1.6.4 Push Notification Function]

The receiver supports a notification function for a server or the like on the Internet to notify the receiver of information by push notification. The receiver receives the information notified from the server or the like by push notification. Along with the notification function, operation of some receiver function has to be controlled. The notification function is defined as one of specifications of the terminal cooperation API.

[2. Cooperative Communication/Broadcasting Application]

[2.1 Service And Application Model]

The application model of the cooperative communication/broadcasting system is a model generated by making additions and changes to the concept of the application model of DVB-GEM1.2.

[2.1.1 Cooperative Communication/Broadcasting Application]

Operation of the application for cooperative communication/broadcasting services is grouped into two patterns which are operation that cooperates with AV (audio visual) content (cooperation) and operation executed only by an application (non-cooperation). The AV content is broadcasting content (program) or communication content (VoD, etc.).

In the case of cooperation, a life cycle control of application, such as activation, is executed in cooperation with a broadcast or communication content. An application is activated based on an AIT (application information table, application activation information) delivered along with AV content. In this case, it is possible for a provider of AV content, such as broadcasting organization, to control the life cycle, such as an automatic activation and termination of an application, and the like, in addition to operations of activation and terminal performed by a viewer.

On the other hand, in the case of non-cooperation, an application activates and terminates by itself, without cooperation with a broadcast or communication content. In this case, the life cycle of the application, such as initiation and termination of the application, can be controlled only by a viewer.

[2.1.2 Service]

Conventionally, a service is organized by a broadcasting organization, and a service means continuous programs that can be broadcast as part of a schedule. In the cooperative communication/broadcasting system, the above concept is expanded, and two types of service, which are a stream dependent service and an independent service, are defined.

FIG. 5 is a conceptual diagram illustrating types of service.

In the receiver, a stream dependent service and an independent service are selected on the receiver in a pseudo manner, thus activating a related application.

The stream dependent service is an expansion of the concept of the conventional service, and includes, in addition to an AV stream transmitted by broadcasting or communication, an application (multiple applications allowed) that operates in cooperation with the AV stream. The application can be activated cooperatively by selection and playback (tuning in the case of broadcasting) of an AV stream.

On the other hand, an independent service does not include image and sound streams, but includes only an application (multiple applications allowed). The application is activated by a viewer selecting an independent service.

[2.1.3 Activation Of Application Acquired by On-The-Fly And Activation Of Installed Application]

There are two methods of activating an application, which are a method of acquiring an application file on-the-fly and activating the application file, and a method of activating an application file previously stored (installed) in the receiver. "On-the-fly" is a method of acquiring an application file by communication at the time when the application is executed, which is also referred to as an "uninstalled" method or a "direct execution" method.

Here, based on a notification of an application by the AIT as will be explained later, the receiver activates an application program in an application file stored in a local file system. When the receiver acquires by communication and installs an application file, the receiver rewrites information in a location hierarchy set to a related AIT (see section 2.5.1) with the location on the local file system. Operation of the receiver generating a value for identifying an independent service is necessary as appropriate (necessary for each AIT for an independent service).

[2.2 Notification Of Application (Signaling)]

[2.2.1 Application Activation Information (AIT)]

Notification of an application included in a service is performed using application activation information notified at the time when a service is selected. An AIT defined by ARIB STD-B23 (hereinafter described as "ARIB-J") is used as application activation information. For each of the stream dependent service and the independent service, the AIT dedicated for that service is notified. The details of transmission of an AIT for each service are shown hereinafter.

FIG. 6 is a diagram illustrating a text expression of the AIT used in the cooperative communication/broadcasting system.

The AIT used in the cooperative communication/broadcasting system is based on the AIT defined by the ARIB-J. For the AIT, there are a binary expression to be transmitted by an SI (service information) table, and a text expression (AIT file) in XML (extensible markup language) format. In FIG. 6, an example of the text expression is shown. In the AIT, an application ID (applicationIdentifier) that identifies an application, a control code (controlCode) that controls a state of the application, location information (location) that indicates the stored position (repository) of an application file.

[2.2.2 Notification Of Application That Cooperates With AV Content]

For a notification of an application that cooperates with AV content, there are cases where the AIT is multiplexed with AV content to be transmitted by MPEG (moving image experts group)-2 TS (transport stream) and where information concerning the AIT is separately transmitted. The AIT is transmitted in cooperation with the AV content, thereby making it possible for the receiver to perform a life cycle control, such as an activation of the application to be cooperated with a broadcasting program, and a dynamic activation of the application in cooperation with the progress of the program.

The notification method includes, for example: (1) addition of an ES (elementary stream) for the AIT; (2) addition of a descriptor to an EIT (event information table); (3) carousel transmission; (4) acquisition of an AIT file by communication; (5) dynamic transmission of an AIT file by communication; and the like.

(1) In the case of addition of an ES for the AIT, the ES for the AIT is multiplexed with a broadcasting TS, similarly to the definition by the ARIB-J.

(2) In the case of addition of a descriptor to an EIT, similar to presentation control as will be explained later, a descriptor is added to the EIT (p/f), and the same information as the information to be transmitted by the AIT is transmitted.

(3) In the case of carousel transmission, the AIT is transmitted by DSM-CC (digital storage media command and control) data carousel. For example, an AIT file is transmitted by a particular module. It is expected that the carousel transmission will cause overhead due to an acquisition time, but there is no need to change the existing broadcasting signals.

As an application example of the carousel transmission, a component tag and a module of a carousel for transmitting a cooperative communication/broadcasting activation file are fixed. For example, "AA" is set to the component tag, "0000" is set to the module ID, a type indicating the AIT is set to a Type descriptor of the module. The receiver monitors an update of the module. Upon detecting an update, the receiver reads the AIT and executes a control specified by the AIT (the life cycle control on an application).

(4) In the case of acquisition of the AIT file by communication, a separately prepared AIT file is acquired simultaneously with a selection of AV content. For example, both the AIT file and the AV file are acquired based on information describing information concerning AV content to be played back (content ID) and application activation information (AIT). The concept of use unit content for server broadcasting (ARIB TR-B27) and the concept of entry components may be used.

(5) In the case of dynamic transmission of the AIT by communication, while AV content is played back, a control, such as an activation of a new application and a termination of the running application, is performed by the AIT transmitted by communication. Here, in a case where a control is performed at an unexpected timing, push notification via communication is performed.

[2.2.3 Notification Of Application That Operates Independently]

The receiver acquires, by communication, an AIT including information concerning an activation of an application that operates independently. The independent application is acquired from a known application repository. Procedure for acquiring information concerning an activation of each independent application is shown hereinafter.

(1) A location of the application repository is set to the receiver. The location may be previously set at the time of shipping, or multiple repositories may be added later by some method.
(2) When an application menu is opened, the receiver acquires an application list (including a location description of the AIT for each application) from the application repository, and applications are displayed on the menu.
(3) The AIT for the application selected by a viewer is acquired by communication.

The above procedure is executed using a WEB API provided by the repository. Additionally, the application that operates independently does not operate in cooperation with AV content, and therefore does not execute a dynamic life cycle control at the timing previously specified. The control (such as a termination) at the timing not previously specified is executed by push notification via communication.

[2.3 Activation And Termination Of Application]

[2.3.1 Life Cycle Of Application]

[2.3.1.1 Life Cycle]

FIG. 7 is a diagram illustrating the life cycle of an application.
The states of the application are based on the states of an application defined by the ARIB-J, and include five states: "Not Loaded (pre-loading)", "Loaded (post-loading)", "Paused (pausing)", "Started (initiation)", and "Destroyed (destruction)". In those five states, a series of steps from the time when the application is loaded to the time when the application is executed and terminated is called the life cycle. Additionally, a control of transition between each state is called a life cycle control.

[2.3.1.2 Basic Life Cycle Control Of Application That Cooperates With AV Content]

A life cycle control of an application that cooperates with AV content is executed basically through a selection of a stream dependent service.
The selection of a stream dependent service is performed by a viewer. A service is a set of content items including AV content and an application. The life cycle of the service, such as activation and termination, is controlled based on a control code included in the AIT transmitted along with the application. In some cases, one service includes multiple applications which operate simultaneously.
Selection of a service that triggers an activation of an application is controlled by an application through the receiver API, by a navigator as a resident application of the receiver, by controlling buttons of a remote controller in the case of broadcasting services, or the like. At the time of changing the service, presentation of contents (AV contents and an application) included in the services before and after the change is switched. In a case where different applications are included in the services before and after the change, the application running before the change is terminated by the change of service, and the different application becomes able to be activated after the change. The details of those operations are explained later in section 2.4.

[2.3.2 Activation Of Application]

[2.3.2.1 Activation By AIT]

In a case where a service (stream dependent service, independent service) is selected in the receiver, the application for which "auto-start" is specified by the control code included in the AIT provided with the service is automatically activated with the selection of the service without any express action from a viewer. While the service is selected, the life cycle thereof is controlled by an application signaling with respect to that service. For example, in the case of a broadcasting service, the receiver always monitors the AIT transmitted with a broadcast, and reacts to a change thereof. Thus, the receiver can control a new application to be automatically activated (auto-start) in the interim by an application signaling, such as transmission of the AIT.

The application for which "auto-start" is not specified by the application activation information included in the AIT is not automatically activated, and requires an express activation by the viewer. The express activation is performed by an application launcher of the receiver for a resident application. For example, a cooperative communication/broadcasting service button of a remote controller is pressed at the time of selection of a broadcasting service. Thus, a menu for activating an application is opened on the receiver, and a list of applications that cooperate with the current broadcasting (communication) service is displayed. Then, the viewer performs an operation to select an application to be activated and activate the application.

[2.3.2.2 Activation From Cooperative Communication/Broadcasting Application]

Since multiple applications can be activated in a service, there are some cases where another application included in the same service is activated from the already-activated application. An API for activating another application by specifying the application ID is defined in the ARIB-J application execution engine platform. In other execution engine platforms, an API with a similar function is defined.

[2.3.2.3 Activation From BML (Broadcast Markup Language)]

The receiver is provided with an execution engine platform for the existing BML data broadcasting, in addition to the execution engine platform for cooperative communication/broadcasting applications. For this reason, an API for controlling activation of cooperative communication/broadcasting applications is added as the API for the BML. Here, the BML is a multimedia encoding format defined by the ARIB STD B24, which has been used as a data broadcasting format for the existing Japanese terrestrial BS/CS digital broadcasting.

[2.3.2.4 Activation of Application That Operates Independently]

An independent service is a virtual service including only an application. By selection of an independent application, an AIT is acquired by the same mechanism as activation from AIT in section 2.3.2.1, and thus an application is activated. However, in the independent service, at least one auto-start application is activated. Selection of an independent service is performed from, for example, an application launcher.

[2.3.3 Termination Of Application]

[2.3.3.1 Termination By AIT]

The life cycle of the activated application is controlled by an application signaling with respect to that service. For example, in the case of broadcasting, the receiver always monitors an AIT transmitted with a broadcast, specifies a control code "destroy" with respect to the running application, and thus terminates the application. Also in a case where an AIT is multiplexed with a stream dependent service to be transmitted by communication, it is possible to control a termination of a cooperating application.

[2.3.3.2 Termination By Application Itself]

An application itself terminates the application using an API for termination.

[2.3.3.3 Termination by Another Application]

Using an application terminating API to be executed by an application, another running application is terminated. In this case, an adequate security policy for terminating the other application is necessary.

[2.3.3.4 Termination At Time Of Change To Another Service]

At the time when the receiver changes the service to another service, the application included in the service before the change, which is among the applications included in stream dependent services, is terminated, and an application transmitted by signaling in a new service is activated. In a case where the same application is included in the services before and after the change, operation may be continued. This is controlled by a flag included in the AIT. The details of a service bound application included in a stream dependent service will be explained in section 4.2.

[2.3.3.5 Termination By Receiver]

The receiver terminates the specified application by a receiver function. For example, the receiver displays a list of running applications, and terminates the application selected by a viewer.

[2.3.3.6 Dynamic Termination Of Application]

To dynamically control a termination of an application, an AIT file for ordering a termination of an application is transmitted to the receiver. In this case, the AIT is notified by push notification.

[2.3.4 Activation Of Multiple Applications]

[2.3.4.1 Application Transmitted By Signaling In Same Service]

The receiver can simultaneously execute applications listed by the AIT in the same service.

[2.3.4.2 Simultaneous Activation Of Applications That Operate Independently Of Application That Cooperates With AV Content]

An application that cooperates with AV content is activated only in stream dependent services. On the other hand, an application that operates independently may be simultaneously activated at any timing with an application that cooperates with AV content or with another application that operates independently.

[2.3.4.3 Management Of Resources At Time Of Activation Of Multiple Applications]

In a case where multiple applications are activated, there are some cases where those applications require the same resource of the receiver (such as a display). The receiver has a mechanism, such as a resource manager, and thereby performs operations of adequately allocating resources, of stopping execution of the application if no resources are available, and the like.

[2.4 Boundary Of Application]

[2.4.1 Basic Treatment of Bound/Unbound]

Applications include two types of applications, which are a bound application associated with an organized service and an unbound application not associated with the organized service. Which organized service a bound application is associated with is determined by which organized service the AIT including information concerning activation of that application is acquired from.

A bound application enters a state of being executable while the associated organized service is received. In other words, the bound application is activated by the AIT from the organized service and terminated when the reception of the organized service ends (when the organized channel being received is changed). Another application activated from the bound application is also treated as a bound application. When the original application activated first from a series of related bound applications ends, the other applications activated from the first application also end.

An unbound application is not associated with an organized service. For this reason, execution of the application is continued even if the organized service being received is changed. An AIT for activating an application cannot be acquired from the organized service. For this reason, activation information is given to the receiver by another means (for example, by acquiring an AIT file associated with the application using an application launcher or the like), and thus the unbound application is activated. Another application activated from the unbound application is also treated as an unbound application. Basically, an application is expressly terminated by an operation of a viewer. However, the application is terminated also in a case where an instruction (KILLALL) to terminate all applications is given by the AIT from the organized service being received.

[2.4.2 Unique Treatment of Unbound Application]

An unbound application is not associated with an organized service. As shown in section 2.3.2.4, however, the unbound application is associated with a virtual organized service (generated in the receiver at the time of start-up of the receiver), and thereby the same activation process mechanism as that for the bound application can be applied.

A method of generating a virtual organized service is implementation dependent for the receiver. What identification value is to be given to that organized service differs depending on the implementation of the receiver. In a case where an application file is installed in the receiver so as to be activated by an application launcher at any timing, however, it is necessary for the receiver to update the contents of the AIT so that an ID for identifying a virtual organized service, an acquisition source of the application file, and the like (the AIT acquired from a service organization server or a repository includes a description of that server as the acquisition source, and therefore a change has to be made to acquire the application file from a storage area in the receiver), are suited to the implementation of the receiver.

[2.5 Application Acquisition Method]

[2.5.1 Acquisition Based On AIT]

As described above, activation information of all applications is given by the AIT. Acquisition of the application file is instructed by location information of the application included in the AIT. For example, in the case of FIG. 3, the location information is described in the hierarchy of
"/ApplicationList/Application/applicationSpecificDescriptor/dvbjDescriptor/location"
(which is described in XML as the contents of the location element). The description of the location information is, for example, "http://192.168.11.37/demo.jar".

The above case is an example where "demo.jar" (application archive of Java (trademark)) is acquired using HTTP (hypertext transfer protocol) protocol. Transport protocol to be used and a package format of applications will be explained later.

[2.5.2 Package Format for Application]

A package format for applications depends on an application format (Java (trademark) or HTML5), and the like. The receiver acquires some bundle of files or an entry file, thereby acquiring a series of files required for activation of applications (programs themselves, image files, and the like). That series of files are the application files. Formats of application files include, for example, a compressed type of a series of files (zip file or the like), a Jar file (Java (trademark) execution engine platform), an entry HTML file (in the case of HTML5 execution engine platform), a uniquely defined entry file, and the like.

[2.5.3 Application Transmission Method]

Transmission methods for acquiring application files via a network include acquisition using HTTP protocol and acquisition using FILE protocol.

In the case of acquisition using the HTTP protocol, a GET method is used to acquire application files. "http://~" is set to specify the AIT location.

On the other hand, in the case of acquisition using the FILE protocol, when an application file (application program) stored (installed) in the local of the receiver, "http:///~" is set to specify the AIT location.

[3. Conditions of Interface]

[3.1 Cooperative Communication/Broadcasting Service Control Signal Of Broadcasting Wave]

Broadcasting waves require a mechanism for sending the application activation information explained in section 2.2.2. Further, assuming the time that an emergency warning is broadcast, "KILLALL" is added to an application control code (application_control_code) of the AIT defined in ARIB STD-B23, Part 2, Section 10.1.6.3.2, in order to forcibly terminate all applications. Table 1 indicates the meaning of the control code "KILLALL" to be added.

[Table 1]

| Code | Identification Name | Meaning |
|---|---|---|
| 0×08 | KILLALL | All applications are terminated regardless of whether it is cooperation or non-cooperation. For ARIB-J, the unconditional parameter is set to be true, and thus destroy method in Xlet is called. For the HTML5 browser or the like, the browser is forcibly terminated without displaying a dialog or the like for inquiring a user about allowance or forbiddance of termination. |

Additionally, descriptors are added to the EIT and the AIT in order to control presentation of applications based on the relationship between applications and AV content. The details are explained in section 4.3.

[3.2 Broadcasting Station Server Group API]

FIG. 8 is a diagram illustrating flow of data between organizations in the cooperative communication/broadcasting system. FIG. 9 is a diagram illustrating flow of data in the entire cooperative communication/broadcasting system.

Here, an explanation is given with respect to definitions of the API between a server for each service of the broadcasting station server group and a server for each service of the service organization server group, between the broadcasting station server group and the cooperative communication/broadcasting base server, and between the cooperative communication/broadcasting base server and a server for each service of the service organization server group, which are shown in FIG. 8, and definitions of the API between the receiver control and the cooperative communication/broadcasting base server, and between metadata and a server for each service, which are shown in FIG. 9.

[3.2.1 API]

Communication between the broadcasting server that is one of servers constituting the broadcasting station server group and a service organization server that is one of servers constituting the service organization server group is performed in a REST format. Additionally, it is expected that the directory structures of servers differ between a broadcasting station server and a service organization server in accordance with a provided service, and therefore API is determined by an agreement therebetween. An example of a URL of the broadcasting station server and the service organization server is shown below.

http://hybridcast.org/{broadcasting station name}/{server name}/{content ID}/{data to be managed}/{sorting method}/{head item},{number of pieces}/?{parameter}={value}/

[3.2.2 Recommendation Service]

FIG. 10 is a diagram illustrating a sequence of a recommendation service. Methods used between the service organization server group and an interface unit of the broadcasting station server are "GET", "POST", "PUT", and "DELETE". An example of command formats is shown below.

(1) http://hybridcast.or.jp/{broadcasting station name}/(server name)/{content ID}/{data to be managed}/{sorting method}/{head item},{number of pieces}/

(2) http://hybridcast.or.jp/{broadcasting station name}/(server name)/{viewer ID}/{data to be managed}/{sorting method}/{head item},{number of pieces}/

(3) http://hybridcast.or.jp/{broadcasting station name}/(server name)/{review ID}/{data to be managed}/{sorting method}/{head item},{number of pieces}/

Additionally, parameters include {broadcasting station name}, {server name}, {content ID}, {viewer ID}, {review ID}, {data to be managed}, {sorting method}, {head item}, {number of pieces}, and the like.

[3.2.3 Data To Be Managed]

Data to be managed includes content information, user information, user·generated·content information, device information, and authentication information.

The content information includes data indicating a title, a summary, a genre, the broadcast date, a broadcasting time (time length), an image mode, a sound mode, caption data, a script, casts, music, a producer, a production company, a book, a recommended program, a picture URI, the playback number of times, a CM, time stamp information, and the like. The user information includes data indicating the name of a user (viewer), the age, the gender, an area, the review written number of times, the comment written number of times, favorites, a friend list, a playback place (time), a playback end place (time), a program viewed history, and the like. The user·generated·content information includes data indicating a content ID, a user ID, the contents of a review, the review written time, evaluation of review, and the like. The device information includes a device ID. The authentication information includes an authentication ID.

[3.3. Transport Format]

[3.3.1 About Image/Sound Used For Communication]

Images and sounds to be used for communication comply with Digital Television Network Function Specification, Streaming Function Specification, Protocol V1.1 (Networked Digital Television).

[3.3.1.1 Relationship With Mono Media Format For Image And Sound]

A TTS (timestamped transport stream) format is used for multiplexing an image encoded by MPEG-2 Video or H.264/MPEG-4 AVC (advanced video coding) with the sound encoded by MPEG-1 Audio Layer II or MPEG-2 Audio AAC, captions, and the like. However, MPEG2-TS, MMT (MPEG media transport), MP4, and the like may be used.

[3.3.1.2 Related Transfer Protocol]

FIG. 11 is a diagram illustrating a transfer protocol stack.

For a stream transmission, RTP (real-time transport protocol)/UDP (user datagram protocol) and HTTP/TCP (transmission control protocol) are used. Here, in a case where RTP/UDP is used, information concerning error correction may be transmitted as an option. Additionally, in a case where HTTP/TCP is used, the connection, the method, and the header of the HTTP are used to perform a stream control. In a case where transmission is performed using RTP (real-time transport protocol), RTS (real time streaming protocol) is used for stream control information.

[3.3.2 Related Caption]

Multilingual captions comply with Timed Text Markup Language (W3C (world wide web consortium)). Here, synchronization is separately performed at the application level. Additionally, each associated font is downloaded as appropriate. For example, a font file is set to the payload of the HTTP. In this case, Dynamic Fonts and PFR (portable font resource) of the Web are used.

Preferably, the capacity of fonts is approximately 5-35MB.

[3.4 Mono Media Format]

Mono media encoding, defined as follows, is used for cooperative communication/broadcasting services.

[3.4.1 Moving Image]

For moving images, MPEG-2 Video defined by the ARIB STD-B32 V2.4, Part 1, Section 3.1 and MPEG4-AVC defined by the same standard, Section 3.2, are used. The constraint conditions of encoded parameters for television services defined by the same standard, Section 5.1, are applied.

[3.4.2 Sound]

For sound, MPEG-2 Audio and PCM (pulse code modulation) (AIFF-C (audio interchange file format compression)) are used.
In the case of the MPEG-2 Audio, MPEG-2 AAC defined by the ARIB STD-B32 V2.4, Part 2, Section 3.1, is used. The constraint conditions of encoded parameters defined by the same standard, Chapter 5, are applied.
In the case of the PCM, formats defined by the ARIB STD-B24 V5.4, Volume 1, Part 2, Section 6.2, are used.
For additional sound, formats defined by the ARIB STD-B24 V5.4, Volume 1, Part 2, Section 6.4, are used.

[3.4.3 Still Image]

In the case of JPEG (joint photographic experts group), the encoding formats defined by the ARIB STD-B24 V5.4, Volume 1, Part 2, Section 5.2, are used.
In the case of PNG (portable network graphics), formats defined by ISO/IEC 15948:2003 are used. The contents thereof are the same as defined by W3C Recommendation Portable Network Graphics (PNG) Specification (Second Edition).

[3.4.4 Character]

For encoding of characters, the international encoding character set defined by the ARIB STD-B24 V5.4, Volume 1, Part 2, Section 7.2, is used.
For an encoding character set, the BMP (basic multilingual plane) set defined by the same standard, Section 7.2.1.1.3, is used, and chart 7-20 is applied. Additionally,
ISO/IEC10646: 2003, Supplement 5 and Supplement 6 are applied.
For external characters, formats defined by the ARIB STD-B24 V5.4, Volume 1, Part 2, Section 7.2.1.2, or formats defined by the ARIB STD-B23 Part 1, Section 5.2.1.2, or the like, are applied.
For control codes, only APR(CR) and APD (LF) among C0 control codes defined by the ARIB STD-B24 V5.4, Volume 1, Part 2, Section 7.2.2.1, are used. Other C0 control codes and C1 control codes are not used.
Conversion of character codes comply with the ARIB STD-B24 V5.4, Volume 1, Part 2, Appendix, Provision E.
In a case where information is encoded by a format other than the above-defined character encoding formats, the information is converted into the above character encoding format in a sending process or an appropriate process to be performed in the receiver, and thereafter processes are performed. In other words, character codes in other encoding formats are not directly used by applications.

[3.5 Application Format]

A method of describing applications executable on the receiver is shown. A connection of an execution engine platform for executing the applications generated by this description method and a secure manager is shown in Chapter 4.

[3.5.1 Application Format Executable On Receiver]

As a description format of applications executable on the receiver, BML (ARIB STD-B24), ARIB-J (ARIB STD-B23), and HTML5 (W3C HTML5 Working draft-2011/Jan/13) are defined.

[3.5.2 BML]

The receiver has a function of presenting BML documents based on the operational guidelines for terrestrial digital broadcasting (ARIB TR-B 14) or the operational guidelines for BS digital broadcasting (ARIB TR-B15). The receiver must be able to present data broadcasting services provided by terrestrial digital broadcasting or BS digital broadcasting as defined by the existing standard. However, the receiver requires as an essential function, only the function of presenting BML content to be delivered by broadcasting in the data carousel format. However, the receiver does not require as an essential function, the function of presenting BML content to be provided by communication using HTTP protocol (TR-B 14 Volume 3, Section 2, Chapter 5.14, and TR-B15, Part 1, Volume 3, Section 8.14).
Additionally, originated from data broadcast content (BML), browser.startHybridcastApp(), and getAITInfo() are defined as broadcasting expansion APIs for activating a communication application defined as below.
Table 2 shows the definitions of browser.startHybridcastApp(). browser.startHybridcastApp() is an API that activates a cooperative communication/broadcasting application.

[Table 2]

| | |
|---|---|
| Grammar | Number startHybridcastApp (input String applicationURL, input Number applicationType, [input String returnURL]) |
| Argument | applicationURL: URL of application<br>applicationType: constant value indicating type of application<br>returnURL: return at time of termination of application |
| Return Value | Value indicating result of execution |
| Explanation | Presentation of BML document is terminated by execution of present function, and presentation of specified application is initiated. |

Table 3 indicates the definition of getAITInfo(). getAITInfo() is an API that acquires the newest AIT information included in the service being received.

[Table 3]

| | |
|---|---|
| Grammar | Array getAITInfo (out Array) |
| Return Value | Array[0]: Value indicating result of acquisition<br>Array[1]: Array storing information of application 1 (*1)<br>Array[2]: Array storing information of application 2<br>Array[n]: repeated hereinafter<br>*1) Formats for Array storing application information are as follows.<br>Array[0]: Application ID<br>Array[1]: URL of Application |
| Explanation | Acquire newest AIT information included in service being received. |

[3.5.3 HTML5]

[3.5.3.1 Description Format]

The receiver supports HTML5 as a description format for presentation engine applications provided by communication. As a JavaScript (trademark) API, the following is supported. Here, among the following APIs, APIs which have been considered by the W3C include Working Draft (WD) or Editor's Draft (ED). However, an API related to data carousel transmitted by broadcasting waves is not essential.

(1) System Information API (W3C Working Draft 02 Feb. 2010) (2) WebSocket API (W3C Editor's Draft 28 Feb. 2011) (3) File API (W3C Working Draft 26 Oct. 2010) (4) Permission for File API, System Information API (Permissions for Device API Access, W3C Working Draft 05 Oct. 2010) (5) Device Description Repository Simple API (W3C Recommendation 05 Dec. 2008) (6) API for Media Resource 1.0 (W3C Working Draft 08 June 2010) (7) Web Storage (W3C Working Draft 08 Feb. 2011) (8) Server-Sent Events (W3C Editor's Draft 28 Feb. 2011) (9) Indexed Database API (W3C Working Draft 19 Aug. 2010) (10) SI access API (11) Tuning API (12) Printing (13) Reservation

[3.5.3.2 Browser]

An HTML5 browser of the receiver is implemented with functions of a JavaScript (trademark) process system, Web Workers (W3C Working Draft 08 Feb. 2011), Widget Interface (W3C Working Draft 3 Feb. 2011), HTML Canvas2D Context (W3C Editor's Draft 28 Feb. 2011). Web Workers is necessary to support multitask. Widget Interface is necessary to support independent applications. HTML Canvas2D Context is necessary to support two-dimensional vector graphics.

[3.5.4 ARIB-J]

The receiver supports ARIB-J as a description format for application execution engine applications provided by communication. Additionally, DVB Bluebook A153 (GEM Media Synchronization API) is used as a synchronization API among multiple streams.

[3.6 Receiver API]

Hereinafter, a receiver API that can be used for the HTML5 and the ARIB-J is explained.

[3.6.1 Namespace]

Namespace is a description rule of character strings for specifying the positions of various resources used in the cooperative communication/broadcasting system, such as image sound content, applications, mono media files, and the like, which are present on a server or in the receiver. A method of describing namespace for referring to various resources, which is used in section 3.5.2 and the following sections, is defined for each group. Resources include resources on an Internet server, resources on application cache, and resources for broadcasting. The resources on the Internet server include file resources likes stream resources, such as VOD content, applications, and other resources referred to by applications. The resources for broadcasting include stream resources such as programs on the air and past and future programs, and carousel resources such as modules and event messages.

[3.6.2 Cooperative Communication/Broadcasting Interface]

Cooperative communication/broadcasting interfaces include the following interfaces.

(1) getRunningApplications(): acquires information concerning a running application. A return value of getRunningApplications() includes apps[], and application_id and running_level for each application. apps[] is set with a list of running applications. application_id is set with an application ID, which is null in a case where the application is a general application (informal application). running_level is set with the execution level (a result of authentication and a state of viewer setting).
Here, in view of security, available information concerning other applications should be limited.
(2) queryApplicationInfo(): acquires information concerning the specified application.
(3) getProgramInfo(): acquires information concerning a broadcast being received. A return value includes tuner_state, network_id, ts_id, orig_ts_id, service_id, event_id, and content_id. tuner_state is set with a value indicating the reception state.
(4) getEPGInfo(): acquires various information in the EIT (+SDT) of a broadcast being received.
(5) saveApplicationToCache(): stores in a cache, an application file on a server.
(6) queryApplicationInCache(): searches an application file (application program) in the cache. An argument of queryApplicationInCache() includes application_id, getDSMCCModule(), addBroadcastSignalListener(), and getListFromHybridcastMenu(). The application_id is set with an application ID issued from a certification authority. The getDSMCCModule() acquires a specified module from a broadcasting wave. The addBroadcastSignalListener() registers a listener that monitors updates of an SI, emergency information, a carousel, and an event message. The getListFromHybridcastMenu() acquires a list of applications on the top menu. A return value of the queryApplicationInCache() includes user_apps[], broadcaster_apps[], and vendor_apps[].
(7) addApplicationToHybridcastMenu(): adds an application to the top menu.
(8) getKeyFromBroadcast(): acquires from a broadcast, key information to access a limited server.
(9) querySupportedFunction(): inquiries about a function of an application browser. This is used to confirm whether or not a function/API is available.

[3.6.3 BroadcastSignalListener Interface]

A BroadcastSignalListener interface is a listener interface that monitors an SI, emergency information, a carousel, and an event message, which are acquired from a broadcast. Also, when an associated organized service is changed during execution of a bound application, an event of this interface occurs.

[3.6.4 LocalDatabase Interface]

A LocalDatabase interface is an interface for storing and managing viewer information in the receiver. The viewer information is information, such as private information, which should not be disclosed to the server side, that is, the minimal information, such as a viewer ID or a receiver ID.

[3.6.5 Synchronization Related API]

As a SynchronizationManager interface, an API similar to DVB Bluebook A153 (GEM Stream Synchronization API) is introduced. Further, the following interfaces are added as APIs.

(1) getCurrentSTC(): acquires the current STC (system time clock) value. Here, according to the MPEG2 streams standard, it is defined that a system clock (STC) on the transmission side is multiplexed and delivered as a PCR (program clock reference) signal in an MPEG2 transport stream, and thus a system clock (STC) in the receiver is synchronized with the STC on the transmission side.
(2) getCurrentPositionInProgram(): acquires a time having elapsed from the start of a program.
(3) delayStreamPresentation(): initiates presentation of a delay of a broadcasting stream being presented.
(4) getCurrentDelay(): acquires a delayed time of the broadcasting stream being presented (from the scheduled presentation time).

[3.6.6 SecurityException Interface]

This is an exceptional interface that occurs when an application executes function calling or property operation which is prohibited at the current execution level. The SecurityException interface occurs by calling of each of the above APIs, or various operations with respect to an object that refers to a broadcast (<video> of HTML5, XX Controller of ARIB-J).

[3.7 Receiver Function]

The receiver has the following functions as integration functions.

[3.7.1 Application Launcher]

An application launcher is a receiver integrated function that provides selections of applications for activating an application. Applications to be selected include the following.

- Application registered or stored in the receiver.
- Application preinstalled in the receiver.
- Application registered in a known repository.
- Application which is included in applications in which activation instructions are described by application activation information, and which has an application control code other than AUTO_START.
- Application which is terminated by a user and for which AUTO_START is instructed (this is a function of enabling reactivation of an application when the application meets executable conditions (such as currently-viewing organized service, or time)).

Methods of activating the application launcher includes pressing down a particular key on a remote controller, selecting a receiver from an integrated menu, or the like.
Additionally, the application launcher has a function of enabling an application stored in a repository to be registered to the launcher itself so that a user can quickly and conveniently activate a particular application. Further, the application launcher may be activated at any timing by a user irrespective of an execution state of an application, and has no impact on the execution state of the application.

[3.8 Terminal Cooperation Function]

A configuration is made such that the receiver can use an API (terminal cooperation API) with respect to an application that runs on a mobile terminal connected via a home LAN or the like. Thus, it is possible to control a television (receiver) and each terminal to be operated cooperatively. For example, it becomes possible for an application on a mobile terminal to call a function of the receiver, such as acquisition of information concerning the program currently-viewed on the television, and playback control of a broadcasting channel or VOD content to be presented on a television.
For implementation of such terminal cooperation functions, the receiver includes a terminal cooperation manager. The details of a terminal cooperation function of the terminal cooperation manager are explained below. Here, in the present embodiment, the terminal cooperation manager is included in the external I/F unit 417 shown in FIG. 1.

[3.8.1 Scope of Terminal Cooperation]

As the scope of terminal cooperation for the receiver, the following is assumed.

- Home network: a case where the receiver and a terminal to be cooperated with the receiver are connected to a home LAN.
- Internet: a case where multiple receivers cooperate with one another via the Internet, or a case where the receiver cooperates with a mobile terminal or the like.

[3.8.2 Terminal Cooperation Manager]

The terminal cooperation manager is a software module of the receiver which boots at the same time of power-on of the receiver, and performs processes of controlling receiver functions invoked by a terminal to be cooperated with calling an API, performing push notification of information to a terminal, in addition to a process of establishing communication among terminals.

Since a receiver and a terminal cooperate with each other, a protocol for detecting a device to establish communication, and a communication protocol for transmitting and receiving calling and return values for the cooperation API, are defined for the terminal cooperation manager.

FIG. 12 is a diagram illustrating the concept of the terminal cooperation manager.

As shown in FIG. 12, the receiver has a configuration supporting multiple device detection protocols and a communication protocol. For example, there are cases where the receiver supports multiple different protocols for cooperation in a home network, and where the receiver uses different protocols as a protocol for the home network and a protocol to be used for cooperation via the Internet.

Additionally, the receiver provides to an application that runs on a mobile terminal, mechanisms of not only cooperation with the receiver functions of the receiver, but also cooperation with an application that runs on the receiver (inter-application cooperation).

The API for calling a receiver function is defined as an expanded API for application. Basically, an API having substantially the same function is provided to a mobile terminal.

Regarding cooperation between an application and a mobile terminal, what function and what cooperation method are to be provided differ depending on each application. The present terminal cooperation function provides a versatile mechanism of transmitting and receiving commands and various information for an application and a mobile terminal to cooperate with each other.

The terminal cooperation manager has a bridge function supporting multiple protocols, which bridges calling of a receiver function by a mobile terminal, and transmission and reception of data supporting each protocol in communication with an application. Here, the terminal cooperation manager is included in the receiver 4, as part of the external I/F unit 417 shown in FIG. 1.

[3.8.3 Mechanism For Detecting Device]

Regarding the terminal cooperation function, not only a home network, but also connection via the Internet are within its scope. In this section, a specification for detecting a device in a home network is described. A preferable specification is one such as can be easily implemented and used by another existing protocol. The following specification is one example.

For detection of a device, for example, an SSDP (simple service discovery protocol), which is a protocol for detecting a UPnP (universal plug and play) device, may be used.

The SSDP is used in the UPnP for a search using a UPnP device on a network or the name of service (URI) as a key. This function is used, and the name of device cooperation service (URI) is specified, thereby detecting a device to be cooperated with. For a mobile terminal to detect a cooperation available receiver, an SSDP supporting function is added to the terminal cooperation manager, and a response regarding an access destination (including an IP address and a port number) is sent in a case where a search message for the SSDP is received.

[3.8.4 Protocol For Cooperation Between Terminals]

In this section, a protocol between the terminal cooperation manager of the receiver and a terminal to be cooperated with is defined. A protocol to be used in the scope of cooperation in a home network and a protocol to be used in the scope of cooperation via the Internet are described here. A preferable specification is one such as can be easily implemented and used by a generally-used existing protocol. The following is one example.

[3.8.4.1 Protocol for Cooperation in Home Network]

(1) WebSocket

WebSocket is one of HTML related specifications and is a mechanism of connecting an HTML5 application (client) and a server by WebSocket, thereby enabling transmission and reception of bilateral messages. Different from the stateless HTML connection, WebSocket can maintain a connection, thereby implementing push delivery from the sides of the application and the server that communicate messages in real time.

FIG. 13 is a diagram illustrating an example where a receiver and a mobile terminal are controlled to cooperate with each other by WebSocket communication.

As shown in FIG. 13, an HTML5 application that runs on the mobile terminal performs WebSocket connection with the receiver, thereby generating a bilateral communication path, and therefore enabling cooperation by transmitting and receiving various commands and information using that communication path. This is implemented by adding a bridge function for WebSocket to the mobile cooperation manager so that the bridge for WebSocket is provided with operation as a WebSocket server and operation of controlling a receiver function in accordance with a function (API) called via the WebSocket.

Specific notification of an event from the API or the server side (receiver) is implemented by defining a message format in WebSocket. As the message format, a JSON format and an XML format are defined. Hereinafter, an example of a message in a case where the mobile terminal controls a change in channel of the receiver is shown as an example.

«Example of JSON Format»

{"ActionName":"RemoteControl","Arguments": {"Function":"SelectAir","URP": "arib://onid.tsid.svid/"}}

```
«Example of XML Format »
<?xml version="1.0" encoding="UTF-8" ?><Action>
    <ActionName>RemoteControl</ActionName>
    <Arguments>
        <Function>SelectAir</Function>
        <URI>arib://onid.tsid.svid/</URI>
    </Arguments>
</Action>
```

(2) HTTP

The mobile terminal manager of the receiver is provided with the bridge function for an HTTP server, thereby making it possible to call various terminal APIs based on versatile HTTP protocols. Since the HTTP is a pull-type protocol, however, in order to perform push notification from the receiver (server side), pseudo push function, such as Long polling, must be supported.

(3) UPnP

The UPnP (universal plug and play) is a protocol for connecting various devices, such as home personal computers and AV devices, via a network, so that the devices provide functions to each other.

Many devices, such as devices supporting an UPnP-based DLNA, have already been widespread.

Each of the receiver and the mobile terminal supports the UPnP, thereby implementing functions of cooperation between devices in compliance with the UPnP specification.

Regarding the UPnP, there are a server that provides services (functions) and clients that use the services. Both the receiver and the mobile terminal to be cooperated with can become a UPNP client. However, in a case where the receiver provides various information related to a broadcasting program to another terminal, it is implemented by adding the bridge function for the UPnP to the receiver so that the bridge function for the UPnP operates as a UPnP server.

Specific notification of an event from the API and the server side (receiver) is defined in accordance with the UPnP format.

[3.8.4.2 Protocol for Cooperation via the Internet]

Cooperation between devices is performed using an XMPP, a WebSocket, and the like, which are protocols for exchanging messages on the Internet in real time.

[3.8.5 Cooperation between Application and Terminal]

A case where an application running on the mobile terminal and an application running on the receiver communicate with each other, thereby performing cooperation, can be assumed.

The receiver is added with the bridge function for WebSocket, thereby making it possible to configure a versatile socket communication path using the WebSocket in a case where both an application format and an application format running on the mobile terminal to be cooperated with are HTML5-based formats.

FIG. 14 is a diagram illustrating an example where an application for the receiver and an application for the mobile terminal are controlled to cooperate with each other by WebSocket communication.

In order for the HTML5-based applications to cooperate with each other, a bridge for WebSocket of the terminal cooperation manager is provided with two WebSocket server functions, as shown in FIG. 14. A WebSocket server A (the receiver-side server unit 492 shown in FIG. 1) is operated as an access destination of the application. Additionally, a WebSocket server B (the server-side server unit 491 shown in FIG. 1) is operated as an access destination of the HTML5 application on the mobile terminal. Then, data received by one WebSocket server is transmitted to the access destination of the other WebSocket server, thereby enabling bilateral WebSocket communication between the receiver and the terminal to be communicated with. For example, the application accesses an existing local WebSocket server using an HTML5 WebSocket API (e.g., ws://localhost:8880/hybridcast_app/). The HTML5 application that runs on the mobile terminal specifies a WebSocket server on the receiver that is accessible using the mechanism of detecting devices (e.g., ws://192.168.11.5:8880/external_app/), and thereby access thereto. A communication path with use of the WebSocket is generated between the both sides, and transmission and reception of commands and data is performed on the communication path, thereby enabling cooperation.

[4. Security]

[4.1 Management of Cooperative Communication/Broadcasting Application]

To disseminate and activate cooperative communication/broadcasting services while meeting the requirements of the broadcasting organization, a framework that enables not only a broadcasting organization and its related parties, but also a great number of service organizations and individuals to join is necessary. In the present cooperative communication/broadcasting system, in view of security, applications are grouped into "A applications" and "general applications", and both applications are executable by the receiver.

FIG. 15 illustrates an application management model in the cooperative communication/broadcasting system. "A applications" are previously registered to a registration manager (third party authority), thereby ensuring the operation expected in the specification of the cooperative communication/broadcasting system. "A application" is added with an ID and a signature at the time of registration. In the receiver, the signature is verified by a secure manager defined in section 2.2. Thereafter, access to all APIs is enabled, and thus program cooperative services using broadcasting resources become available. Additionally, a detailed presentation control meeting the requirements of the broadcasting organization is enabled by the AIT sent from the broadcasting organization.

On the other hand, "general applications" are not necessary to be registered previously. However, operation expected in the specification of the cooperative communication/broadcasting system is not ensured, and applications cannot use broadcast-related APIs. A "general application" is not added with an ID and a signature. For this reason, it is difficult to specify an individual application, but it is possible to execute the application after adding a presentation restriction based on the requirements of the broadcasting organization.

[4.2 Functional Model Of Secure Manager]

FIG. 16 illustrates a functional model of a secure manager. The secure manager is a function of managing the overall security in the receiver.

[4.2.1 Application Monitoring And Controlling Function]

As explained above, according to embodiments of a delivery of application files, applications that run on the receiver are grouped into two types, which are "A applications" and "general applications". An "A application" and a "general application" are distinguished from each other based on the presence or absence of an ID and a signature as shown in section 4.1. Operations of those applications at the time of execution of the applications differ. For example, the access regions for the API in the receiver and regions of control by the broadcasting organization differ. An application monitoring and controlling function has an object to identify the difference in type between the A application and the general application, and reliably control the operation at the time of execution of the application.

(1) Verification of Application: with respect to all applications to be executed, the receiver determines whether each application is an A application or a general application, and if the application is an A application, identifies an ID of the application. The receiver confirms and verifies the presence or absence of a signature added to an application file (application program), thereby distinguishing between an A application and a general application. If the application is an A application, the receiver further acquires an application ID described in the signature. Identification of an application is performed at the time of a receipt of the application or at the time of activation thereof.
(2) Window presentation control: will be explained later in section 4.3.
(3) Resource access control: the receiver controls an access of the running application to the API, such as broadcasting resources. When an application attempts to access an API, if that application is a general application, an access thereto is limited based on the type of the API.
Additionally, when an application accesses an API for displaying a window on a display, a window presentation control is performed based on the type of A application or general application, and the presentation policy of the broadcasting organization being selected. The details will be explained later in section 4.3.
(4) Revocation: has a function of revoking an application.

[4.2.2 Protection of Receiver]

The receiver is provided with a function of protecting viewer information and a protection function such as antivirus.

[4.3 Window Presentation Control By Application]

[4.3.1 Summary of Window Presentation Control]

In the cooperative communication/broadcasting services, a broadcasting program and related communication applications are simultaneously presented, thereby expanding convenience of broadcasting services. On the other hand, it is expected that with use of communication services, a broadcasting program and a communication application are mixed and presented on the display of the receiver. In some presentation method, a window for the communication application is overlay-displayed on the broadcasting program, thereby making it likely to cause losses of uniqueness and productivity of the broadcasting program, and further prevent emergent information, such as emergency earthquake report, from being accurately delivered to viewers. In the cooperative communication/broadcasting services, a window presentation control is performed to control presentation of applications based on the intent of the broadcasting organization.

FIG. 17 is a diagram illustrating concept of a window presentation control method. The window presentation control method is a method intended to reflect on the receiver, the presentation policy of the broadcasting organization regarding how to present communication applications on the display with respect to each broadcasting program, which is referred to as a content presentation control. The content presentation control implements a presentation control for each program according to the organization of the program, a presentation control with respect to an event that occurs during a program such as emergency earthquake report, and a presentation control for each application.

[4.3.2 Basic Operation of Window Presentation Control]

FIG. 18 is a diagram illustrating a basic operational model of the window presentation control. To reflect the presentation policy of the broadcasting organization on the receiver, the receiver manages, as a presentation rule, methods of presenting communication content with respect to broadcasting programs, which are previously considered by the broadcasting organization. Specifically, as a method of presenting communication content, a level sorting is made in accordance with the differences in the overlay-display order and the arrangement order. Then, a table storing presentation levels (policy levels) and presentation methods are stored in the receiver as a presentation rule. The broadcasting organization multiplexes the presentation level to be specified with a broadcasting wave and transmits the multiplexed wave. Then, the receiver checks the presentation level against the presentation rule, thereby determining a presentation method. Thus, it is possible to implement a presentation control based on the presentation policy of the broadcasting organization.

[4.3.3 Method Of Transmitting And Multiplexing Control Information]

Regarding a format of control information that carries the presentation policy of the broadcasting organization, three specific examples of methods using program arrangement information used for digital broadcasting are shown here. As a window presentation control for each program, there are a method using the existing EIT (event information table) and a method using the expanded EIT (EIT+). Additionally, as a window presentation control for each service (channel), there is a method using the expanded AIT for broadcasting signals. Further, as a window presentation control for each event that occurs in real time during a program, there is a method using information sent from a broadcasting station, which is other than the program arrangement information. Hereinafter, the details of the four methods are described.

(1) Program genre of EIT (EIT): the policy level is determined based on the program genre described in the content descriptor of the existing EIT. For this reason, the receiver manages a table indicating the relationship between the program genre and the policy level. The relationship with the ARIB standard is described in the ARIB STD-B10 Part 2, 6.2.4, Appendix H.

Table 4 is a table showing a specific example of the relationship between the program policy and the policy level. The program genre (program_genre) has a 2-level structure including "content_nibble_levell" (0×0 to 0×F) indicating a major classification and "content_nibble_level2" (0×0 to 0×F) indicating an intermediate classification. Up to the intermediate classification are entries of the table managed by the receiver, and values of the policy levels are defined.

[Table 4]

| program_genre (content_nibble_level1-content_nibble_level2) | policy_level (1 to 4) |
|---|---|
| 0×0-0×F | 3 |
| 0×0-0×1 | 1 |
| ... | |
| 0×0-0×F | 1 |
| ... | |
| 0×F-0×F | 1 |

(2) Addition of new descriptor to EIT (EIT+): a new descriptor is added to event information section of the EIT, and policy information is described. The receiver interprets the descriptor and performs a desired process, thereby implementing a control in accordance with the policy level for each program. The relationship with the ARIB standard is described in the ARIB TR-B 14 (Fascicle 2), Section 3, 31.3, and the ARIB STD-B10, Part 2, 5.2.7.

Table 5 is a table showing a structure of an event security descriptor. In the case of EIT+, an event security descriptor shown in table 5 is newly defined. Then, the event security descriptor is stored in a descriptor region of the EIT and is transmitted. The event security descriptor includes the policy level (policy_level), an application ID (application_identifier), a control code (application_control_code), a priority (application_priority), a protocol identification (protocol_id), and a program related flag (associated_application_flag).

[Table 5]

| Data Structure | Number of Bits | Bit String Description |
|---|---|---|
| event_security_descriptor(){ | | |
| descriptor_tag | 8 | uimsbf |
| descriptor_length | 8 | uimsbf |
| policy_level | 8 | uimsbf |
| for (i=0; i<n; i++){ | | |
| application_identifier() | | bslbf |
| application_control_code | 8 | uimsbf |
| application_priority | 8 | uimsbf |
| protocol_id | 16 | uimsbf |
| associated_application_flag | 1 | bslbf |
| reserved_future_use | 7 | bslbf |

(continued)

| Data Structure | Number of Bits | Bit String Description |
|---|---|---|
| }<br>} | | |

The policy_level indicates the policy level for each program. The policy level is a value in the range of 1 to 4.

The application_identifier() is an identifier for identifying an application. Table 6 shows a structure of the application_identifier().

[Table 6]

| Data Structure | Number of Bits | Bit String Description |
|---|---|---|
| application_identifier(){<br>organization_id<br>application_id<br>} | <br>32<br>16 | <br>bslbf<br>bslbf |

The organization_id indicates an organization that has generated an application, and is a value following 0x00000063. The application_id indicates a number that identifies an application. The application_id is uniquely added in the organization identification.

The application_control_code defines a control code that controls the state of an application. Table 7 shows the definitions of control codes.

[Table 7]

| Code | Identification Name | Meaning |
|---|---|---|
| 0×00 | reserved_future_use | |
| 0×01 | AUTOSTART | Auto-activation of application |
| 0×02 | PRESENT | Stand-by of application |
| 0×03 | DESTROY | Termination of application |
| 0×04 | KILL | Forcible termination of application |
| 0×05 | reserved_future_use | |
| 0×06 | REMOTE | Remote application |
| 0×07 | DISABLED | Non-use of application |
| 0×08 | KILL ALL | Forcible termination of all applications |
| 0×09···0×FF | Reserved_future_use | |

The application_priority indicates the policy level for each application. The policy level for each application indicates relative priorities among the applications notified in the service. The priority is a value in the range of 1 to 4.

The protocol_id indicates protocol for transmitting an application file. Table 8 shows the definition of the protocol_id.

[Table 8]

| Value | Meaning |
|---|---|
| 0×0000 | reserved_future_use |
| 0×0001 | Object carousel transmission protocol |
| 0×0002 | Reserved |
| 0×0003 | HTTP transmission protocol |

(continued)

| Value | Meaning |
|---|---|
| 0×0004 | Data carousel transmission protocol |
| 0×0005···0×FFFF | reserved_future_use |

The associated_application_flag indicates whether or not an application is an application cooperative with a program. Table 9 shows the definition of the protocol_id.

[Table 9]

| Value | Meaning |
|---|---|
| 0 | Include no contents cooperative with program |
| 1 | Include contents cooperative with program |

(3) Table definition of AIT and addition of new descriptor (AIT+): AIT is expanded and policy information is transmitted. The receiver interprets that table and performs a desired process, thereby implementing a control in accordance with the policy level with respect to an event that occasionally occurs. The relationship with the ARIB standard is described in the ARIB STD-B23 Part 2, 10.16.

Table 10 shows a data structure of the AIT. The ATT shown in table 10 is the expansion of the data structure of the AIT defined in the ARIB STD-B23. The policy level, an application ID, and a control code are described in the AIT. Here, the AIT is transmitted by section format, and is continuously transmitted while an event continues. An application ID is described in application_identifier(). A control code is described in application_control_code. Here, these details are similar to those described in "(2) Expansion of EIT".

Further, to describe the policy level, a security policy descriptor is newly defined, is stored in a common descriptor loop of the AIT, and then is transmitted.

[Table 10]

| Data Structure | Number of Bits | Bit String Description |
|---|---|---|
| application_information_section(){ | | |
| table_id | 8 | uimsbf |
| section_syntax_indicator | 1 | bslbf |
| reserved_future_use | 1 | bslbf |
| reserved | 2 | bslbf |
| section_length | 12 | uimsbf |
| application_type | 16 | uimsbf |
| reserved | 2 | bslbf |
| version_number | 5 | uimsbf |
| current_next_indicator | 1 | bslbf |
| section_number | 8 | uimsbf |
| last_section_number | 8 | uimsbf |
| reserved_future_use | 4 | bslbf |
| common_descriptors_length | 12 | uimsbf |
| for (i=0, i<N; i++) { | | |
| descriptor() | | |
| } | | |
| reserved_future_use | 4 | bslbf |
| application_loop_length | 12 | uimsbf |
| for (i=0, i<N; i++) { | | |
| application_identifier() | | |
| application_control_code | 8 | uimsbf |
| reserved_future_use | 4 | bslbf |

(continued)

| Data Structure | Number of Bits | Bit String Description |
|---|---|---|
| application_descriptors_loop_length | 12 | uimsbf |
| for (j=0; j<M; ; j++) { | | |
| descriptor() | | |
| } | | |
| } | | |
| CRC_32 | 32 | rpchof |
| } | | |

Table 11 shows a structure of a security policy descriptor to be newly defined.

[Table 11]

| Data Structure | Number of Bits | Bit String Description |
|---|---|---|
| security_policy_descriptor(){ | | |
| descriptor_tag | 8 | uimsbf |
| descriptor_length | 8 | uimsbf |
| policy_level | 3 | bslbf |
| reserved_future_use | 5 | bslbf |
| } | | |

(4) Emergency alert broadcast and emergency earthquake report (EWS/EEW): the policy level is determined using emergency information sent from the broadcasting station. It is assumed that the receiver previously stores the relationship between emergency information and the policy level. The receiver monitors an activation flag for TMCC emergency alert broadcasting in the case of emergency alert broadcasting, and monitors a character super management packet in the case of emergency earthquake report, thereby detecting the occurrence and termination of the emergency information, thus enabling determination of the policy level at that time. The relationship with the ARIB standard is described in the ARIB STD-B31, 3.15, and the ARIB STD-B24 Volume 1, Part 3, Chapter 9.

Here, each of the above formats (1) to (4) can be simultaneously sent in parallel. Accordingly, it is necessary to previously determine which format used for transmission is prioritized to determine the policy level. The priority order is as follows.

EWS/EEW>AIT+>EIT+>EIT

Based on that priority order, the receiver determines the policy level, thereby enabling a window presentation control that prioritizes an emergent event based on the intent of the broadcasting organization.

[4.3.4 Example of Window Presentation Control]

FIG. 19 illustrates an example of a window presentation control in accordance with the policy level.

In a case where the policy level of a program is "1", both an application window for an A application and an application window for a general application are allowed to be overlay-displayed on a broadcast window.

In a case where the policy level of the program is "2", only the application window for the A application is allowed to be overlay-displayed on the broadcast window. The application window for the general application is prohibited from being overlay-displayed on the broadcast window, and is allowed only to be displayed outside the broadcast window.

In a case where the policy level of the program is "3", both the application window for the A application and the application window for the general application are allowed to be displayed. However, all the application windows are prohibited from being overlay-displayed on the broadcast window, and is allowed only to be displayed outside the broadcast window.

In a case where the policy level of the program is "4", only a full-display of the broadcast window is allowed.

FIG. 20 illustrates an example of a presentation control at the time of a receipt of emergency earthquake report.

In a case where the policy level of program A is "1", in the broadcasting time zone of program A, both an application window for an A application and an application window for a general application are overlay-displayed on a broadcast window. Even in the broadcasting time zone of program A, however, the receiver determines the policy level in the time zone where an emergency earthquake report is occurring to be the policy level "4" of the emergency earthquake report. For this reason, even in the broadcasting time zone of program A, in the time zone where an emergency earthquake report is occurring, the receiver prohibits both the application window for the A application and the application window for the general application from being overlay-displayed on the broadcast window.

[Explanation of Embodiments of Present Invention To Which Aforementioned Cooperative Communication/Broadcasting System Is Applied]

Hereinafter, an embodiment of the present invention shown in FIG. 1 is explained.

FIG. 21 is a diagram illustrating the entire configuration of a cooperative communication/broadcasting system according to one embodiment of the present invention. As shown in FIG. 21, the cooperative communication/broadcasting system of the present embodiment includes: a broadcasting organization device 1 owned by a broadcasting station; a service organization server group 2 owned by a service organization; a repository server 3 owned by a system manager; and a receiver 4 owned by a viewer. In FIG. 21, only one receiver 4 is shown, but multiple receivers 4 are provided in actual cases.

The broadcasting organization device 1 includes a broadcasting sending device 11 and a broadcasting station server group 12.

The broadcasting sending device 11 corresponds to the broadcasting station facility shown in FIG. 3. The broadcasting sending device 11 is a broadcasting facility for digital broadcasting, which includes a program organization facility, a program sending facility, a transmission facility, and the like.

The broadcasting sending device 11 includes a broadcast related data management unit 111, a signal setting unit 112, and a broadcast sending unit 113.

The broadcast related data management unit 111 manages program security policy data of each program, application security policy data of an A application, other policy data, and the like.

The program security policy data includes policy level data indicating the policy level of a program, an application ID of an application bounded to a program, a control code for the application bound to the program, and the like.

The application security policy data includes information specifying the program to which the application is bound, protocol identification of the application, location information, and the like. The location information indicates the stored position (repository) of the application, such as a URL of the receiver application server 21 or the repository server 3, which can download an application. The protocol identification indicates whether the application is transmitted by broadcasting or communication.

Here, only an A application is bound to a program.

The policy data includes presentation rule data and a policy level table.

The presentation rule data is data that describes a presentation method for each policy level. The presentation method includes a window displaying method and a sound outputting method. The window displaying method includes, for example, a method of displaying only a broadcast window (an image of a program), a method of overlay-displaying application windows for an A application and a general application (images of applications) on the broadcast window or displaying the application windows outside the broadcast window, a method of overlay-displaying only the application window for the A application on the broadcast window and displaying the application window for the general application outside the broadcast window, and the like. The sound outputting method includes, for example, a method of outputting only the sound of a broadcast program, a method of outputting the sound of the broadcast program independently or mixed with the sound of an A application or a general application, and the like.

The policy level table is data that describes the policy level associated with the genre of a program, and the policy level of each event. An event means, for example, the contents of a broadcast that does not necessarily occur in cooperation with a program, such as an emergency alert signal or an emergency earthquake report.

The signal setting unit 112 sets various data to a broadcasting signal to be transmitted by a broadcast sending unit 113. The signal setting unit 112 sets an AIT and policy level data of a program to a broadcasting signal based on the program security policy data and the application security policy data which are managed by the broadcast related data management unit 111. The signal setting unit 112 multiplexes the AIT of the application bound to the program with the broadcasting signal (broadcasting TS) as an independent ES, or sets the AIT to a data carousel. Alternatively, the signal setting unit 112 sets to an EIT, information similar to the AIT of the application bound to the program. Additionally, the signal setting unit 112 sets the policy data of the program to the EIT (table 5) or the AIT (table 11). Here, in a case where the policy level associated with the genre of the program is used, the policy level data need not be set to the broadcasting signal. Further, the signal setting unit 112 sets the policy level data managed by the broadcast related data management unit 111 to the broadcasting signal in section format, to an engineering service, or to a data carousel.

The broadcast sending unit 113 transmits a broadcasting signal of a digital broadcast. The broadcasting signal includes information set by the signal setting unit 112.

The broadcasting station server group 12 corresponds to the broadcasting station server group shown in FIG. 3. The broadcasting station server group 12 includes a content management server 13, a content delivery server 16, a broadcasting station service server 17, and a notification server 18.

The content management server 13 includes a program management server 14 and a metadata management server 15. The program management server 14 manages a program already broadcast or a program to be broadcast. The metadata management server 15 manages metadata related to each program. Metadata includes, for example, data concerning a program title, a program ID, a program summary, casts, the broadcast date, a script, a caption, and an explanation.

The content delivery server 16 is connected to the receiver 4 via a communication network 9, such as the Internet. The content delivery server 16 delivers content data of content requested by the receiver 4.

The broadcasting station service server 17 transmits to the service organization server group 2, content data of a service provided by a broadcasting station. The service provided by the broadcasting station includes, for example, a social networking service, a blog service, and the like.

The notification server 18 is connected to the receiver 4 via the communication network 9. Based on the program security policy data and the application security policy data which are acquired from the broadcast related data management unit 111 of the broadcast sending device 11, the notification server 18 delivers to the receiver 4, the AIT of the application bound to the program (FIG. 6) and the policy data of the program. Additionally, the notification server 18 delivers to the receiver 4, the policy data acquired from the broadcast related data management unit 111 of the broadcast sending device 11. Here, in some cases, part or all of those information are not delivered from the notification server 18, instead, are transmitted by the broadcast sending unit 113 of the broadcast sending device 11 only by means of a broadcasting signal.

The service organization server group 2 corresponds to the service organization server group shown in FIG. 3. The service organization server group 2 includes a receiver application server 21, a service server 22, a content delivery server 23, and a notification server 24. The receiver application server 21, the service server 22, the content delivery server 23, and the notification server 24 are connected to the receiver 4 via the communication network 9.

The receiver application server 21 manages each application and delivers an application file to the receiver 4.

The service server 22 includes, for example, a multilingual caption server, a speech rate conversion sound server, a social TV server, a recommendation server, a bookmark server, and the like. The service server 22 delivers content data of the service requested by the receiver 4.

The content delivery server 23 includes, for example, a VOD delivery server, a caption delivery server, or a multi-view delivery server. The content delivery server 23 delivers content data of the content requested by the receiver 4.

The notification server 24 transmits the AIT of applications (FIG. 6) to the receiver 4. Here, in the case of an A application, the notification server 24 may transmit the AIT (FIG. 6) based on the program security policy data and the application security policy data which are acquired from the broadcast related data management unit 111 of the broadcast sending device 11.

The repository server 3 corresponds to the repository shown in FIG. 3, and is connected to the receiver 4 via the communication network 9. The repository server 3 electrically signs an application file (application program) generated by the service organization, and transmits to the receiver 4, data required for authentication of the electric signature of the application file (application program). Additionally, the repository server 3 transmits to the receiver 4, data indicating a list of A applications and location information of those A applications. Here, the repository server 3 may transmit to the receiver 4, the application file of the electrically signed A application, and the receiver application server 21 may receive from the repository server 3, and transmit to the receiver 4, the application file of the electrically signed A application. Additionally, the repository server 3 may transmit to the receiver 4, the AIT of the A applications bound to the program (FIG. 6), based on the program security policy data and the application security policy data which are received from the broadcast related data management unit 111 of the broadcast sending device 11.

The receiver 4 corresponds to the receiver shown in FIG. 3 and is a device, such as a television receiver, a set-top box, a personal computer, or a mobile terminal.

FIG. 22 is a functional block diagram illustrating an internal configuration of the receiver 4. As shown in FIG. 22, the receiver 4 includes: a broadcast reception unit 401; a demultiplexing unit 402; a timer 403; a first synchronization buffer 404-1; a second synchronization buffer 404-2; a first decoder 405-1; a second decoder 405-2; a data broadcast execution unit 406; a video control unit 407; a video display unit 408; a sound control unit 409; a sound output unit 410; a communication input/output unit 411; an application execution control unit 412; a presentation control unit 413; an operation input unit 414; a tuning unit 415; a local information storage unit 416; and an external I/F unit 417.

The broadcast reception unit 401 is a tuner that receives a broadcasting signal. The broadcasting signal is any one or both of a wireless broadcasting signal and a wired broadcasting signal. The wireless broadcasting signal is a signal acquired by receiving, using a reception antenna, a broadcasting wave (ground wave) transmitted from a transmission antenna on the broadcasting station side, or a satellite wave relayed by a satellite. The wired broadcasting signal is a signal transmitted from the broadcasting station side via an optical cable or a coaxial cable. The broadcasting reception unit 401 receives and demodulates the broadcasting signal and outputs a broadcasting stream (TS).

The demultiplexing unit 402 is a demutliplexer and demultiplexes the broadcasting stream supplied from the broadcasting reception unit 401 into various data, such as a PCR (program clock reference), image data, sound data, caption data, a data broadcast, PSI (program specific information)/SI (service information), and an AIT transmitted by an independent elementary stream (ES). Here, there are cases where the AIT is included in a data broadcast, and where the contents similar to the AIT are set to an EIT constituting the SI. Additionally, there is a case where the demultiplexing unit 402 demultiplexes an application file from a broadcasting signal and outputs the application file.

The communication input/output unit 411 inputs/outputs data by communication via the communication network 9. The communication input/output unit 411 outputs to the application execution control unit 412, the AIT and the application file which are transmitted via the communication network 9. Additionally, the communication input/output unit 411 outputs to the presentation control unit 413, the policy level data and the policy data of the program transmitted via the communication network 9. Further, in accordance with an instruction from the application executed by the application execution control unit 412, the communication input/output unit 411 receives via the communication network 9, content data delivered from the content delivery server 16 or the content delivery server 23, and content data delivered from the service server 22, and outputs the received data to the second synchronization buffer 404-2.

The operation input unit 414 is an interface that receives an operation of a viewer. The operation input unit 414 includes: for example, a reception device that receives information input by a viewer from a remote controller, a cellular phone, a tablet terminal, or the like; a keyboard; a mouse; and the like. The operation input unit 414 outputs to the tuning unit 415, an instruction to select a medium (terrestrial/BS) or a channel input by the viewer. Additionally, the operation input unit 414 outputs to the application execution control unit 412, an instruction to initiate or terminate a cooperative communication/broadcasting service, and an instruction with respect to an application.

The tuning unit 415 controls the medium or the channel to be received by the broadcasting reception unit 401, in accordance with the operation input to the operation input unit 414.

The data broadcast execution unit 406 executes a data broadcast application transmitted by means of a digital broadcasting signal, and outputs image (graphic) data of a data broadcast to the video control unit 407. The data broadcast execution unit 406 includes an API for activating an application of a cooperative communication/broadcasting service. In a case where the data broadcast execution unit 406 executes the data broadcast application, and the API for activating the application of the cooperative communication/broadcasting service is called, the data broadcast execution unit 406 instructs the application execution control unit 412 to activate the application. Additionally, the data broadcast execution unit 406 acquires from the data broadcast, an AIT or an application file transmitted by data carousel, and outputs the acquired items to the application execution control unit 412. Further, the data broadcast execution unit 406 acquires from the data broadcast, policy data transmitted by data carousel, and outputs the acquired data to the presentation control unit 413.

The application execution control unit 412 executes the application of the cooperative communication/broadcasting service. In accordance with the application being executed, the application execution control unit 412 instructs the second decoder 405-2 to decode the content data received from the content delivery server 16, the content delivery server 23, or the service server 22. The content data includes one or both of image data and sound data. The image data includes, for example, a moving image, a still image, text data, and the like. Additionally, in accordance with the application being executed, the application execution control unit 412 outputs graphic (image) data and video control instructions to the video control unit 407, and outputs sound data and sound control instructions to the sound control unit 409.

The timer 403 outputs a value of a timer counter. The timer 403 adjusts a frequency of an oscillator using the value of the timer counter indicated by a PCR, and thus synchronizes the time with that on the broadcast transmission side.

The first synchronization buffer 404-1 stores the image data, the sound data, and the caption data, which are output from the demultiplexing unit 402. A PES (packetized elementary stream) generated from the elementary stream (ES) including the image data, the sound data, and the caption data is segmented into transport packets constituting a broadcasting stream (TS) and is set thereto. A header of the PES includes a PTS (presentation time stamp). In accordance with an instruction from the first decoder 405-1, the first synchronization buffer 404-1 outputs, in units of PES packets, the image data, the sound data, and the caption data which are output from the demultiplexing unit 402.

The second synchronization buffer 404-2 stores content data of the content or service received by the communication input/output unit 411. Alternatively, in accordance with an instruction of the viewer input through the operation input unit 414, the second synchronization buffer 404-2 stores the image data, the sound data, and the caption data which are output from the demultiplexing unit 402. In accordance with an instruction from the second decoder 405-2, the second synchronization buffer 402-2 outputs, in units of PES packets, the stored content data, or the image data, the sound data, and the caption data of the program.

The first decoder 405-1 specifies a PES packet stored in the first synchronization buffer 404-1 set with the PTS associated with the time output from the timer 403. Then, the first decoder 405-1 reads from the specified PES packet, the image data, the sound data, and the caption data, which are encoded. Then, the first decoder 405-1 decodes and outputs the read data.

The second synchronization buffer 405-2 specifies the content data or the PES packet of the program, which is stored in the second synchronization buffer 404-2 set with the PTS associated with the time output from the timer 403. Then, the second decoder 405-2 reads from the specified PES packet, the image data, the sound data, and the caption data, which are encoded. Then, the second decoder 405-2 decodes and outputs the read data.

The presentation control unit 413 determines a presentation method (a window displaying method and a sound outputting method) in accordance with the policy level of the selected program or the policy level of the occurring event, and the presentation rule data. The presentation control unit 413 instructs the video control unit 407 to display, by the determined window displaying method, a broadcast window, an application window for an A application, and an application window for a general application. Further, the presentation control unit 413 instructs the sound control unit 409 to output, by the determined sound outputting method, the sound based on the sound data of the broadcast, the sound based on the sound data of the A application, and the sound based on the sound data of the general application.

The video control unit 407 controls the image display unit 408 to display, in accordance with the window displaying method instructed from the presentation control unit 413 or the application execution control unit 412, the broadcast window based on image data and the caption data of the program output from the first decoder 405-1, and the application windows for the A application and the general application based on the image data of the content data output from the second decoder 405-2. Additionally, in a case where graphic (image) data is output from the application execution control unit 412 by execution of an application, the video control unit 407 controls the image display unit 408 to simultaneously display a window based on that image data in accordance with the window displaying method instructed from the presentation control unit 413 or the application execution control unit 412. Here, there is a case where image data and caption data of another program are output from the second decoder 405-2.

The image display unit 408 is a general display and displays windows for broadcasts and applications. For example, the image display unit 408 displays, on the broadcast window for a program, a moving image, a still image, and text of the content data received from the communication network 9, an application window such as a graphic or the like output from the application execution control unit 412 by execution of an application, or an image with which a broadcast window of another program is combined.

The sound control unit 409 controls the sound output unit 410 to output, in accordance with the sound outputting method instructed from the presentation control unit 413 or the application execution control unit 412, the sound based on the sound data of the program output from the first decoder 405-1, the sound of the A application or the general application based on the sound data of the content data output from the second decoder 405-2, and the sound data output from the application execution control unit 412 by execution of the application. Here, there is a case where sound data of another program is output from the second decoder 405-2. The sound output unit 410 is a general speaker and outputs the sound of broadcasts and applications.

The local information storing unit 416 stores various data, such as user information.

The external interface unit (hereinafter described as "external I/F unit") 417 transmits/receives data to/from a device 8 connected to a home network, such as a LAN (local area network). The device 8 is a terminal that cooperates with the receiver 4, such as a personal computer, a cellular phone, a tablet, a smart phone, or a PDA.

Here, in a case where the receiver 4 is a set-top box, or the like, the image display unit 408 and the sound output unit 410 are assumed to be external devices to be connected to the receiver 4.

FIG. 23 is a block diagram illustrating a detailed configuration of the application execution control unit 412. As shown in FIG. 23, the application execution control unit 412 includes: an application storage unit 431; an application authentication unit 432; an application management unit 433; an application control unit 434; an application execution unit 435; a resource access control unit 438; and a resource control unit 439.

The application storage unit 431 stores the application file that the communication input/output unit 411 receives via the communication network 9, or the application file that the data broadcast execution unit 406 acquires from the data broadcast, or the application file that the demultiplexing unit 402 demultiplexes from the broadcasting signal. The application file may be previously stored in the application storage unit 431 at the time of shipping or the like. The application storage unit 431 includes a supplemental storage unit, such as a main storage device and a disk. For example, an application file is stored in a disk and read by a main storage device at the time of execution. In this case, an application file of the application to be executed on-the-fly is not stored in a disk, but is stored only in the main storage device, and is deleted from the main storage device when execution ends.

The application authentication unit 432 receives from the repository server 3, data required for authentication of an electric signature. Then, the application authentication unit 432 verifies the electric signature added to the application file (application program) using the received data. For example, the application authentication unit 432 uses the public key received from the repository server 3, and thus decodes the electrically-signed application file. In a case where a predetermined data string is acquired as a result of the decoding, the application authentication unit 432 determines that the verification of the electric signature succeeds. In a case where the verification of the electric signature succeeds, the application authentication unit 432 determines the application to be an A application. In a case where the verification of the electric signature fails or in a case where no electric signature is added, the application authentication unit 432 determines the application to be a general application.

The application management unit 433 manages an activated or terminated state of the application executed by the application execution unit 435, and an output state of the activated application. The output state is information indicating whether or not an image or sound is being output from the running application. The application management unit 433 receives an inquiry from the presentation control unit 413, and returns a response indicating whether the activated application is an A application or a general application.

The application control unit 434 controls the application execution unit 435 to activate or terminate an application, in accordance with a control code with respect to the application bound to a program, or an instruction with respect to the application which is input by the operation input unit 414. Additionally, the application control unit 434 instructs the application execution unit 435 to activate the application that the data broadcast execution unit 406 instructs to activate. In a case where a channel is changed in accordance with an input from the operation input unit 414, the application control unit 434 instructs the application execution unit 435 to terminate the application bound to the program on the pre-change channel and activate the application bound to the program on the post-change channel. Here, the application control unit 434 acquires the application bound to the program and a control code with respect to the bound application from the AIT included in the independent ES of the broadcasting signal or the data broadcast, the information similar to the AIT which is acquired from the EIT of the broadcasting signal, or the AIT received from the notification sever 18 or the notification server 24 via the communication input/output unit 411. Additionally, the application control unit 434 transmits a download request for an application file to a transmission destination indicated by the location information set to the AIT. The repository server 3 receiving the download request from the receiver 4, or the receiver application server 21 delivers the application file to the receiver 4.

The application execution unit 435 includes a receiver API unit 436 and a terminal cooperation API unit 437. In accordance with an instruction from the application control unit 434, the application execution unit 435 reads an application program of the application, the activation of which is instructed, and executes the read application program. By the application execution unit 435 executing the application program, the application runs on the receiver 4, and the application execution unit 435 requests content from the content delivery server 16 or the content delivery server 23 via the communication network 9, or requests service from the service server 22. Additionally, by the application program being executed, the application execution unit 435 outputs the graphic data or the video control instruction to the video control unit 407, or outputs sound data or a sound control instruction to the sound control unit 409.

The receiver API unit 436 executes a receiver API that is an API for utilizing each resource in the receiver 4 when the application execution unit 435 executes an application. By the receiver API unit 436 executing the receiver API, the resources in the receiver 4 become available from the application program executed by the application execution unit 435.

The terminal cooperation API unit 437 executes a terminal cooperation API that is an API for the device 8 on a home network accessible via the external I/F unit 417 or a device to be connected via the communication network 9 to utilize the functions of the receiver 4. By the terminal cooperation API unit 437 executing the terminal cooperation API, the resources in the receiver 4 becomes available from the device 8 to be connected via the home network or the device to be connected via the communication network 9.

The resource control unit 439 controls accesses by the receiver API unit 436 and the terminal cooperation API unit 437 to each functional unit that is a resource in the receiver 4.

The resource access control unit 438 controls whether or not to allow the receiver API unit 436 and the terminal cooperation API unit 437 to access each functional unit in the receiver 4. The resource access control unit 438 performs this control in accordance with whether the application that is the calling source of each API to be executed by the receiver API unit 436 and the terminal cooperation API unit 437 is an A application or a general application.

FIG. 24 is a block diagram illustrating a detailed configuration of the presentation control unit 413. As shown in FIG. 24, the presentation control unit 413 includes: a policy data management unit 451; a policy data storage unit 452; an event interpretation unit 453; a policy level comparing unit 454; an event control unit 455; a program policy storage unit 456; a policy mediation unit 457; and a policy level storage unit 458.

The policy data storage unit 452 stores policy data including the presentation rule data and the policy level table. The policy data management unit 451 manages the policy data stored in the policy data storage unit 452. The policy data management unit 451 outputs to the policy level comparing unit 454, the policy level table read from the policy data storage unit 452. Additionally, the policy data management unit 451 outputs to the policy mediation unit 457, the presentation rule data read from the policy data storage unit 452. Further, the policy data management unit 451 receives from the demultiplexing unit 402 or the data broadcast execution unit 406, the policy data transmitted by broadcasting. Moreover, the policy data management unit 451 receives from the communication input/output unit 411, the policy data transmitted by communication. The policy data management unit 451 updates the policy data stored in the policy data storage unit 452 with the policy data transmitted by broadcasting or communication.

The event interpretation unit 453 analyzes the broadcasting signal received by the broadcast reception unit 401, and the data broadcast and the caption data demultiplexed by the demultiplexing unit 402, thus detecting occurrence or termination of an event. Upon detecting (interpreting) occurrence or termination of an event, the event interpretation unit 453 outputs to the policy level comparing unit 454, the event number of the detected event and status data indicating the occurrence or termination.

The policy level comparing unit 454 refers to the policy level table and determines (compares) the policy level associated with a genre of each program indicated by the EIT and the policy level associated with the event specified by the event number. The policy level comparing unit 454 outputs to the event control unit 455, data indicating the broadcast start time and the broadcast end time of the program, and the policy level of that program (hereinafter described as the "program policy level"), which are acquired from the SI received from the demultiplxeing unit 402. Here, in a case where the program policy level is set to the EIT, the policy level comparing unit 454 outputs to the event control unit 455, the data indicating the broadcast start time and the broadcast end time, and the policy level of that program acquired from the EIT. Additionally, in a case where the policy level comparing unit 454 acquires the program policy level from the AIT, the policy level comparing unit 454 outputs the acquired program policy level to the policy mediation unit 457. Further, the policy level comparing unit 454 outputs to the policy mediation unit 457, the policy level determined in accordance with the event number (hereinafter described as the "trigger policy level").

The program policy storage unit 456 stores the program start time and the program end time, and the program policy level, in association with one another. The event control unit 455 associates the data indicating the program start time and the program end time, and the program policy level, which are received from the policy level comparing unit 454, and writes those information in the program policy storage unit 456. Based on those information stored in the program policy storage unit 456, the event control unit 455 manages the time at which a display control is to be performed. In a case where the event control unit 455 refers to the data indicating the program start time stored in the program policy storage unit 456, and detects that the time at which to communicate the execution time has come, the event control unit 455 outputs to the policy mediation unit 457, the execution time and the program policy level associated with that execution time.

The policy level storage unit 458 stores the execution time and the program policy level which are input to the policy mediation unit 457, and the trigger policy level and the status data. The policy mediation unit 457 determines the policy level based on the execution time and the program policy level which are received from the event control unit 455, and the trigger policy level received from the policy level comparing unit 454. For example, the trigger policy level may be determined as the policy level. The greater one of the program policy level and the trigger policy level may be determined as the policy level.

Here, in a case where the program policy level acquired by the AIT is received from the policy level comparing unit 454, the policy mediation unit 457 prioritizes the program policy level received from the policy level comparing unit 454 over the program policy level received from the event control unit 455. In other words, the policy mediation unit 457 determines the policy level based on the program policy level acquired by the AIT and the trigger policy level. The policy mediation unit 457 refers to the presentation rule data, and determines a window displaying method and a sound outputting method (presentation method) based on the determined policy level, information indicating whether or not the running application acquired from the application management unit 433 is an A application, and the output state. The policy mediation unit 457 outputs the determined window displaying method to the video control unit 407, and outputs the determined sound outputting method to the sound control unit 409.

Here, returning to FIG. 1, the operation reception unit 474, the activation request signal acquiring unit 471, the application information acquiring unit 472, the activation control unit 473, and the termination control unit 481 are explained.

Additionally, the connection control unit 501, the terminal application acquiring unit 502, and the terminal application execution unit 503 are also explained.

The operation reception unit 474 is an operation device that transmits an operation signal in accordance with an operation of a viewer (operator). The operation reception unit 474 includes, for example, a remote controller that can remote control the receiver 4 (hereinafter, "remocon"), an operation panel provided on a main body of the receiver 4, and the like. The remocon includes: a mobile terminal (a cellular phone, a smart phone, a tablet terminal, or the like) that is executing an application program for implementing the function of the remote controller; a computer device; a car navigation terminal; and the like.

The operation reception unit 474 includes an operation unit for operating the receiver 4. Here, in the present embodiment, the operation unit of the operation reception unit 474 includes operational buttons similar to those provided on conventional remote controllers for operating televisions, such as a power button, numerical buttons from "0" to "9" (channel specification buttons), a channel change button, a volume adjustment button, and a data broadcasting service button. The data broadcasting service button is an operational button that switches between a display and a non-display of a data broadcast each time that button is pressed while the receiver 4 receives the data broadcast. The data broadcasting service button is also referred to as a "data broadcast button", a "d button", or a "D button".

Additionally, the operational unit of the operation reception unit 474 is provided with a cooperative communication/broadcasting service button not shown in FIG. 1. The cooperative communication/broadcasting service button is an operational button for controlling the receiver 4 to initiate a receipt of a cooperative communication/broadcasting service. The cooperative communication/broadcasting service button is also referred to as a "cooperative communication/broadcasting button", an "h button", or an "H button". When the cooperative communication/broadcasting service button is pressed, the operation reception unit 474 transmits an activation request signal for requesting an initiation of a stream dependent service of cooperative communication/broadcasting services.

Here, the operation unit of the operation reception unit 474 may be one implemented by, for example, a touch panel and a graphical user interface (GUI).

The operation input unit 414 receives the operation signal transmitted by the operation reception unit 474.

The activation request signal acquiring unit 471 of the operation input unit 414 acquires the activation request signal from the operation signal received by the operation input unit 414 to generate an activation request command. Then, the activation request signal acquiring unit 474 provides the activation request command to the application control unit 434 of the application execution control unit 412.

Additionally, in a case where the operation input unit 414 receives an operation signal transmitted by an operation of a broadcasting service return button, such as an operation of the numerical buttons or the channel change button provided on the operation unit of the operation reception unit 474, the operation input unit 414 generates a termination request command, and provides the termination request command to the application control unit 434.

The application information acquiring unit 472 of the application control unit 434 acquires an AIT (application information table) periodically or irregularly provided from the demultiplexing unit 402. More specifically, the application information acquiring unit 472 periodically or irregularly acquires an ES (elementary stream) of the AIT retrieved from the TS (transport stream) associated with the desired channel selected from the desired medium selected by a viewer.

The AIT is information including information concerning an application, control information with respect to the application, and information that specifies the application. As shown in FIG. 6, the information concerning an application includes the application name (appName) and an application ID (orgId, appId). The control information with respect to the application includes the application control code (application_control_code) shown in the above table 7. The application control code is, for example, data for controlling the life cycle of the application. The information that specifies the application includes location information. The location information is information that specifies the storage place of an application file and specifies the application file. The location information for a stream dependent service is a URL (uniform resource locator) of the receiver application server 21 that stores the application file or the repository server 3 (application server).

The application information acquiring unit 472 retrieves from the acquired AIT, the application control code and the application ID. Then, the application information acquiring unit 472 provides the application control code and the application ID to the termination control unit 481.

Here, the application information acquiring unit 472 may retrieve from the acquired AIT, the application name, instead of or in addition to, the application ID, and provide the application name to the termination control unit 481.

Additionally, upon acquiring the activation request command provided from the activation request signal acquiring unit 471, the application information acquiring unit 472 retrieves the application name and the location information, in addition to the application control code, from the AIT acquired on or immediately after the timing of acquiring the activation request command. The application name, the application control code, and the location information, which are retrieved by the application information acquiring unit 472, are referred to as application information. The application information acquiring unit 472 provides the retrieved application information to the activation control unit 473.

Additionally, the application information acquiring unit 472 acquires PSI (program specific information)/SI (service information) periodically or irregularly provided from the demultiplexing unit 402. More specifically, the application information acquiring unit 472 periodically or irregularly acquires from the aforementioned desired media selected, the PSI/SI retrieved from the TS associated with the desired channel selected.

The PSI/SI is information including metadata related to a broadcasting program. As described above, the metadata is information related to a broadcasting program, such as a program ID, a program summary, casts, staffs, the broadcast date, a script, a caption, and an explanation.

In the present embodiment, the PST/SI includes application specific information that specifies an application to be executed by the device 8 (also referred to as a terminal application) in a case where the receiver 4 and the device 8 are controlled to cooperate with each other. The application specific information may be identification information that identifies a terminal application, or a URL of an external terminal application server storing the terminal application.

Here, the application specific information may be included in metadata.

The signal setting unit 112 of the broadcast sending device 11 multiplexes the application specific information with the TS while associating the application specific information with a broadcasting program, the contents thereof, or the progress thereof.

The application information acquiring unit 472 retrieves the application specific information and the metadata from the acquired PSI-SI, and provides all or part of those application specific information and metadata to the application execution unit 435.

Here, one or both of the application specific information and the metadata may be included in an independently provided ES while being associated with a particular identifier. In this case, the demultiplexing unit 402 retrieves one or both of the application specific information and the metadata from that ES, using the particular identifier as a key.

The activation control unit 473 acquires the application information provided from the application information acquiring unit 472, that is, the application name, the application control code, and the location information. In a case where the application control code is determined to be data indicating a stand-by of the application, the activation control unit 473 controls activation of the application associated with the application information.

Specifically, in a case where the application control code is determined to be data indicating a stand-by of the application, the activation control unit 473 generates an application request command, and provides the application request command to the communication input/output unit 411. In other words, the activation control unit 473 is an application requesting unit.

The data indicating the stand-by of the application is, for example, "12 (hexadecimal number)" (identification name: PRESENT) of the application control code shown in the above table 7.

Here, other than the above "12 (hexadecimal number)" (identification name: PRESENT), the data indicating the stand-by of the application may be another dedicated code assigned.

The application request command is a command which sets the location specified by the location information to a destination from which an application file is requested, and which indicates an acquisition request for that application file (download request).

Here, the activation control of an application performed by the activation control unit 473 includes controlling the application execution unit 435 to read an application file stored in the application storage unit 431, execute and initiate the read application file.

Additionally, upon retrieving the notice of acquisition of the application provided from the communication input/output unit 411, the activation control unit 473 generates an application execution request command and provides the application execution request command to the application execution unit 435.

The application execution request command is a command indicating a request for initiating execution of an application associated with the notice of acquisition of the application file.

Upon acquiring the termination request command provided from the operation input unit 414, the termination control unit 481 of the application control unit 434 detects from the application execution unit 435, a process state of the application (application execution state) from the application execution unit 435. In a case where the detected application execution state is an executing state, the termination control unit 481 generates an application execution termination command and provides the execution termination command to the application execution unit 435. In other words, upon acquiring the termination request command provided from the operation input unit 414, the termination control unit 481 controls termination of the execution of the running application associated with the TS being received.

Additionally, the termination control unit 481 acquires the application control code and the application ID which are provided from the application information acquiring unit 472. In a case where the acquired application control code is determined to be data indicating termination of the execution of the application, the termination control unit 481 controls termination of the execution of the application associated with the application ID associated with that application control code.

Specifically, in a case where the acquired application control code is determined to be data indicating termination of the execution of the application, the termination control unit 481 generates an application execution termination command including an application ID associated with that application control code, and provides the application execution termination command to the application execution unit 435.

The data indicating termination of the execution of the application is, for example, "03 (hexadecimal number)" (identification name: DESTROY) of the application control code shown in the above table 7.

Here, other than the above "03 (hexadecimal number)" (identification name: DESTROY), the data indicating termination of the execution of the application may be "04 (hexadecimal number)" (identification name: KILL), "08 (hexadecimal number)" (identification name: KILL ALL), or another dedicated code assigned.

The aforementioned application execution unit 435 includes a content requesting unit (not shown) as its functional configuration. The content requesting unit generates a content request command for requesting content data required for a process of executing an application from the content delivery server 16 of the broadcasting station server group 12 or the content delivery server 23 of the service organization server group 2. Then, the content requesting unit provides the content request command to the communication input/output unit 411.

As explained above, the application execution unit 435 has a terminal cooperation API (application program interface) for implementing the function of cooperation between the receiver 4 and the device 8. In a case where the application execution unit 435 executes an application that executes a process of cooperation with the device 8 (also referred to as a cooperation application), the application execution unit 435 controls that cooperation application to call and execute the terminal cooperation API.

The application execution unit 435 retrieves the application specific information and the metadata which are given from the application information acquiring unit 472, after controlling the receiver 4 and the device 8 to cooperate with each other. Controlling the receiver 4 and the device 8 to cooperate with each other means establishing a communication path between the receiver 4 an the device 8, thereby implementing a state of receiving cooperative communication/broadcasting services while the receiver 4 and the device 8 are cooperating with each other. Communication between the receiver 4 and the device 8 is performed via a WebSocket connection established by the WebSocket bridge function of the bridge unit 493 included in the external I/F unit 417.

Based on the information that specifies the cooperatively operating device 8, the information that specifies the terminal application to be executed by the device 8 (application specific information), and the metadata, the application execution unit 435 specifies a terminal application to that device 8, and performs activation control. The information that specifies the device 8 is the information that the application execution unit 435 acquires from the device 8 when the cooperation between the receiver 4 and the device 8 is established.

Here, in a case where the device 8 to be cooperated with the receiver 4 is previously specified, the information that specifies the device 8 may be omitted.

The application execution unit 435 is provided with InvokeApplicationOnDevice() method for specifying a terminal application to the device 8 and controlling the device 8 to activate the terminal application, based on the information that specifies the device 8, the application specific information, and the metadata. InvokeApplicationOnDevice() method has, for example, the following format.

Method Name: InvokeApplicationOnDevice()
Function: specify a terminal application to the device 8 and control the device 8 to activate the terminal application
Argument: device_dev, application_id, strings_parameters

Regarding the above InvokeApplicationOnDevice() method, device_dev is information that specifies the cooperatively-operating device 8 (device ID). application_id is information that specifies a terminal application (application specific information, application ID). strings_parameters is metadata.

In other words, in a case where the application execution unit 435 executes the InvokeApplicationOnDevice() method after the device 8 and the receiver 4 initiate cooperatively operation, the application execution unit 435 transmits to the device 8 via the external I/F 417, an activation command for controlling the device 8 associated with device_dev to activate the terminal application associated with application_id. At that time, the activation command includes strings_parameters as arguments.

Here, the application execution unit 435 may omit strings_parameters from among the arguments of the InvokeApplicationOnDevice() method and execute the method. In the present embodiment, a case where the arguments include strings_parameters is explained.

Additionally, the aforementioned communication input/output unit 411 includes an application acquiring unit and a content acquiring unit (not shown), as its functional configuration.

The application acquiring unit acquires an application file transmitted from an external server, such as the receiver application server 21 or the repository server 3, which has received the application request signal transmitted by the communication input/output unit 411. Then, the application acquiring unit controls the application storage unit 431 to store the application file.

The content acquiring unit acquires content data from an external server, such as the content delivery server 16 or the content delivery server 23, which has received the content request signal transmitted by the communication input/output unit 411. Then, the content acquiring unit gives the content data to the second synchronization buffer 404-2.

The connection control unit 501 of the device 8 is a communication interface for performing communication with the external I/F unit 417 of the receiver 4. In a case where the application execution unit 435 executes the InvokeApplicationOnDevice() method after the device 8 and the receiver 4 initiate cooperative operation, the connection control unit 501 acquires an activation command given from the external I/F unit 417, whose argument is strings_parameters, and gives that activation command to the terminal application acquiring unit 502.

The terminal application acquiring unit 502 acquires the activation command given from the connection control unit 501, acquires the terminal application based on that activation command, and gives to the terminal application execution unit 503, the acquired terminal application along with strings_parameters.

Specifically, the terminal application acquiring unit 502 includes a terminal application storage unit (not shown). The terminal application acquiring unit 502 determines whether or not device_dev indicated by the activation command corresponds to the device 8. In a case where device_dev corresponds to the device 8, the terminal application acquiring unit 502 determines whether or not a terminal application associated with the application_id indicated by the activation command is stored in the terminal application storage unit. In a case where the terminal application associated with application_id is stored in the terminal application storage unit, the terminal application acquiring unit 502 reads the terminal application from the terminal application storage unit and gives the read terminal application along with strings_parameters to the terminal application execution unit 503.

In a case where device_dev does not correspond to the device 8, the terminal application acquiring unit 502 may transmit error information to the receiver 4 via the connection control unit 501.

Additionally, in a case where a terminal application associated with the application_id is not stored in the terminal application storage unit, the terminal application acquiring unit 502 generates a terminal application request signal indicating an acquisition request for that terminal application, and gives the acquisition request for that terminal application to the terminal application server. Then, the terminal application acquiring unit 502 acquires the terminal application given from the terminal application server in response to the request signal for the terminal application, and gives the terminal application along with strings_parameters to the terminal application execution unit 503.

Here, the terminal application acquiring unit 502 may control the terminal application storage unit to store the acquired terminal application.

The terminal application includes, for example: a remote control application for implementing a remote control function that remotely controls the receiver 4; an answer (voting) application for transmitting an answer of a viewer of a quiz program, a variety program, or the like, to a broadcasting station or a service organization; an application for implementing a client function, such as a weblog, a chat, an SNS (social networking service), or the like; and the like.

The terminal application execution unit 503 acquires the terminal application and strings_parameters which are given from the terminal application acquiring unit 502, and executes the terminal application using that strings_parameters.

For example, in a case where strings_parameters is information relating to casts or staffs of a broadcasting program, the terminal application execution unit 503 executes the terminal application using the information relating to the casts or staffs of the broadcasting program, that is, broadcasting resources.

FIG. 25 is a schematic diagram illustrating a front outer shape in a case where an infrared remote controller is used as the operation reception unit 474. As shown in FIG. 25, the operation reception unit 474 is provided with a cooperative communication/broadcasting service button 475, in addition to buttons similar to those provided on a conventional remote controller for operating televisions, such as a power button, numerical buttons, a channel change button, a volume adjustment button, and a data broadcasting service button.

Next, an explanation is given with respect to a process for the receiver 4 to acquire an AIT, acquire an application file from an external server based on the AIT, execute the application, acquire related content from an external server along with the execution of the application, and present the related content, in a case where the cooperative communication/broadcasting service button 475 of the operation reception unit 474 is pressed.

FIG. 26 is a sequence chart illustrating a procedure of a process between the receiver application server 21 and the content delivery server 23.

In step S1, upon receiving the activation request signal transmitted from the operation reception unit 474, the receiver 4 retrieves an ES of the AIT from the TS associated with the channel selected from the desired medium selected by a viewer.

Then, in step S2, in a case where the application control code included in the AIT is determined to be data indicating the stand-by of the application, the receiver 4 transmits an application request signal to the receiver application server 21.

Then, in step S3, upon receiving and acquiring the application request signal transmitted by the receiver 4, the receiver application server 21 reads an application file specified by that application request signal.

Then, in step S4, the receiver application server 21 transmits the application file to the receiver 4 having transmitted the application request signal.

Then, in step S5, the receiver 4 receives and acquires the application file transmitted by the receiver application server 21 and initiates execution of the application.

Then, in step S6, the receiver 4 transmits to the content delivery server 23, a content request signal for acquiring content data required along with the execution of the application.

Then, in step S7, upon receiving and acquiring the content request signal transmitted by the receiver 4, the content delivery server 23 reads content data specified by the content request signal.

Then, in step S8, the content delivery server 23 transmits the content data to the receiver 4 having transmitted the content request signal.

Then, in step S9, the receiver 4 receives and acquires the content data transmitted by the content delivery server 23, decodes the content, displays the decoded content and outputs the sound thereof.

Here, in FIG. 26, in a case where the repository server 3 is provided in lieu of the receiver application server 21, and in a case where the content delivery server 16 is provided in lieu of the content delivery server 23, a similar process is applied.

Next, operation of the receiver 4 receiving an operation signal transmitted from the operation reception unit 474 is explained in detail.

FIGS. 27 and 28 are flowcharts illustrating an operational procedure of operation in a case where the receiver 4 operates in accordance with an operation of the operation reception unit 474.

The receiver 4 initiates execution of the process shown in the present flowchart in a state of acquiring a broadcasting signal, retrieving and presenting broadcasting content from the TS associated with the medium and the channel which are selected by a viewer, that is, in a state of displaying the desired program and outputting the sound thereof.

First, in step S11, the operation input unit 414 is waiting for a receipt of an operation signal transmitted from the operation reception unit 474. Upon receiving the operation signal transmitted by the operation reception unit 474, the operation input unit 414 acquires that operation signal and proceeds to the process in step S12. In a case where the received operation signal is an activation request signal in step S12 (S12: YES), the operation input unit 414 proceeds to the process in step S13. In a case where the received operation signal is not an activation request signal in step S 12 (S12: NO), the operation input unit 414 proceeds to the process in step S21 shown in FIG. 28.

In step S 13, the activation request signal acquiring unit 471 acquires the activation request signal, generates an activation request command, and provides the activation request command to the application control unit 434 of the application execution control unit 412.

Then, the application information acquiring unit 472 of the application control unit 434 acquires the activation request command provided from the activation request signal acquiring unit 471.

Then, the application information acquiring unit 472 acquires the AIT provided from the demultiplexing unit 402. This AIT is information retrieved from the TS associated with the desired channel selected from the desired medium selected by the viewer.

In step S 14, the application information acquiring unit 472 retrieves from the acquired AIT, the application name, the application control code, and the location information, as the application information, and provides the application information to the activation control unit 473.

Then, the activation control unit 473 acquires the application information provided from the application information acquiring unit 472, that are, the application name, the application control code, and the location information.

Then, in a case where the application control code is determined to be data indicating a stand-by of the application in step S 15 (S 15: YES), the activation control unit 473 proceeds to the process in step S16. In a case where the application control code is determined not to be data indicating a stand-by of the application (S 15: NO), the activation control unit 473 terminates the process of the present flowchart.

Specifically, in a case where the application control code is determined to be, for example, "12 (hexadecimal number)" (identification name: PRESENT), the activation control unit 473 proceeds to the process in step S16. In a case where the application control code is determined not to be "12 (hexadecimal number)" (identification name: PRESENT), the activation control unit 473 terminates the process of the present flowchart.

In step S16, the activation control unit 473 generates an application request command addressed to the location that is specified by the location information as a destination of a request for an application file, and provides that application request command to the communication input/output unit 411.

Then, the communication input/output unit 411 acquires the application request command provided from the activation control unit 473, and transmits the application request command to the request destination as an application request signal. The application request signal is, for example, a signal acquired by IP (Internet protocol)-packetizing the application request command.

In other words, the communication input/output unit 411 transmits the application request signal to the receiver application server 21 or the repository server 3 that is the request destination indicated by the application request command.

Then, in step S 17, the communication input/output unit 411 is waiting for a receipt of the application file transmitted by the above request destination (the receiver application server 21 or the repository server 3). Upon receiving the application file transmitted by the above request destination, the communication input/output unit 411 acquires the application file and proceeds to the process in step S 18.

In step S 18, the communication input/output unit 411 provides the acquired application file to the application storage unit 431 of the application execution control unit 412, and controls the application storage unit 431 to store the application file.

Then, in step S 19, the communication input/output unit 411 provides a notice of acquisition of the application file to the activation control unit 473.

Then, the activation control unit 473 acquires the notice of the acquisition of the application file provided from the communication input/output unit 411.

Then, the activation control unit 473 generates an application execution request command with respect to an application associated with the notice of the acquisition of the application file. Then, the activation control unit 473 provides the application execution request command to the application execution unit 435.

Then, the application execution unit 435 acquires the application execution request command provided from the activation control unit 473.

Then, the application execution unit 435 reads from the application storage unit 431, an application file specified by the acquired application execution request command, initiates execution of the application, and then terminates the process of the present flowchart.

On the other hand, in a case where the operation signal is an operation signal transmitted by an operation of the broadcasting service return button provided on the operation unit of the operation reception unit 474 (for example, a numeric button, or a channel change button) in step S21 shown in FIG. 28 (S21: YES), the operation input unit 414 proceeds to the process in step S22. Otherwise, the operation input unit 414 proceeds to the process in step S25.

In step S22, the operation input unit 414 generates a termination request command and provides the termination request command to the application control unit 434.

Then, the termination control unit 481 of the application control unit 434 acquires the termination request command provided from the operation input unit 414, and detects an application execution state from the application execution unit 435.

Then, in a case where the detected application execution state is the executing state in step S23 (S23: YES), the termination control unit 481 proceeds to the process in step S24. In a case where the detected application execution state is not the executing state (S23: NO), the termination control unit 481 terminates the process of the flowchart.

In step S24, the termination control unit 481 generates an application execution termination command and provides the application execution termination command to the application execution unit 435.

Then, upon acquiring the application execution termination command provided from the termination control unit 481, the application execution unit 435 terminates the execution of the currently running application, and terminates the process of the present flowchart.

On the other hand, in step S25, in accordance with an operation signal other than the activation request signal, the operation input unit 414 provides to the tuning unit 415, a code that specifies a medium or a channel, or provides to a sound adjustment circuit (not shown), a code that sets the volume.

The receiver 4 initiates operation in accordance with the operation signal other than the activation request signal, and terminates the process of the present flowchart.

Next, operation for the receiver 4 to execute and terminate an application based on a control from the cooperative communication/broadcasting service provider side is explained.

FIG. 29 is a flowchart illustrating an operational procedure of operation of the receiver 4.

First, in step S31, the application information acquiring unit 472 acquires the AIT provided from the demultiplexing unit 402.

In step S32, the application information acquiring unit 472 retrieves from the acquired AIT, an application control code and an application ID, and provides the application control code and the application ID to the termination control unit 481.

Then, the termination control unit 481 acquires the application control code and the application ID which are provided from the application information acquiring unit 472.

Then, in a case where the application control code is determined to be data indicating termination of execution of an application in step S33 (S33: YES), the termination control unit 481 proceeds to the process in step S34. In a case where the application control code is determined not to be data indicating termination of execution of an application in step S33 (S33: NO), the termination control unit 481 returns to the process in step S31.

Specifically, in a case where the application control code is determined to be, for example, "03 (hexadecimal number)" (identification name: DESTROY), the termination control unit 481 proceeds to the process in step S34. In a case where the application control code is determined not to be "03 (hexadecimal number)" (identification name: DESTROY), the termination control unit 481 returns to the process in step S31.

In step S34, the termination control unit 481 generates an application execution termination command including the application ID associated with the application control code, and provides the application execution termination command to the application execution unit 435.

Then, the application execution unit 435 acquires the application execution termination command provided from the termination control unit 481.

Then, upon acquiring the application execution termination command provided from the termination control unit 481, the application execution unit 435 terminates the execution of the currently running application and terminates the process of the present flowchart.

Next, an explanation is given with respect to operation of the reception system that dynamically changes a terminal application to be executed by the device 8 to be cooperated with the receiver 4.

FIG. 30 is a sequence chart illustrating an operational procedure among the receiver 4, the device 8, and the terminal application server.

First, the receiver 4 and the device 8 establish cooperation in step S41.

Specifically, the application execution unit 435 of the receiver 4 controls the cooperation application that executes a process of cooperation with the device 8 to call and execute the terminal cooperation API. By the application execution unit 435 executing the terminal application API, the receiver 4 and the device 8 establish the cooperation.

Here, the detailed operation of the process of the cooperation between the receiver 4 and the device 8 in step S41 is explained.

FIG. 31 is a sequence chart illustrating a procedure of the process of the cooperation between the receiver 4 and the device 8.

First, when the terminal application execution unit 503 of the device 8 executes a receiver connection application through an operation of a user of the device 8, the connection control unit 501 searches the receiver 4 using the SSDP of the UPnP in step S411.

When the receiver 4 receives the search by the device 8, the external I/F unit 417 of the receiver 4 transmits to the device 8, a response including a connection address and a port number of the WebSocket. Specifically, the external I/F unit 417 executes a server program for the WebSocket, thereby being provided with the device-side server unit 491. Then, the external I/F unit 417 notifies the device 8 of the connection address and the port number to be used for access to the device-side server unit 491.

When the device 8 receives from the receiver 4, the response including the connection address and the port number, the terminal application execution unit 503 of the device 8 displays on a display (not shown) of the device 8, a list of receivers 4 having received responses to the searches, as a list of available receivers 4, in step S413. Then, the terminal application execution unit 503 waits for a receiver 4 to be cooperated with being selected from the list.

Then, in step S414, when one receiver 4 is selected from the list of available receivers 4 by the user of the device 8, the terminal application execution unit 503 receives the selection of the receiver 4 to be cooperated with.

Then, in step S415, the connection control unit 501 transmits a WebSocket handshake request to the receiver 4 having received the selection in step S414. Specifically, the connection control unit 501 transmits a handshake request addressed to the connection address and the port number which are received from the receiver 4 in step S412.

When the receiver 4 receives the handshake request from the device 8, the connecting unit 493 of the receiver 4 returns a WebSocket handshake response to the device 8 via the device-side server unit 491, thereby establishing a connection. In other words, the connecting unit 493 establishes a connection between the device-side server 491 and the device 8. Thereafter, the receiver 4 and the device 8 communicate with each other via the connection, and thereby can perform bilateral communication. At this time, the device 8 transmits a request for registration of event reception (registration of receipt of terminal application activation information) to the receiver 4. In response to the request, the receiver 4 registers the event reception. Thus, in a case where application specific information is included in a broadcasting stream demultiplexed by the demultiplexer 402, the receiver 4 notifies, by push transmission, the registered device 8 of the activation command for that application.

Returning back to FIG. 27, when cooperation is established between the receiver 4 and the device 8, the receiver 4 acquires the application specific information and the metadata from the currently receiving TS in step S42. Specifically, the application information acquiring unit 472 acquires from the desired media selected by the viewer, the PSI/SI retrieved from the TS associated with the desired channel tuned in on. Additionally, the application information acquiring unit 472 acquires from that PSI/SI, the application specific information and the metadata.

Next, in a case where the information that specifies the currently cooperating device 8 and the application specific information (first information) are included in step S42, the receiver 4 specifies the terminal application to the device 8 based on the acquired application specific information and the metadata, and performs activation control, in step S43.

Specifically, the application execution unit 435 executes the InvokeApplicationOnDevice() method for the mobile cooperation API, and transmits, by push transmission, an activation command (including strings_parameters) for activating a terminal application associated with application_id (second information), to the device 8 associated with device_dev via the WebSocket connection established in step S41, via the external I/F 417.

Next, the device 8 receives the activation control for the terminal application from the receiver 4, and displays on a display (not shown), information concerning the specified terminal application. Then, upon receiving an instruction to activate the terminal application from a user, the device 8 generates a terminal application request signal regarding the specified terminal application, and transmits the terminal application request signal to the terminal application server.

Specifically, the connection control unit 501 acquires the activation command provided from the external I/F unit 417, whose argument is strings_parameters, and provides the activation command to the terminal application acquiring unit 502.

Then, the terminal application acquiring unit 502 acquires the activation command provided from the connection control unit 501.

Then, the terminal application acquiring unit 502 acquires the terminal application based on the activation command, and provides the terminal application along with the strings_parameters to the terminal application execution unit 503.

More specifically, the terminal application acquiring unit 502 determines whether or not device_dev indicated by the activation command corresponds to the device 8. In a case where device_dev corresponds to the device 8, the terminal application acquiring unit 502 determines whether or not a terminal application associated with application_id indicated by the activation command is stored in the terminal application storage unit. Here, FIG. 30 illustrates an example of a case where a terminal application associated with application_id is not stored in the terminal application storage unit.

In a case where a terminal application associated with application_id is not stored in the terminal application storage unit, the terminal application acquiring unit 502 generates a terminal application request signal indicating an acquisition request for the terminal application, and transmits the terminal application request signal to the terminal application server.

Then, upon receiving and acquiring the terminal application request signal transmitted by the device 8, the terminal application server reads a file of the terminal application specified by the terminal application request signal, in step S45.

Then, the terminal application server transmits the file of the terminal application to the device 8 having transmitted the terminal application request signal, in step S46.

Then, the device 8 receives and acquires the file of the terminal application transmitted by the terminal application server, in step S47.

Specifically, the terminal application acquiring unit 502 acquires the terminal application provided from the terminal application server in response to the terminal application request signal, and provides the terminal application along with strings_parameters to the terminal application execution unit 503.

Then, the device 8 initiates a process of executing the terminal application in the acquired file of the terminal application, in step S48.

Specifically, the terminal application execution unit 503 acquires the terminal application and strings_parameters which are provided from the terminal application acquiring unit 502, and initiates the process of executing the terminal application using the strings_parameters.

Then, the device 4 performs the process of executing the cooperation application and the device 8 performs the process of executing the terminal application, in step S49. Thus, the receiver 4 and the device 8 implement cooperative operation using broadcasting resources.

Here, the connection established in step S41 is disconnected by the cooperation application of the receiver 4 or termination of the receiver connection application of the device 8. Accordingly, in a case where the device 8 performs single-task operation, that is, in a case where the receiver connection application ends along with the activation of the terminal application in step S48, the terminal application performs a process of newly establishing a WebSocket connection with the receiver 4. On the other hand, in a case where the device 8 performs multi-task operation, that is, in a case where the terminal application and the receiver connection application operate in parallel, a connection is maintained. For this reason, in this case, the terminal application may perform the cooperation process using the connection established by the receiver connection application.

Next, operation of controlling an application of the receiver 4 and an application of the device 8 to cooperate with each other is explained.

Here, an explanation is given using an example where there are multiple devices 8 (devices 8-1 and 8-2) to be connected to the receiver 4, and the receiver 4 executes an application first, followed by the device 8-2 executing an application.

FIG. 32 is a sequence chart illustrating a procedure for cooperation among applications.

First, the devices 8-1 and 8-2 acquire terminal applications by the procedure shown in the aforementioned steps S41 to S47 (step S51). Additionally, the receiver 4 acquires a receiver application from a receiver application server (not shown) based on the information concerning the application to be executed by the receiver 4 which is indicated by the application specific information and the metadata which are acquired in the aforementioned step S42 (step S52). It is assumed here that the terminal applications to be executed by the devices 8-1 and 8-2 and the receiver application to be executed by the receiver 4 have connection types of the same value, each of which is information indicating the type of application to be cooperated with.

Then, the terminal 8-1 executes the terminal application (step S53). Then, based on the executed terminal application, the terminal 8-1 transmits a handshake request to the receiver 4 by the procedure shown in the aforementioned steps S411 to S415 (step S54).

Upon the connecting unit 493 of the receiver 4 receiving the handshake request via the device-side server unit 491, the bridge unit 494 performs a bridge determination process of determining whether or not to perform a process of bridge-connecting the application to be executed by the application execution unit 435 and the application to be executed by the device 8 (step S55).

Here, the detailed operation of the bridge determination process performed by the receiver 4 is explained.

FIG. 33 is a flowchart illustrating a procedure of the bridge determination process performed by the receiver 4.

First, the connecting unit 493 of the external I/F unit 417 waits for a receipt of the handshake request from the device-side server unit 491 or the receiver-side server unit 492 (step S501). Then, the connecting unit 493 receives the handshake request from the application execution unit 435 or the device 8 (step S502). Here, the handshake request includes a port number and a connection type, in addition to a connection address.

Here, the connecting unit 493 and the bridge unit 494 reads the port number, thereby determining whether the received handshake request is a request from the application to be executed by the device 8 or a request from the application to be executed by the application execution unit 435. For example, in a case where the handshake request is a request addressed to the port 1000, it is determined that the handshake request is a request from the application to be executed by the application execution unit 435. In a case where the handshake request is a request addressed to any one of the ports 1001 to 1010, it is determined that the handshake request is a request from the application to be executed by the device 8.

Then, the connecting unit 493 determines whether or not the port indicated by the handshake request is being used by another connection (step S503). If it is determined that the port is already being used (step S503: YES), the connecting unit 493 terminates the bridge determination process without establishing a connection.

On the other hand, if it is determined that the port is not being used (step S503: NO), the connecting unit 493 refers to the port number and determines whether or not the handshake request is a request from the device 8 (step S504).

If it is determined that the handshake request is a request from the device 8 (step S504: YES), the connecting unit 493 establishes a WebSocket connection between the device-side server unit 491 and the device 8 (step S505). Then, the bridge unit 494 determines whether or not a connection on the receiver side has been already established (step S506). If it is determined that a connection on the receiver side has not been established yet (step S506: NO), the bridge unit 494 terminates the bridge determination process without performing the bridge connection.

On the other hand, if it is determined that a connection on the receiver side has been already established (step S506: YES), the bridge unit 494 determines whether or not a connection type of the connection matches the connection type of the connection generated in step S505 (step S507).

If it is determined that the connection type of the connection on the receiver side does not match the connection type of the connection generated in step S505 (step S507: NO), the bridge unit 494 terminates the bridge determination process without performing the bridge connection.

On the other hand, if it is determined that the connection type of the connection on the receiver side matches the connection type of the connection generated in step S505 (step S507: YES), the bridge unit 494 bridge-connects the connection on the receiver side and the connection generated in step S505 (step S508). Here, the bridge connection means that a request received by the receiver-side server unit 492 via the connection on the receiver side is transferred to the device-side server unit 491 and thereby is transmitted to the device 8 via the connection on the device side, and a request received by the device-side server unit 491 via the device-side connection is transferred to the receiver-side server unit 492 and thereby is transmitted to the application execution unit 435 via the receiver-side connection.

If the connecting unit 493 determines in step S504 that the handshake request is a request from the device 8 (step S504: YES), the connecting unit 493 establishes a WebSocket connection between the receiver-side server unit 492 and the application execution unit 435 (step S509). Then, the bridge unit 494 determines whether or not at least one connection on the device side has been established (step S510). If it is determined that no connection on the device side has been established (step S510: NO), the bridge unit 494 terminates the bridge determination process without performing the bridge connection.

On the other hand, if it is determined that at least one connection on the device side has been established (step S510: YES), the bridge unit 494 selects one device-side server unit 491 with which the connection has been established, and performs, for each device-side server unit 491, the processes from steps S512 to S513 shown below (step S511).

First, the bridge unit 494 determines whether or not the connection type of the connection with the device-side server unit 491 selected in step S511 matches the connection type of the connection generated in step S509 (step S512).

If it is determined that the connection type of the connection on the side of the selected device does not match the connection type of the connection generated in step S509 (step S512: NO), the bridge unit 494 performs selection of the next device-side server unit 491 without performing the bridge connection.

On the other hand, if it is determined that the connection type of the connection on the side of the selected device matches the connection type of the connection generated in step S509 (step S512: YES), the bridge unit 494 bridge-connects the connection on the side of the selected device and the connection generated in step S509 (step S513), and performs selection of the next device-side server unit 491.

By the above processes, the external I/F unit 417 of the receiver 4 establishes a connection with the application execution unit 435 or the device 8, and performs a bridge connection process. Here, in a case where the bridge connection process is performed, the bridge unit 494 generates, for each bridge connection, identification information (session_id) that specifies the connection, and notifies the terminal 8 and the application execution unit 435 of the identification information.

Returning back to FIG. 32, in a case where the external I/F unit 417 of the receiver 4 performs a bridge connection process, a connection with the receiver-side server 492 is not established at that time, the external I/F unit 417 establishes a connection with the terminal 8-1 without performing a bridge connection process (step S56).

Then, the application execution unit 435 of the receiver 4 executes the receiver application acquired in step S52 (step S56). Then, the application execution unit 435 outputs, by the executed receiver application, a handshake request to the external I/F unit 417 by a procedure similar to the aforementioned steps S411 to S415 (step S57).

When the connecting unit 493 of the external I/F unit 417 acquires the handshake request via the receiver-side server unit 492, the bridge unit 494 performs the aforementioned bridge determination (step S55). Thus, the connecting unit 493 establishes a connection between the application execution unit 435 and the receiver-side server unit 492. Additionally, the connection between the device 8-1 and the device-side server unit 491 has been established in step S56. For this reason, the bridge unit 494 performs a bridge connection process between the device-server unit 491 and the receiver-server unit 492 (step S59). At this time, the bridge unit 494 notifies the application execution unit 435 and the device 8-1 of identification information (session_id=1) that identifies the bridge connection.

Then, the device 8-2 executes the terminal application acquired in step S51 (step S60). Then, the device 8-2 transmits, by the executed terminal application, a handshake request to the external I/F unit 417 by the procedure shown in the aforementioned steps S411 to S415 (step S61).

When the connecting unit 493 of the external I/F unit 417 acquires the handshake request via the device-side server unit 491, the bridge unit 494 performs the aforementioned bridge determination (step S62). Thus, the connecting unit 493 establishes a connection between the device 8-2 and the device-side server unit 491. Additionally, the connection between the application execution unit 435 and the receiver-side server unit 492 has been established in step S58. For this reason, the bridge unit 494 performs a bridge connection process between the device-server unit 491 and the receiver-server unit 492 (step S63). At this time, the bridge unit 494 notifies the application execution unit 435 and the device 8-2 of identification information (session_id=2) that identifies the bridge connection.

Thus, the receiver 4 can receive a request from the device 8 via the external I/F unit 417, irrespective of the specifications of languages of applications to be executed. Additionally, the device 8 can also receive a request from the receiver 4 via the external I/F unit 417, irrespective of the specifications of languages of applications to be executed.

Additionally, when the application execution unit 435 of the receiver 4 outputs a request including identification information (session_id) to the external I/F unit 417 in the following process, the bridge unit 494 outputs the request to the device 8 indicated by the identification information. Further, in a case where the bridge unit 494 receives a request from the device 8 with which the bridge connection allocated with the identification information is performed, the bridge unit 494 outputs a combination of the request and the identification information to the application execution unit 435. Thus, the receiver application can perform a cooperation process while distinguishing a device to which the request is transmitted.

As explained above, the receiver 4 of one embodiment of the present invention receives the operation signal transmitted by the operation reception unit 474 in accordance with an operation of the viewer. The operation reception unit 474 is provided with the cooperative communication/broadcasting service button 475 that controls the receiver 4 to initiate a receipt of a cooperative communication/broadcasting service. By the cooperative communication/broadcasting service button 475 being pressed, the operation reception unit 474 transmits an activation request signal.

Upon acquiring the activation request signal, the receiver 4 acquires the AIT from the TS associated with the desired channel of the desired medium, and retrieves application information from that AIT (the application name, the application control code, and the location information).

In a case where the application control code is data indicating a stand-by of the application, the receiver 4 transmits an application request signal to the receiver application server 21 or the repository server 3 that is a destination of the request for the application file.

Upon receiving the application file provided from the destination of the request for the application, the receiver 4 acquires the application and initiates execution of the application.

To acquire content data required along with the execution of the application, the receiver 4 provides a content request signal to the content delivery server 16 or the content delivery server 23.

Upon receiving the content data provided from the destination of the request for the content data, the receiver 4 acquires and presents the content data.

According to this configuration, the receiver 4 can, in accordance with an operation by the viewer (operator) of the cooperative communication/broadcasting service button 475 provided on the operation reception unit 474, change the state of receiving a broadcasting service to the state of receiving a stream dependent service that is one of a plurality of service types of cooperative communication/broadcasting services.

Therefore, according to the receiver 4, it is possible to change the broadcasting service to the cooperative communication/broadcasting service by a simple operation.

Additionally, the receiver 4 investigates the execution state of the application in a case where the operation signal provided from the operation reception unit 474 is an operation signal transmitted by an operation of the broadcasting service return button (such as a numerical button or a channel change button) provided on the operation unit of the operation reception unit 474.

In a case where the application is in the executing state at the current point, the receiver 4 terminates the execution of the running application.

According to this configuration, the receiver 4 can, in accordance with an operation by the viewer (operator) of the numerical button or the channel change button provided on the operation reception unit 474, change the state of receiving a broadcasting service to the state of receiving a stream dependent service that is one of a plurality of service types of cooperative communication/broadcasting services.

Therefore, according to the receiver 4, it is possible to change the cooperative communication/broadcasting service to the broadcasting service by a simple operation.

Additionally, in a case where the application control code included in the AIT acquired from the TS is determined to be data indicating termination of execution of the application, the receiver 4 terminates execution of the application indicated by the application ID associated with that application control code.

According to this configuration, the receiver 4 can change the currently-received cooperative communication/broadcasting service to a broadcasting service by a control from the cooperative communication/broadcasting service provider side.

Therefore, according to the receiver 4, it is possible to change the cooperative communication/broadcasting service being received by the receiver side to a broadcasting service by a control from the cooperative communication/broadcasting service provider side.

Additionally, according to this configuration, the receiver 4 can, in accordance with a request from the receiver 4 itself, acquire from an external provider, an application to be executed by the receiver 4 and content data related to that application.

Further, in the reception system of the present embodiment, in a case where a cooperation application for the receiver 4 to execute a process of cooperation with the device 8 is executed, that cooperation application is controlled to call and execute the terminal cooperation API.

After the device 4 establishes cooperation with the device 8, the receiver 4 acquires application specific information and metadata from the currently receiving TS.

Based on the information specifying the currently cooperating device 8, the application specific information specifying the terminal application to be executed by the device 8, and the metadata, the receiver 4 specifies that terminal application to the device 8 and performs activation control.

Upon receiving the activation control by the receiver 4, the device 8 retrieves the terminal application which the device 8 is specified to execute, from the internal terminal application storage unit or the external terminal application server.

The device 8 executes the acquired terminal application using the metadata acquired from the receiver 4.

According to this configuration, it is possible to change, in real time, the application to be executed by the device 8 cooperating with the receiver 4, based on the application specific information acquired from a broadcasting stream.

Therefore, the device 8 cooperating with the receiver 4 can change and execute a terminal application in accordance with a broadcasting program, the contents thereof, the progress thereof, or the like.

Further, in a case where the application control code included in the acquired AIT is determined to be data indicating auto-activation of an application, the activation control unit 473 of the receiver 4 transmits an application request signal to the receiver application server 21, regardless of an operation of the operation reception unit 474.

Moreover, the present embodiment is an example in which in a case where the cooperative communication/broadcasting service button 475 provided on the operation reception unit 474 is pressed in the state of the receiver 4 receiving a broadcasting service, the state of receiving only a broadcasting service is changed to the state of receiving a cooperative communication/broadcasting service. Other than this, for example, a configuration may be such that in a case where the cooperative communication/broadcasting service button 475 is pressed in the state of the receiver 4 receiving no service, such as in the stand-by state, the receiver 4 once enters the state of receiving a broadcasting service from the stand-by state, and thereafter enters the state of receiving a cooperative communication/broadcasting service.

Additionally, the present embodiment is an example in which the application information acquiring unit 472 acquires an ES of the AIT multiplexed with the TS acquired from the broadcasting signal.

Other than this, a configuration may be such that the broadcast sending device 11 transmits, as a broadcasting signal, a TS multiplexed with an EIT (event information table) provided with a descriptor including information concerning an AIT. Then, in the receiver 4 acquiring that broadcasting signal, the demultiplexing unit 402 may retrieve the AIT from the EIT multiplexed with the TS, and the application information acquiring unit 472 may acquire that AIT.

FIG. 34 is a diagram illustrating a data structure of the EIT.

Here, the details of the data structure of the EIT are described in, for example, "Operational Guidelines For Digital Terrestrial Television Broadcasting", ARIB TR-B 14, V4.4, Fascicle 2, Association of Radio Industries and Businesses, March 2011 (Volume 4, Section 3, 31.3).

The signal setting unit 112 of the broadcast sending device 11 stores the information concerning the AIT in, for example, a descriptor (descriptor()) of the EIT having the data structure shown in FIG. 34. Then, the signal setting unit 112 generates a TS multiplexed with the EIT storing the AIT, and provides that TS to the broadcast sending unit 113.

Alternatively, a configuration may be such that the broadcast sending device 11 transmits the AIT described in BML (broadcast markup language) by data broadcasting in DSM-CC (digital storage media-command and control) data carousel transmission format. Then, in the receiver 4 acquiring that broadcasting signal, the demultiplexing unit 402 may retrieve the AIT from the data broadcasting content, and the application information acquiring unit 472 may acquire that AIT.

The details of the DSM-CC data carousel transmission format is described in, for example, "Data Coding And Transmission Specification For Digital Broadcasting", ARIB STD-B24, V5.1, Fascicle 3, Association of Radio Industries and Businesses, March 2007 (Volume 3, Chapter 6).

As explained above, the signal setting unit 112 fixes a component tag and a module that are for transmitting the AIT by carousel transmission. The signal setting unit 112 fixes the component tag to, for example, "AA (hexadecimal number)" and fixes a module ID that is identification information of the module to, for example, "0". Then, the signal setting unit 112 sets the type for identifying that the module is an AIT to a descriptor Type of the module.

On the other hand, the demultiplexing unit 402 monitors the module in the TS. Then, in a case where a module with module ID of "0" is detected, the demultiplexing unit 402 retrieves from the detected module, the AIT associated with the identifier Type.

Alternatively, a configuration may be such that an AIT associated with identification information of broadcasting content or an AIT including the identification information of the broadcasting content is stored in the notification sever 18 of the broadcasting station server group 12 or the notification server 24 of the service organization server group 2. Then, in the receiver 4 acquiring that broadcasting signal, the application control unit 434 may acquire the identification information of the content from the demultiplexing unit 402, and acquire the AIT from the notification server 18 or the notification server 24 via the communication input/output unit 411.

Additionally, to implement a function of changing the broadcasting service received on the receiver side to a cooperative communication/broadcasting service by a control from the cooperative communication/broadcasting service provider side, the following configuration may be included.

In other words, the application information acquiring unit 472 retrieves an application control code and a predetermined flag from the acquired AIT, and provides the application control code and the flag to the activation control unit 473. The predetermined flag is, for example, data provided in the AIT, which indicates any one of activation of an application and presentation of a data broadcast.

The activation control unit 473 acquires the application control code and the flag which are provided from the application information acquiring unit 472.

In a case where the application control code is determined to be data for instructing auto-activation of an application, the activation control unit 473 controls initiation of execution of the application or presentation of a data broadcast in accordance with the flag.

The data for instructing the auto-activation of an application is, for example, "01 (hexadecimal number)" (identification name: AUTOSTART) of the application control code shown in the above table 7.

Although the details of the embodiments of the present invention have been explained above with reference to the drawings, specific configurations are not limited to those embodiments, and include modifications or the like made without departing from the scope of the present invention.

Here, the explanation has been given in the present embodiment with respect to the case where the bridge unit 494 bridge-connects connections whose connection types included in the handshake request match. However, the configuration is not limited thereto, and a bridge connection may be established when another predetermined condition is met. For example, the other condition may be such that information concerning the application to be executed by the application execution unit 435 and information concerning the application to be executed by the device 8 are included the same broadcasting stream demultiplexed by the demultiplexer 402. This is implemented by the demultiplexer 402 acquiring and recording information concerning an application from a broadcasting stream each time the demultiplexer 402 demultiplexes a broadcasting signal into the broadcasting stream.

Additionally, the case where a connection is not established when a port is already being used has been explained in the present embodiment. The configuration is not limited thereto. For example, a process of preferentially connecting a port specified later may be performed.

Further, the example in which one terminal application is allocated to one port has been explained in the present embodiment. However, a configuration may be such that multiple terminal applications are connected via one port. Here, in that case, determination in step S503 of whether or not a port is being used is omitted.

[Other Embodiments]

Hereinafter, an example of cooperation using a WebSocket connection other than push transmission of information concerning a terminal application is explained.

Firstly, an example in which program information is transmitted from the receiver 4 to the device 8 is explained here.

In a case where the receiver 4 receives a broadcasting stream including information (first information) concerning a program different from the program having been viewed so far (such as a case where a broadcasting channel selected by a remote controller or the like is changed, or a case where the currently viewed program ends and the next program starts), the receiver 4 retrieves from the broadcasting stream, information (second information) relating to the new program. Then, in a case where a WebSocket connection has been established with the device 8, the receiver 4 transmits to the device 8, information concerning the new program via that connection. Thus, the device 8 can acquire, in real time, the information concerning the currently-viewed program. Here, the information relating to the program (second information) includes, for example, the name of the program, a summary of the program, a keyword, and the like.

Next, an example in which the device 8 controls tuning by the receiver 4 is explained.

In a case where the device 8 receives a tuning operation (specification of a broadcasting channel) by a user operation after a WebSocket connection is established, the device 8 transmits to the receiver 4 via the established connection, a selection instruction that instructs to select the specified broadcasting channel. When the receiver 4 receives the selection instruction from the device 8, the device 8 outputs to the tuning unit 415, selection of the broadcasting channel specified by the selection instruction. Thus, the tuning unit 415 can change the broadcasting channel on which the broadcast reception unit 401 receives the broadcasting signal. When the tuning process is performed, the receiver 4 acquires a result thereof (success or failure) and transmits the result to the device 8. Here, the receiver 4 may transmit not only success or failure as result information, but also result information including the aforementioned information concerning the program (such as the name of the program, the summary of the program, the keyword, and the like).

Additionally, the case where the tuning operation is received from a user has been explained here, but the configuration is not limited thereto. For example, the receiver 4 may receive an instruction as to control other than the tuning operation, such as a change in volume of sound or on/off of the power.

Further, for example, the receiver 4 may receive from the device 8, a control instruction including application specific information (content identification information) that specifies the receiver application (content) to be executed by the application execution unit 435 (content execution unit). In this case, upon receiving the control instruction from the device 8, the communication input/output unit 411 of the receiver 4 acquires from the receiver application server, the receiver application specified by the application specific information included in the control instruction. Then, the application execution unit 435 of the receiver 4 executes the receiver application acquired by the communication input/output unit 411.

Moreover, for example, the receiver 4 may receive from the device 8, a control instruction including a URL (content identification information) indicating VOD content to be played back by a VOD playback application to be executed by the application execution unit 435. In this case, upon receiving the control instruction from the device 8, the communication input/output unit 411 of the receiver 4 acquires from a content delivery server, VOD content indicated by the URL included in the control instruction. Then, the application execution unit 435 of the receiver 4 plays back the VOD content acquired by the communication input/output unit 411.

Here, each unit included in the receiver 4 of the above embodiments may be a unit that implements its function by executing a program for implementing the function of each unit. Additionally, each process included in the reception method of the above embodiments may be performed by executing a program for implementing each process.

Further, a program for implementing the function of each unit included in the receiver 4 of the above embodiments or a program for implementing each process included in the reception method of the above embodiments may be recorded on a computer-readable recording medium. Then, the receiver or each process included in the reception method may be implemented by a computer system reading and executing the program recorded on the recording medium.

Here, a "computer system" includes an OS and hardware such as a peripheral equipment. Additionally, the "computer system" includes a function of providing information embodied in a so-called web page described in markup language and a function of displaying that information on a browser.

The "recording medium" means a storage device having a function of non-temporarily storing information. For example, the recording medium includes, but is not necessarily limited to, portable media like a flexible disk, a magneto-optical disk, a ROM, or a CD-ROM, and non-volatile media like unportable media such as a hard disk built in a computer system.

Additionally, the "recording medium" includes, but is not necessarily limited to, a volatile medium like a volatile memory, such as a DRAM or an SRAM, which is built in a computer system serving as a server or a client.

Further, the "recording medium" includes, but is not necessarily limited to, a medium that stores a program for a short time, such as a reception/transmission device or a transfer device which transmits a program via a network such as the Internet or via a communication line such as a telephone line.

Moreover, the aforementioned program may be a program which implements part of the aforementioned functions, or a program which can implement the aforementioned functions in combination of another program already recorded in the computer system.

INDUSTRIAL APPLICABILITY

The present invention is applicable to a device, a method, and a system, or the like for receiving digital broadcasts.

DESCRIPTION OF REFERENCE NUMERALS

1: broadcasting organization device
11: broadcast sending device
111: broadcast related data management unit
112: signal setting unit
113: broadcast sending unit
12: broadcasting station server group
13: content management server
14: program management server
15: metadata management server
16: content delivery server
17: broadcasting station service server
18: notification server
2: service organization server group
21: receiver application server
22: service server
23: content delivery server
24: notification server
3: repository server
4: receiver
401: broadcast reception unit
402: demultiplexing unit
403: timer
404-1: first synchronization buffer
404-2: second synchronization buffer
405-1: first decoder
405-2: second decoder
406: data broadcast execution unit
407: video control unit
408: video display unit
409: sound control unit
410: sound output unit
411: communication input/output unit
412: application execution control unit
413: presentation control unit
414: operation input unit
415: tuning unit
416: local information storage unit
417: external I/F unit
431: application storage unit
432: application authentication unit
433: application management unit
434: application control unit
435: application execution unit
436: receiver API unit
437: terminal cooperation API unit
438: resource access control unit

439: resource control unit
451: policy data management unit
452: policy data storage unit
453: event interpretation unit
454: policy level comparing unit
455: event control unit
456: program policy storage unit
457: policy mediation unit
458: policy level storage unit
9: communication network
471: activation request signal acquiring unit
472: application information acquiring unit
473: activation control unit
474: operation reception unit
475: cooperative communication/broadcasting service button
481: termination control unit
491: device-side server unit
492: receiver-side server unit
493: connecting unit
494: bridge unit
501: connection control unit
502: terminal application control unit
503: terminal application execution unit

## Claims

**1.** A receiver comprising:

a connecting unit configured to establish a communication connection with a terminal having a communication function;
a broadcast reception unit configured to receive a broadcasting signal;
a demultiplexing unit configured to demultiplex a broadcasting stream from the broadcasting signal received by the broadcast reception unit; and
a transmission unit configured to, in a case that predetermined first information is included in the broadcasting stream demultiplexed by the demultiplexer, transmit, by push transmission, second information related to the first information, to the terminal via the connection established by the connecting unit.

**2.** The receiver according to claim 1, wherein the first information comprises application specific information that specifies an application to be executed by a terminal device.

**3.** The receiver according to claim 1 or 2, further comprising:

a control instruction reception unit configured to receive a control instruction to the receiver from the terminal via the connection established by the connecting unit; and
a control unit configured to control the receiver based on the control instruction received by the control instruction receiver.

**4.** The receiver according to claim 3, wherein the control instruction reception unit is configured to receive, as a control instruction, a selection instruction that selects a predetermined broadcasting channel, and
the control unit is configured to control the broadcast reception unit to receive a broadcasting signal on the broadcasting channel specified, in accordance with the selection instruction received by the control instruction reception unit.

**5.** The receiver according to claim 3, further comprising:

a communication input/output unit configured to communicate with an external device via a network; and
a content execution unit configured to execute content that the communication input/output unit receives from the external device,
wherein the control instruction reception unit is configured to receive a control instruction including content identification information indicating content to be executed by the content execution unit, and
the control unit is configured to control the communication input/output unit to acquire from the external device, content identified by the content identification information included in the control instruction received by the control instruction reception unit, and to control the content execution unit to execute the content.

**6.** The receiver according to any one of claims 1 to 5, further comprising:

a search response unit configured to transmit a response including a connection address to be used by the connecting unit for the communication connection.

**7.** A receiver comprising:

a broadcast reception unit configured to receive a broadcasting signal;
a demultiplexing unit configured to demultiplex a broadcasting stream from the broadcasting signal received by the broadcast reception unit;
an application information acquisition unit configured to acquire from the broadcasting stream demultiplexed by the demultiplexing unit, information concerning an application to be executed by the receiver;
an application execution unit configured to execute the application indicated by the information acquired by the application information acquisition unit;
a server unit configured to receive a request output by the application execution unit executing the application and a request output by a terminal configured to execute an application executing the application;
a connecting unit configured to establish connection among the server unit, the application execution unit, and the terminal; and
a bridge unit configured to output to the terminal via the connection established by the connecting unit, the request that the server unit receives from the application execution unit, and to output to the application execution unit via the connection established, the request that the server unit receives from the terminal.

**8.** The receiver according to claim 7, wherein the bridge unit is configured to determine whether or not a relationship between an application to be executed by the application execution unit and an application to be executed by the terminal meets a predetermined condition, and
the bridge unit is configured to, in a case that the condition is met, output to the terminal via the connection established by the connecting unit, the request that the server unit receives from the application execution unit, and to output to the application execution unit via the connection established, the request that the server unit receives from the terminal.

**9.** The receiver according to claim 8, wherein the application execution unit and the terminal are configured to, in a case that connection with the server unit is established, output type information to the connecting unit by execution of the application, the type information indicating a type of an application to be cooperated, and
the predetermined condition used by the bridge unit comprises a condition that the type information that the connecting unit receives from the application execution unit matches the type information received from the terminal.

**10.** The receiver according to claim 7, wherein the application information acquisition unit is configured to acquire from the broadcasting stream demultiplexed by the demultiplexing unit, information concerning an application to be executed by the terminal, in addition to the information concerning the application to be executed by the receiver, and the predetermined condition used by the bridge unit comprises a condition that information concerning an application to be executed by the application execution unit and the information concerning the application to be executed by the terminal are included in the same broadcasting stream demultiplexed by the demultiplexing unit.

**11.** The receiver according to any one of claims 8 to 10, wherein the bridge unit is configured to, in a case that a connection is established by the connecting unit, perform determination of the predetermined condition.

**12.** The receiver according to any one of claims 8 to 11, wherein the bridge unit is configured to, in a case that it is determined that the predetermined condition is met, generate identification information that identifies the terminal and output the generated identification information to the application execution unit,
the bridge unit is configured to, in a case that the request that the server unit receives from the application execution unit includes the identification information, output the request to the terminal identified by the identification information, and
the bridge unit is configured to, in a case that the server unit receives a request from the terminal identified by the identification information, output a combination of the request and the identification information to the application execution unit.

**13.** A reception method comprising:

a step of establishing a communication connection with a terminal having a communication function;
a step of receiving a broadcasting signal;
a step of demuliplexing a broadcasting stream from the broadcasting signal received by the broadcast reception unit; and
a step of, in a case that predetermined first information is included in the broadcasting stream demultiplexed, transmitting, by push transmission, second information related to the first information, to the terminal via the connection established.

**14.** A reception method comprising:

a step of receiving a broadcasting signal;
a step of demultiplexing a broadcasting stream from the broadcasting signal received;
a step of acquiring from the broadcasting stream demultiplexed, information concerning an application to be executed;
a step of executing the application indicated by the information acquired;
a step of receiving a request output by executing the application or a request output from a terminal;
a step of establishing a connection with the terminal;
a step of outputting to the terminal via the connection established, the request output by executing the application; and
a step of outputting to the application execution unit, the request output from the terminal.

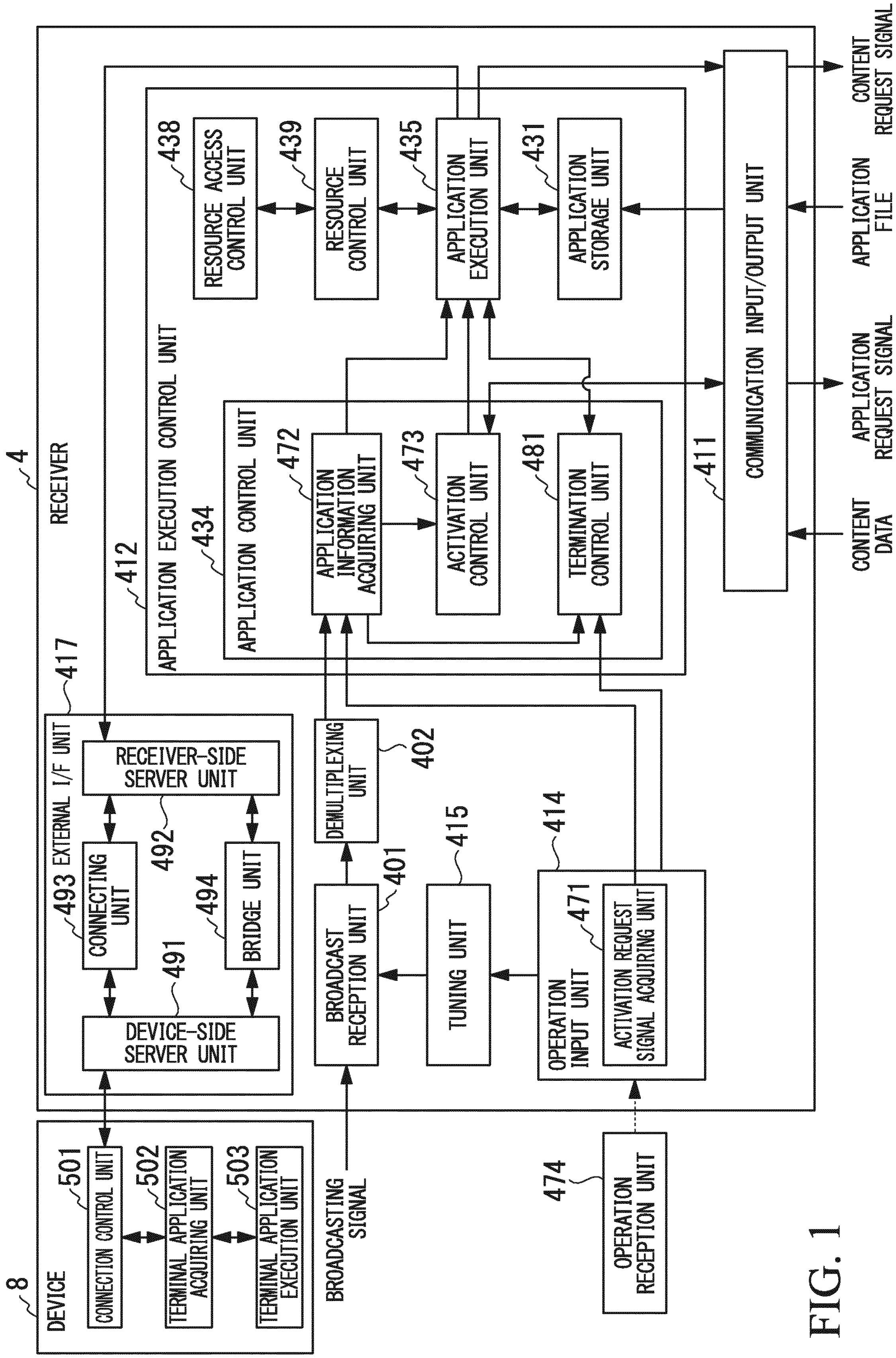
4
RECEIVER
412
APPLICATION EXECUTION CONTROL UNIT
438
RESOURCE ACCESS CONTROL UNIT
439
RESOURCE CONTROL UNIT
435
APPLICATION EXECUTION UNIT
431
APPLICATION STORAGE UNIT
434
APPLICATION CONTROL UNIT
472
APPLICATION INFORMATION ACQUIRING UNIT
473
ACTIVATION CONTROL UNIT
481
TERMINATION CONTROL UNIT
411
COMMUNICATION INPUT/OUTPUT UNIT
CONTENT REQUEST SIGNAL
APPLICATION FILE
APPLICATION REQUEST SIGNAL
CONTENT DATA
417
EXTERNAL I/F UNIT
RECEIVER-SIDE SERVER UNIT
492
493
CONNECTING UNIT
494
BRIDGE UNIT
491
DEVICE-SIDE SERVER UNIT
DEMULTIPLEXING UNIT
402
401
BROADCAST RECEPTION UNIT
415
TUNING UNIT
414
OPERATION INPUT UNIT
471
ACTIVATION REQUEST SIGNAL ACQUIRING UNIT
8
DEVICE
501
CONNECTION CONTROL UNIT
502
TERMINAL APPLICATION ACQUIRING UNIT
503
TERMINAL APPLICATION EXECUTION UNIT
BROADCASTING SIGNAL
474
OPERATION RECEPTION UNIT

FIG. 1

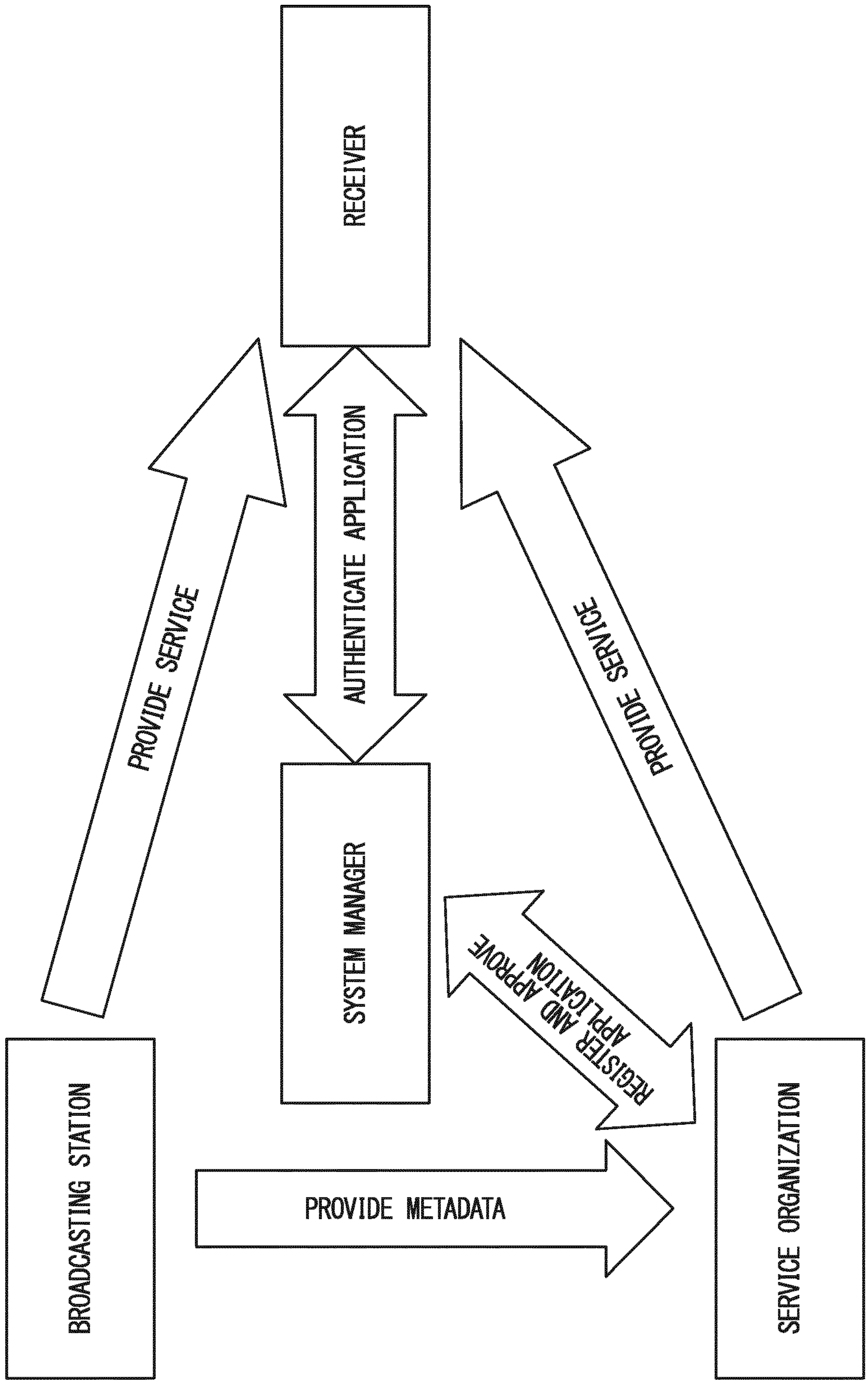
RECEIVER
AUTHENTICATE APPLICATION
PROVIDE SERVICE
PROVIDE SERVICE
SYSTEM MANAGER
REGISTER AND APPROVE APPLICATION
BROADCASTING STATION
PROVIDE METADATA
SERVICE ORGANIZATION

FIG. 2

FIG. 3

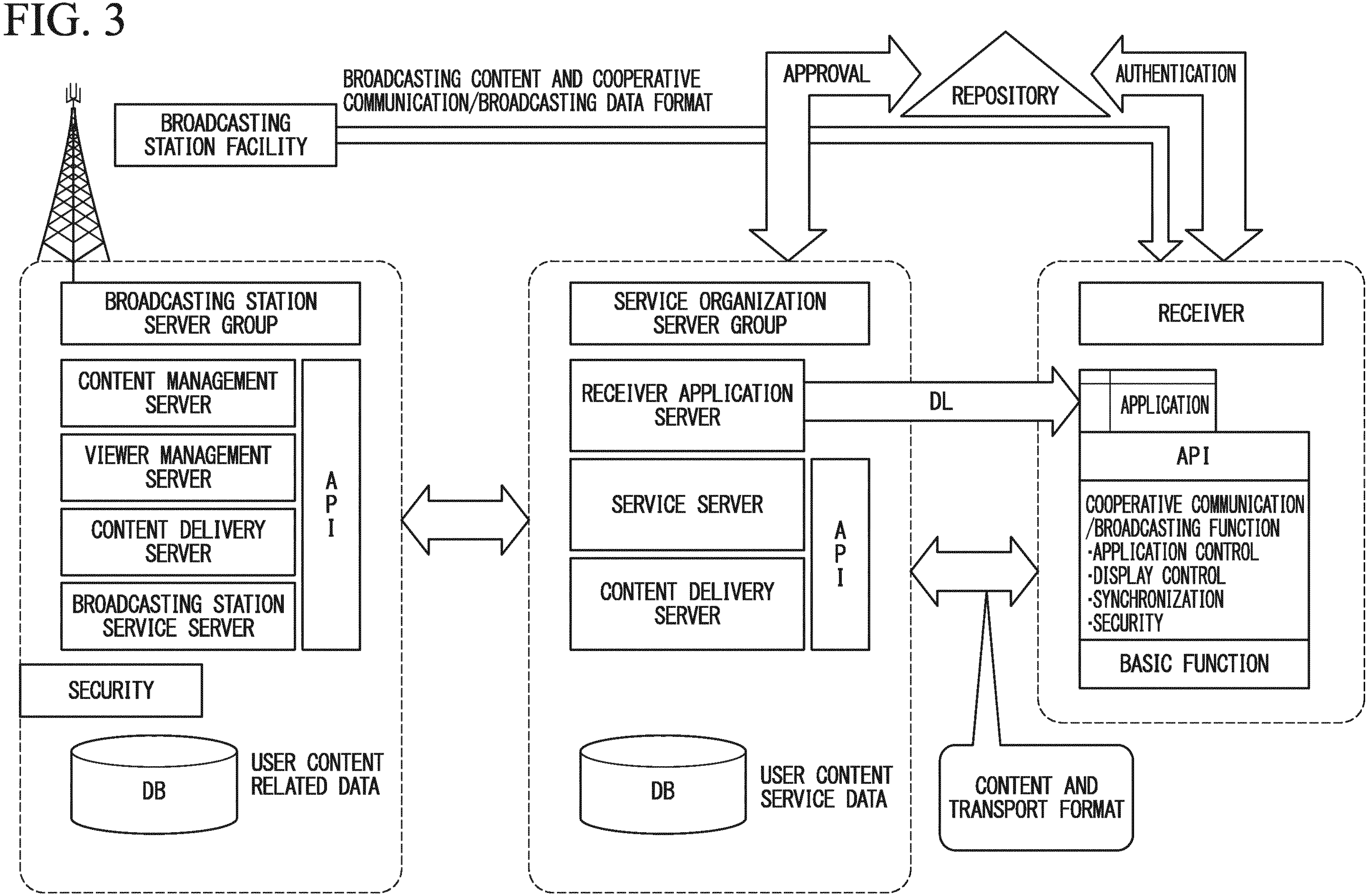
BROADCASTING CONTENT AND COOPERATIVE COMMUNICATION/BROADCASTING DATA FORMAT
BROADCASTING STATION FACILITY
APPROVAL
REPOSITORY
AUTHENTICATION
BROADCASTING STATION SERVER GROUP
CONTENT MANAGEMENT SERVER
VIEWER MANAGEMENT SERVER
CONTENT DELIVERY SERVER
BROADCASTING STATION SERVICE SERVER
API
SECURITY
DB
USER CONTENT RELATED DATA
SERVICE ORGANIZATION SERVER GROUP
RECEIVER APPLICATION SERVER
SERVICE SERVER
CONTENT DELIVERY SERVER
API
DB
USER CONTENT SERVICE DATA
DL
RECEIVER
APPLICATION
API
COOPERATIVE COMMUNICATION /BROADCASTING FUNCTION
·APPLICATION CONTROL
·DISPLAY CONTROL
·SYNCHRONIZATION
·SECURITY
BASIC FUNCTION
CONTENT AND TRANSPORT FORMAT

FIG. 4

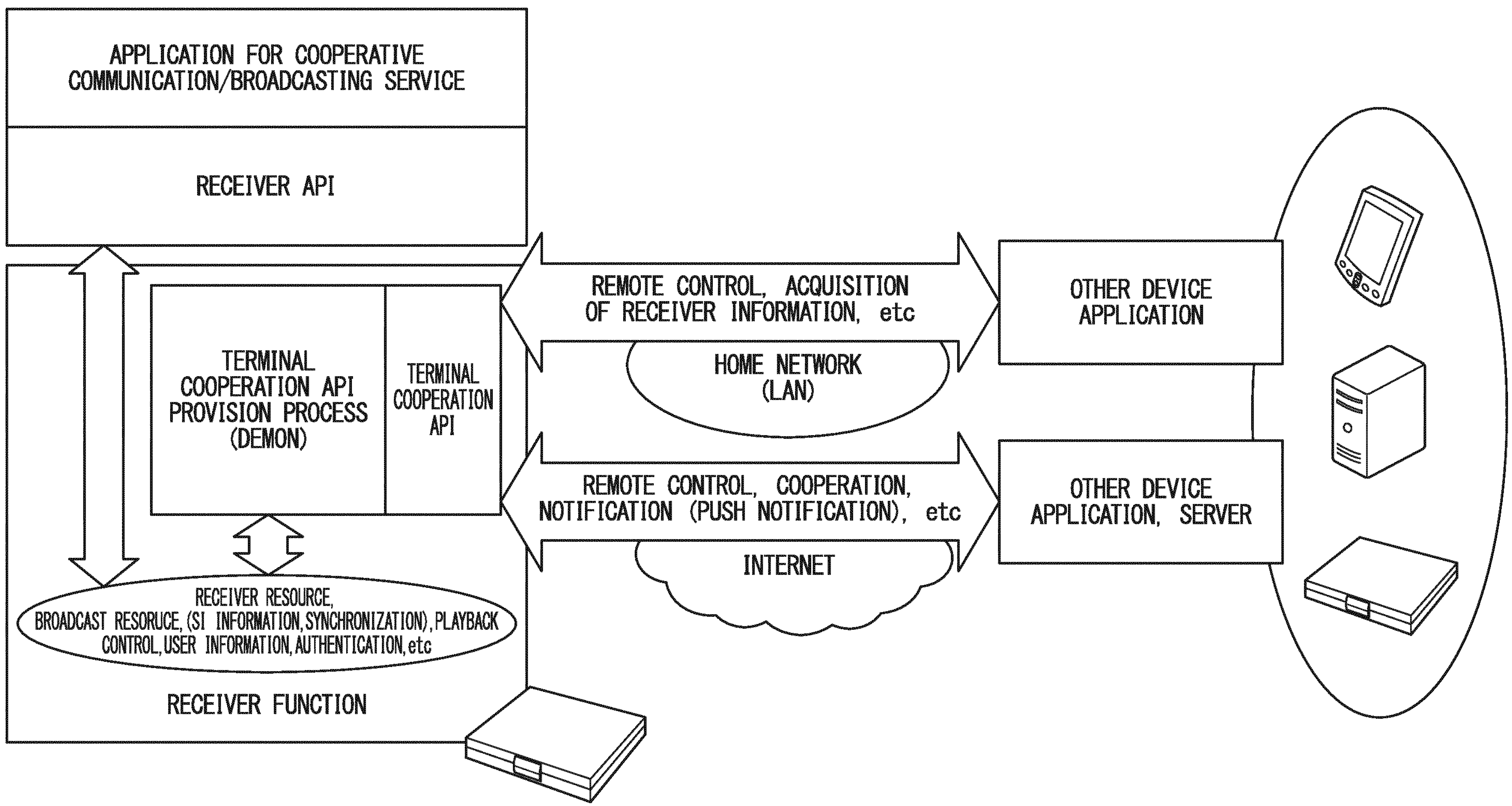
APPLICATION FOR COOPERATIVE COMMUNICATION/BROADCASTING SERVICE
RECEIVER API
TERMINAL COOPERATION API PROVISION PROCESS (DEMON)
TERMINAL COOPERATION API
RECEIVER RESOURCE, BROADCAST RESORUCE, (SI INFORMATION, SYNCHRONIZATION), PLAYBACK CONTROL, USER INFORMATION, AUTHENTICATION, etc
RECEIVER FUNCTION
REMOTE CONTROL, ACQUISITION OF RECEIVER INFORMATION, etc
HOME NETWORK (LAN)
REMOTE CONTROL, COOPERATION, NOTIFICATION (PUSH NOTIFICATION), etc
INTERNET
OTHER DEVICE APPLICATION
OTHER DEVICE APPLICATION, SERVER

FIG. 5

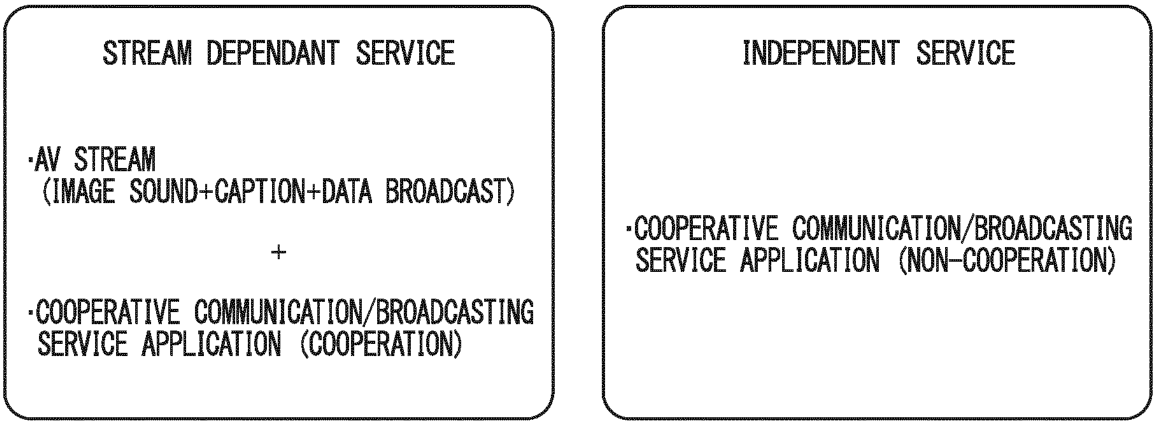
STREAM DEPENDANT SERVICE
·AV STREAM
(IMAGE SOUND+CAPTION+DATA BROADCAST)
+
·COOPERATIVE COMMUNICATION/BROADCASTING SERVICE APPLICATION (COOPERATION)
INDEPENDENT SERVICE
·COOPERATIVE COMMUNICATION/BROADCASTING SERVICE APPLICATION (NON-COOPERATION)

FIG. 6

```
<?xml version="1.0" encoding="utf-8"?>
<mhp:ServiceDiscovery xmlns:mhp="urn:dvb:mhp:2009"
              xmlns:ipi="urn:dvb:metadata:iptv:sdns:1008-1"
              xmlns:mpeg7="urn:tva:mpeg7:2005"
              xmlns:xsi="http://www.w3.org/2001/XMLSchema-instance">
  <mhp:ApplicationDiscovery>
    <mhp:ApplicationList>
      <mhp:Application>
        <mhp:appName ipi:Language="eng">SyncPlayerSample</mhp:appName>
        <mhp:applicationIdentifier>
          <mhp:orgId>100</mhp:orgId>
          <mhp:appId>200</mhp:appId>
        </mhp:applicationIdentifier>
        <mhp:applicationDescriptor>
          <mhp:controlCode mhp:type="ARIB-J">AUTOSTART</mhp:controlCode>
          <mhp:visibility>VISIBLE_ALL</mhp:visibility>
          <mhp:serviceBound>false</mhp:serviceBound>
          <mhp:priority>0</mhp:priority>
          <mhp:version>0</mhp:version>
          <mhp:mhpVersion>
            <mhp:profile>0</mhp:profile>
            <mhp:versionMajor>0</mhp:versionMajor>
            <mhp:versionMinor>0</mhp:versionMinor>
            <mhp:versionMicro>0</mhp:versionMicro>
          </mhp:mhpVersion>
        </mhp:applicationDescriptor>
        <mhp:applicationSpecificDescriptor>
          <mhp:dvbjDescriptor>
            <mhp:location>http://192.168.11.37/SyncDemo.jar</mhp:location>
            <mhp:applicationStructure>
              <mhp:classPathExtension/>
              <mhp:initialClass>demo.SyncPlayerDemo</mhp:initialClass>
            </mhp:applicationStructure>
          </mhp:dvbjDescriptor>
        </mhp:applicationSpecificDescriptor>
      </mhp:Application>
    </mhp:ApplicationList>
  </mhp:ApplicationDiscovery>
</mhp:ServiceDiscovery>
```

FIG. 7

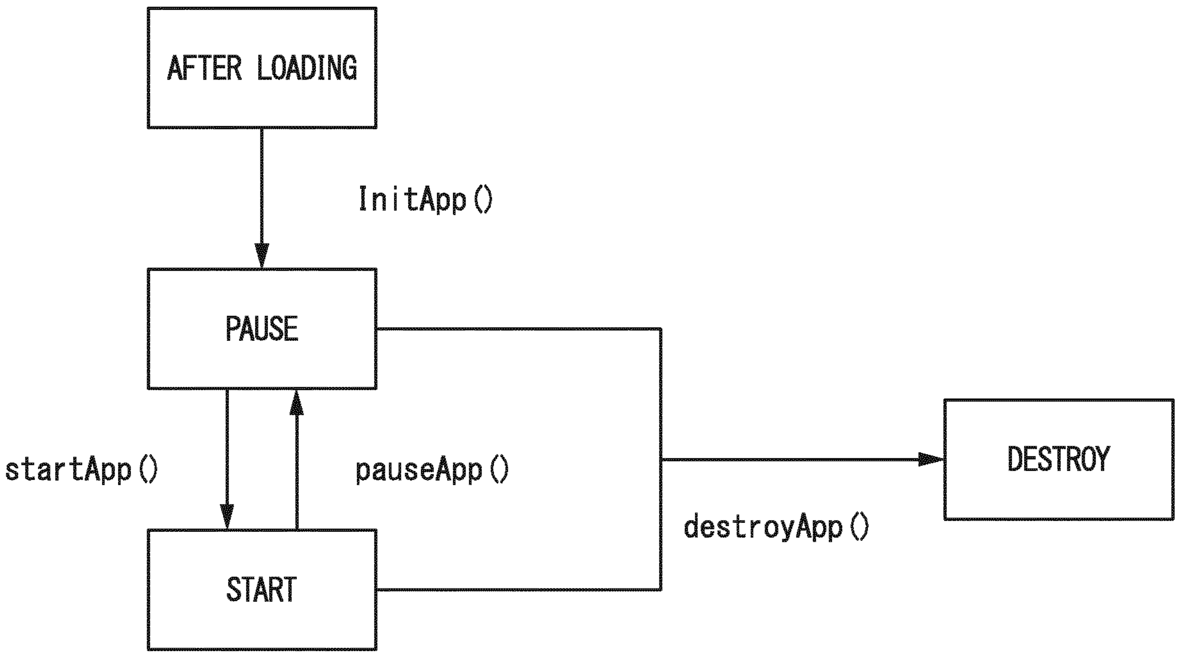
AFTER LOADING
InitApp()
PAUSE
startApp()
pauseApp()
START
destroyApp()
DESTROY

FIG. 8

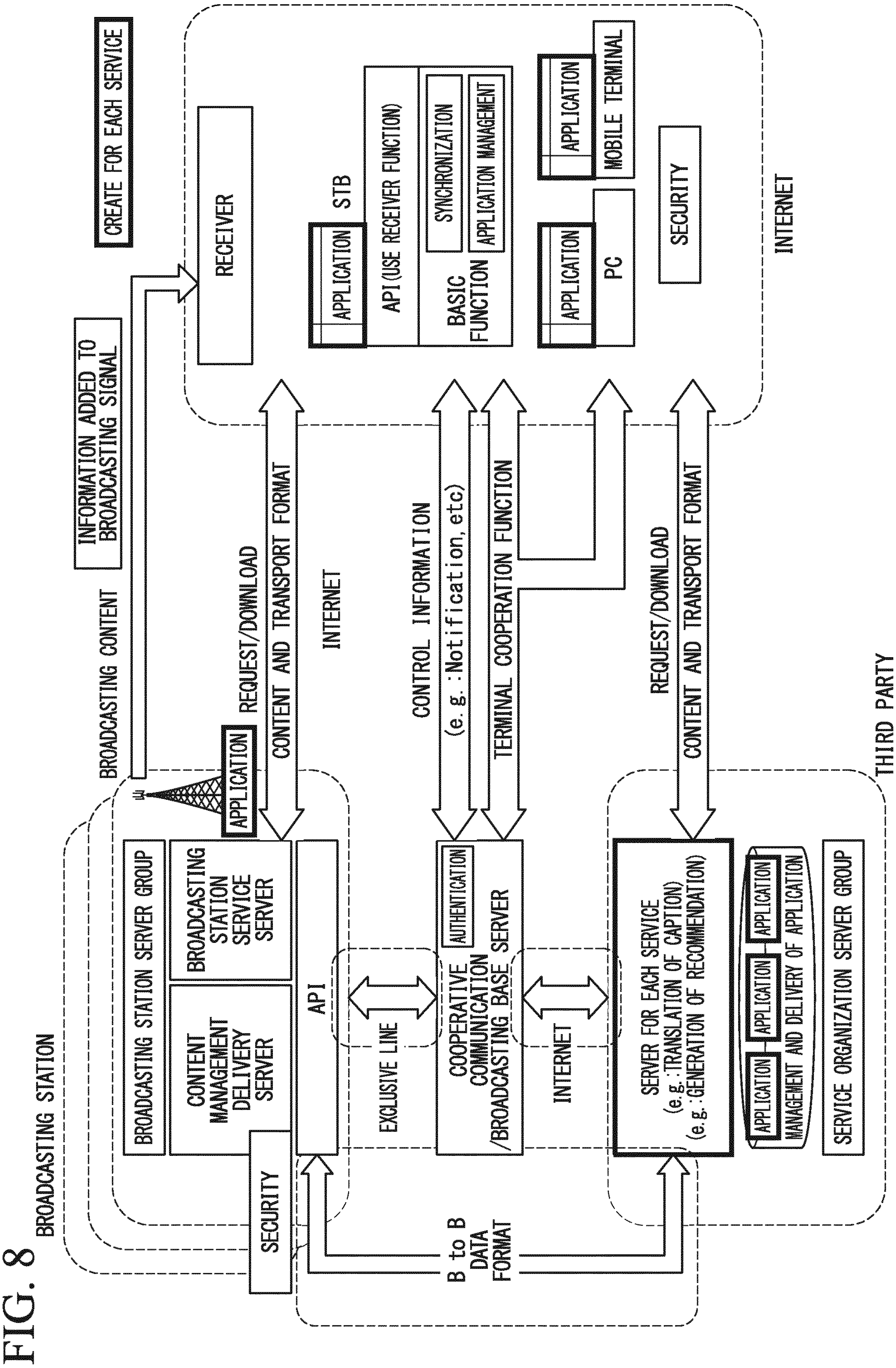
BROADCASTING STATION
BROADCASTING STATION SERVER GROUP
CONTENT MANAGEMENT DELIVERY SERVER
BROADCASTING STATION SERVICE SERVER
API
SECURITY
APPLICATION
BROADCASTING CONTENT
INFORMATION ADDED TO BROADCASTING SIGNAL
CREATE FOR EACH SERVICE
REQUEST/DOWNLOAD
CONTENT AND TRANSPORT FORMAT
INTERNET
CONTROL INFORMATION
(e.g. :Notification, etc)
TERMINAL COOPERATION FUNCTION
EXCLUSIVE LINE
COOPERATIVE COMMUNICATION /BROADCASTING BASE SERVER
AUTHENTICATION
INTERNET
B to B DATA FORMAT
SERVER FOR EACH SERVICE
(e.g.:TRANSLATION OF CAPTION)
(e.g.:GENERATION OF RECOMMENDATION)
APPLICATION
APPLICATION
APPLICATION
MANAGEMENT AND DELIVERY OF APPLICATION
SERVICE ORGANIZATION SERVER GROUP
THIRD PARTY
REQUEST/DOWNLOAD
CONTENT AND TRANSPORT FORMAT
RECEIVER
APPLICATION
STB
API (USE RECEIVER FUNCTION)
BASIC FUNCTION
SYNCHRONIZATION
APPLICATION MANAGEMENT
APPLICATION
PC
APPLICATION
MOBILE TERMINAL
SECURITY
INTERNET

FIG. 9

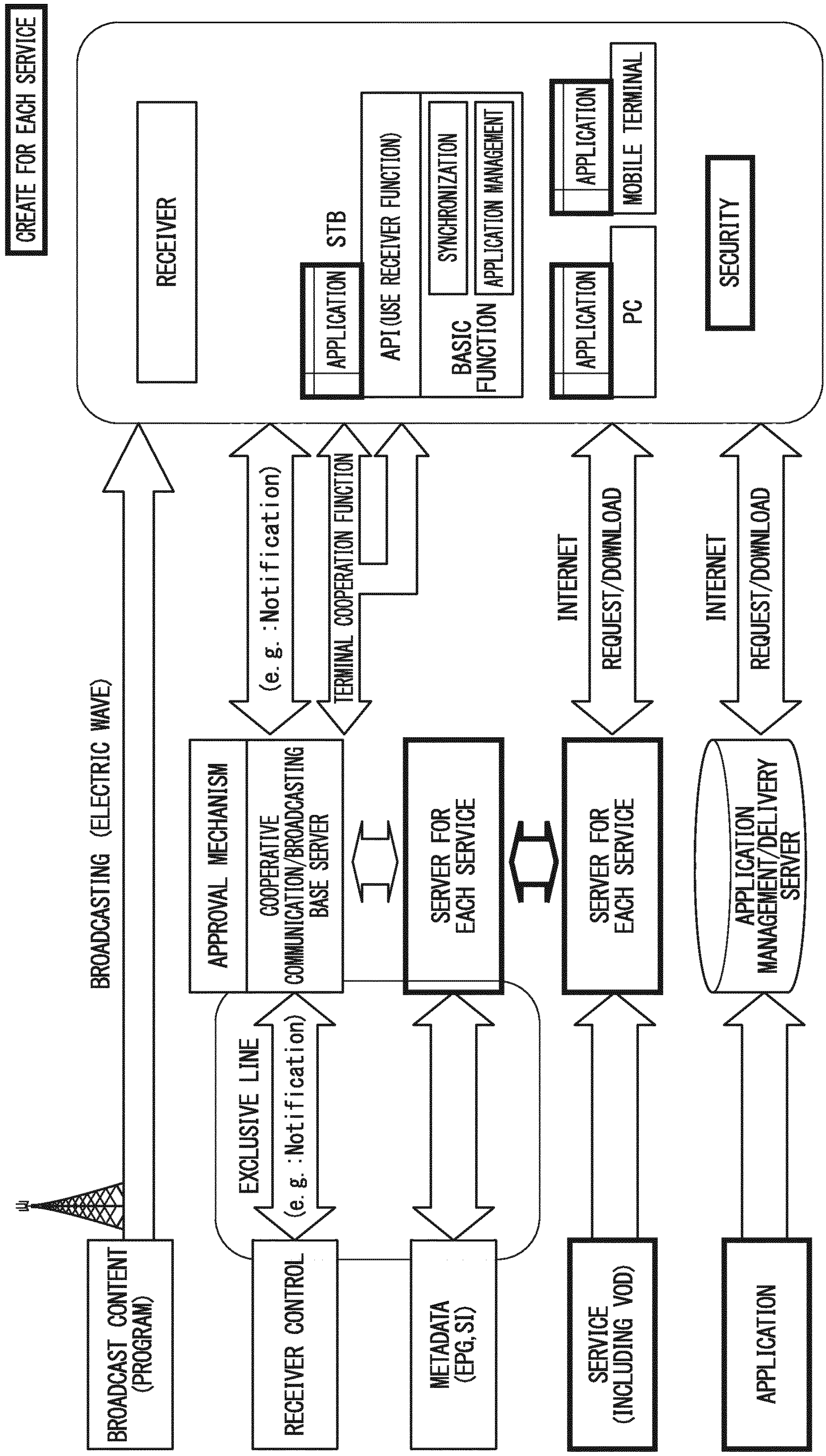

CREATE FOR EACH SERVICE
BROADCAST CONTENT (PROGRAM)
BROADCASTING (ELECTRIC WAVE)
RECEIVER
RECEIVER CONTROL
EXCLUSIVE LINE
(e. g. :Notification)
APPROVAL MECHANISM
COOPERATIVE COMMUNICATION/BROADCASTING BASE SERVER
(e. g. :Notification)
TERMINAL COOPERATION FUNCTION
APPLICATION
STB
API (USE RECEIVER FUNCTION)
BASIC FUNCTION
SYNCHRONIZATION
APPLICATION MANAGEMENT
METADATA (EPG,SI)
SERVER FOR EACH SERVICE
SERVICE (INCLUDING VOD)
SERVER FOR EACH SERVICE
INTERNET
REQUEST/DOWNLOAD
APPLICATION
PC
APPLICATION
MOBILE TERMINAL
APPLICATION
APPLICATION MANAGEMENT/DELIVERY SERVER
INTERNET
REQUEST/DOWNLOAD
SECURITY

FIG. 10

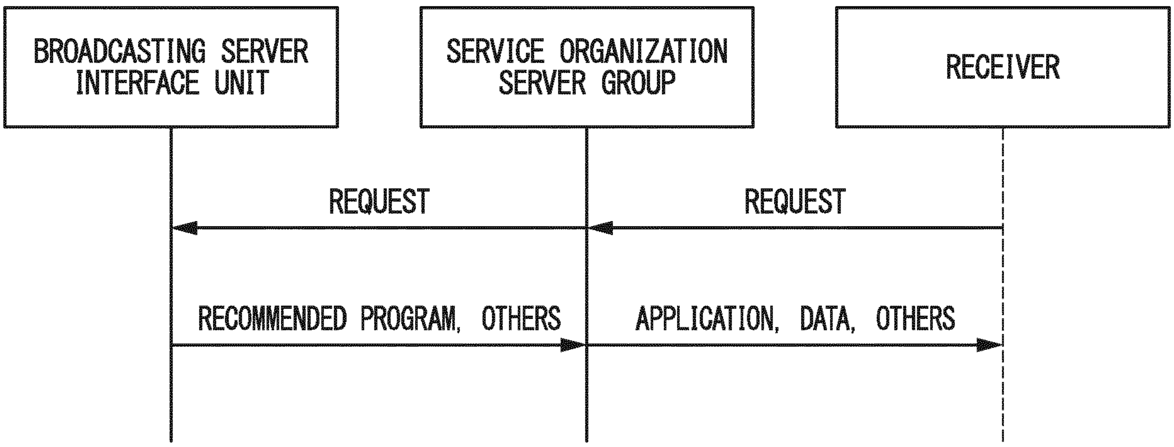
BROADCASTING SERVER INTERFACE UNIT
SERVICE ORGANIZATION SERVER GROUP
RECEIVER
REQUEST
REQUEST
RECOMMENDED PROGRAM, OTHERS
APPLICATION, DATA, OTHERS

FIG. 11

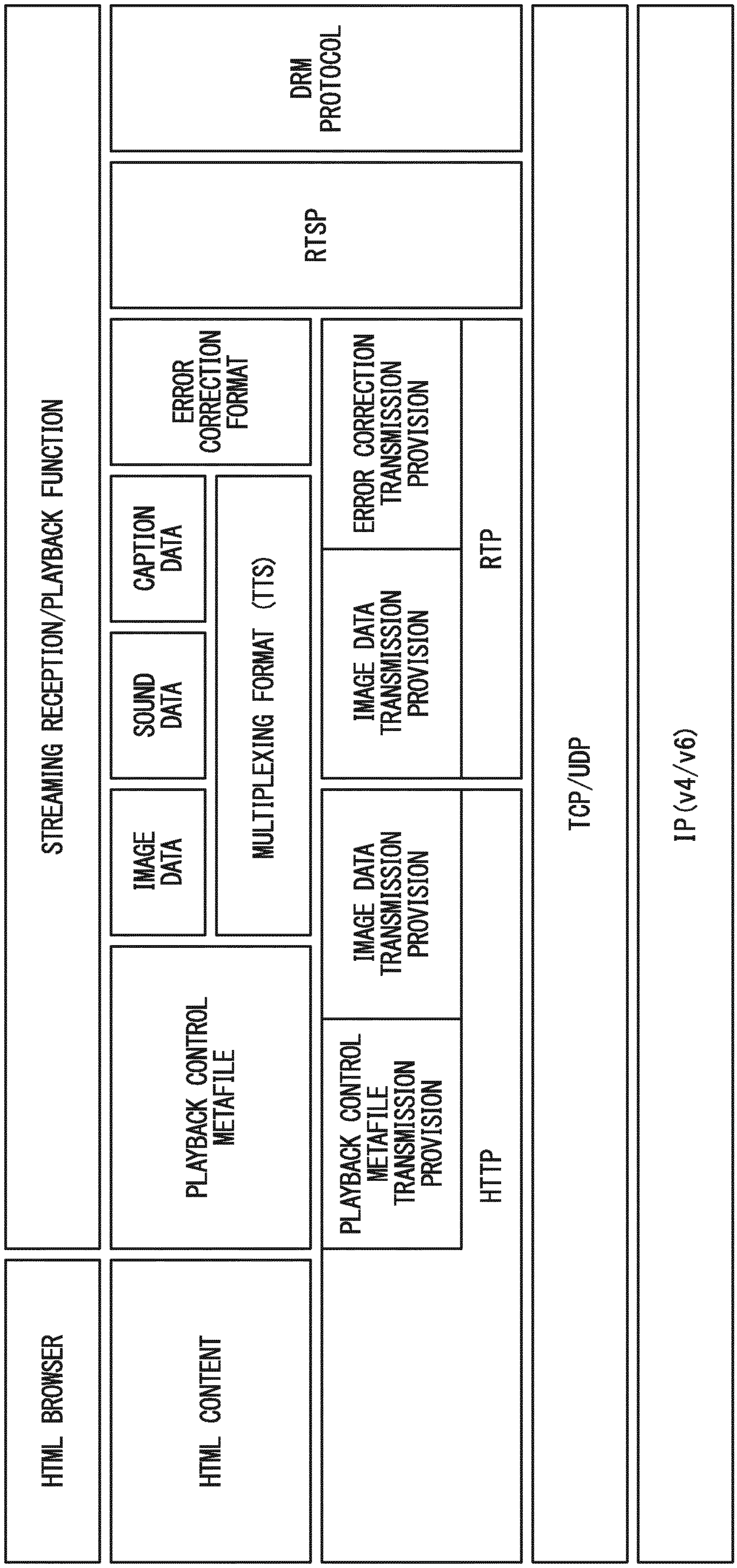
HTML BROWSER
STREAMING RECEPTION/PLAYBACK FUNCTION
HTML CONTENT
PLAYBACK CONTROL METAFILE
IMAGE DATA
SOUND DATA
CAPTION DATA
MULTIPLEXING FORMAT (TTS)
ERROR CORRECTION FORMAT
RTSP
DRM PROTOCOL
PLAYBACK CONTROL METAFILE TRANSMISSION PROVISION
IMAGE DATA TRANSMISSION PROVISION
HTTP
IMAGE DATA TRANSMISSION PROVISION
ERROR CORRECTION TRANSMISSION PROVISION
RTP
TCP/UDP
IP (v4/v6)

FIG. 12

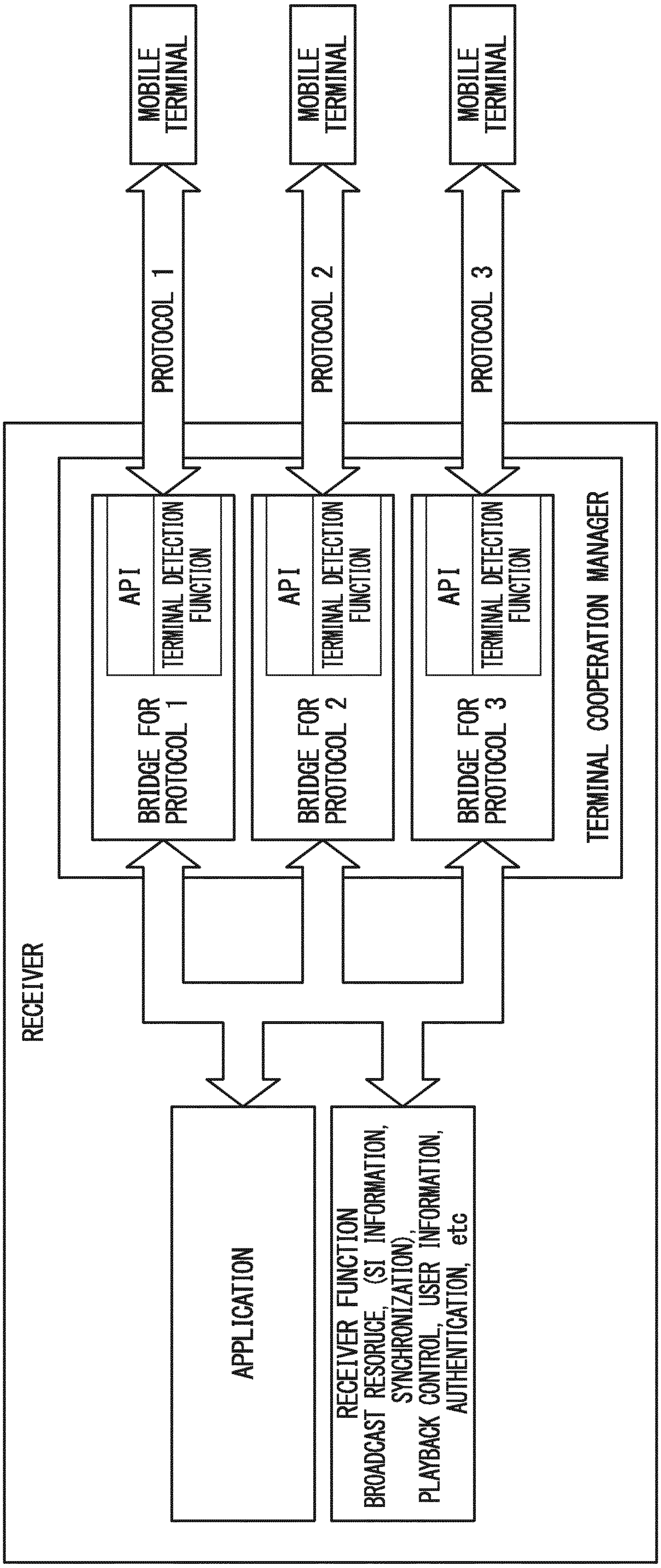
MOBILE TERMINAL
MOBILE TERMINAL
MOBILE TERMINAL
PROTOCOL 1
PROTOCOL 2
PROTOCOL 3
API
TERMINAL DETECTION FUNCTION
BRIDGE FOR PROTOCOL 1
API
TERMINAL DETECTION FUNCTION
BRIDGE FOR PROTOCOL 2
API
TERMINAL DETECTION FUNCTION
BRIDGE FOR PROTOCOL 3
TERMINAL COOPERATION MANAGER
RECEIVER
APPLICATION
RECEIVER FUNCTION
BROADCAST RESORUCE, (SI INFORMATION, SYNCHRONIZATION),
PLAYBACK CONTROL, USER INFORMATION, AUTHENTICATION, etc

FIG. 13

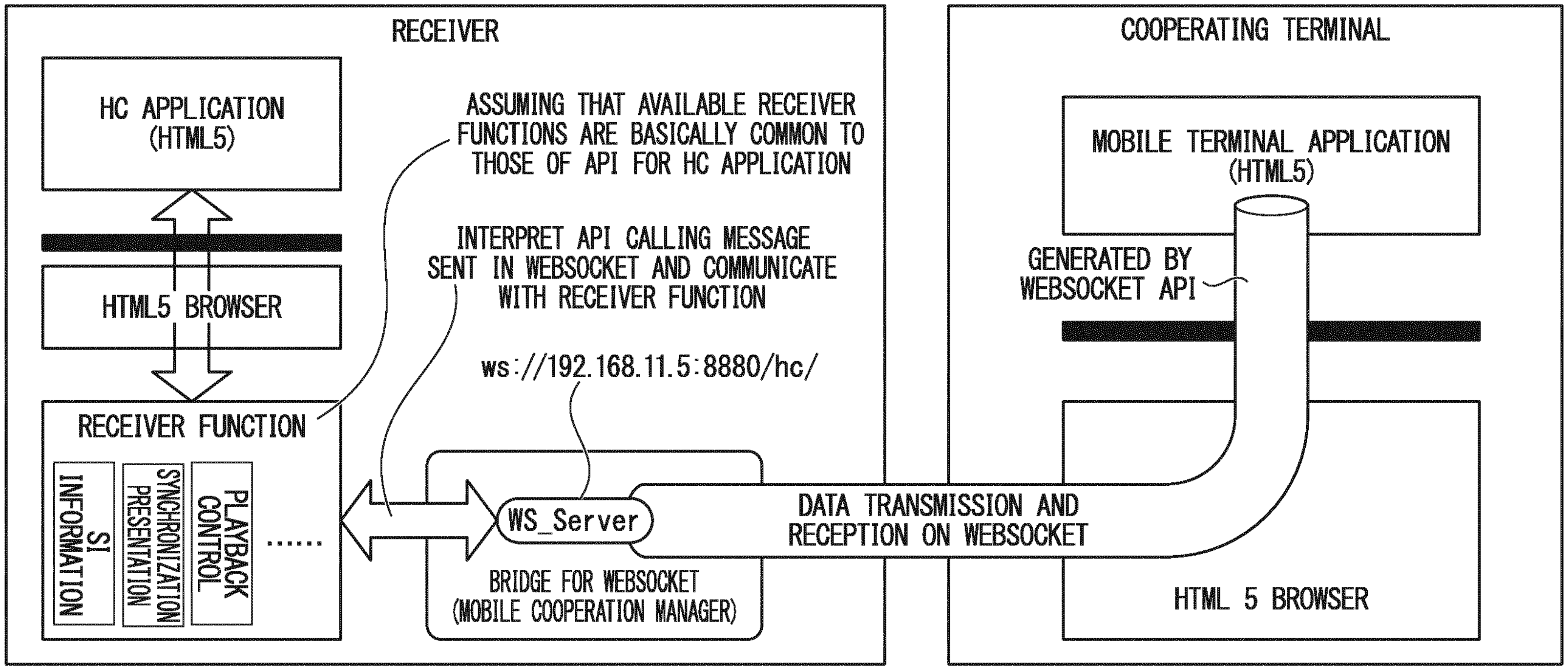
RECEIVER
HC APPLICATION (HTML5)
HTML5 BROWSER
RECEIVER FUNCTION
SI INFORMATION
SYNCHRONIZATION PRESENTATION
PLAYBACK CONTROL
......
ASSUMING THAT AVAILABLE RECEIVER FUNCTIONS ARE BASICALLY COMMON TO THOSE OF API FOR HC APPLICATION
INTERPRET API CALLING MESSAGE SENT IN WEBSOCKET AND COMMUNICATE WITH RECEIVER FUNCTION
ws://192.168.11.5:8880/hc/
WS_Server
BRIDGE FOR WEBSOCKET (MOBILE COOPERATION MANAGER)
DATA TRANSMISSION AND RECEPTION ON WEBSOCKET
COOPERATING TERMINAL
MOBILE TERMINAL APPLICATION (HTML5)
GENERATED BY WEBSOCKET API
HTML 5 BROWSER

FIG. 14

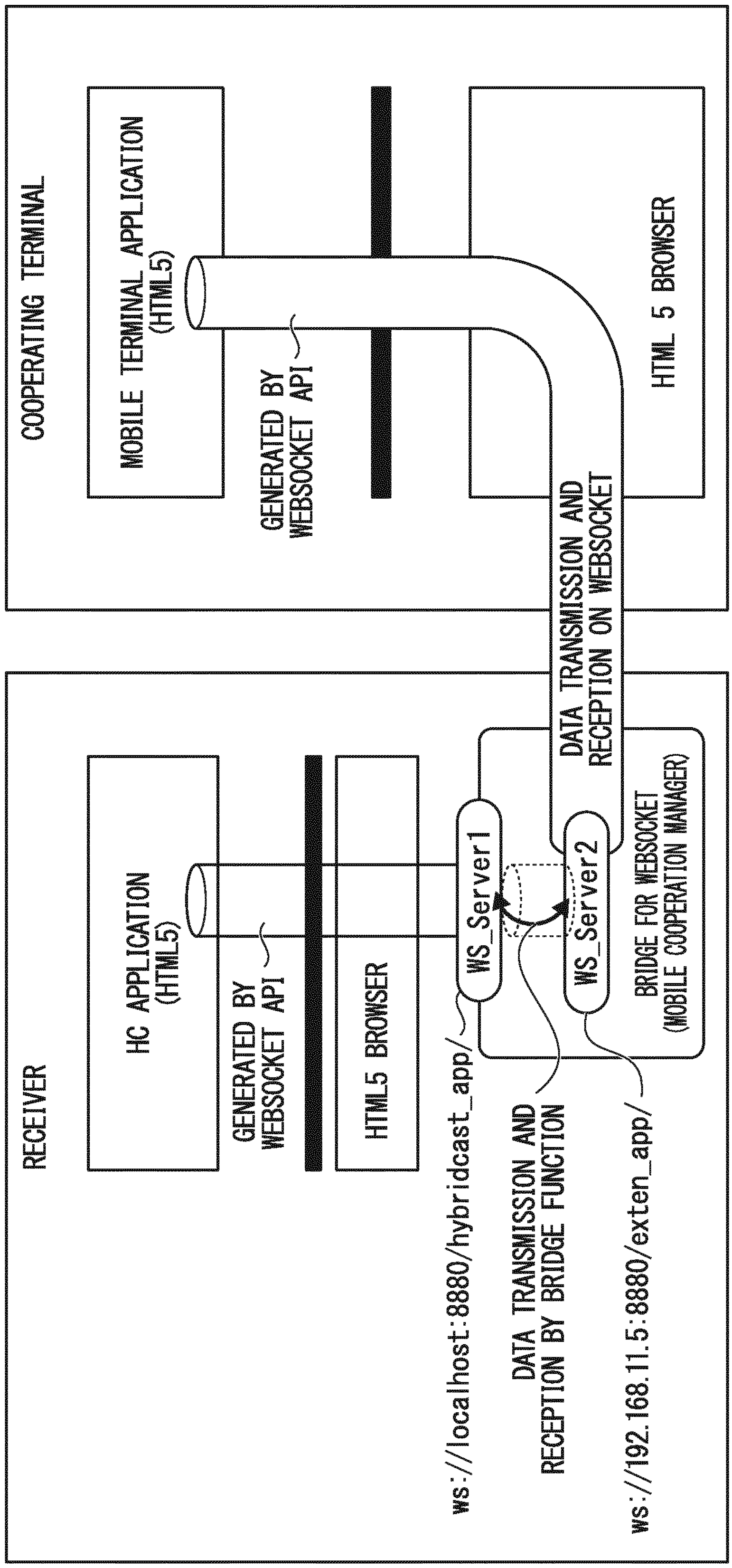
COOPERATING TERMINAL
MOBILE TERMINAL APPLICATION (HTML5)
GENERATED BY WEBSOCKET API
HTML 5 BROWSER
DATA TRANSMISSION AND RECEPTION ON WEBSOCKET
RECEIVER
HC APPLICATION (HTML5)
GENERATED BY WEBSOCKET API
HTML5 BROWSER
WS_Server1
WS_Server2
BRIDGE FOR WEBSOCKET (MOBILE COOPERATION MANAGER)
ws://localhost:8880/hybridcast_app/
DATA TRANSMISSION AND RECEPTION BY BRIDGE FUNCTION
ws://192.168.11.5:8880/exten_app/

FIG. 15

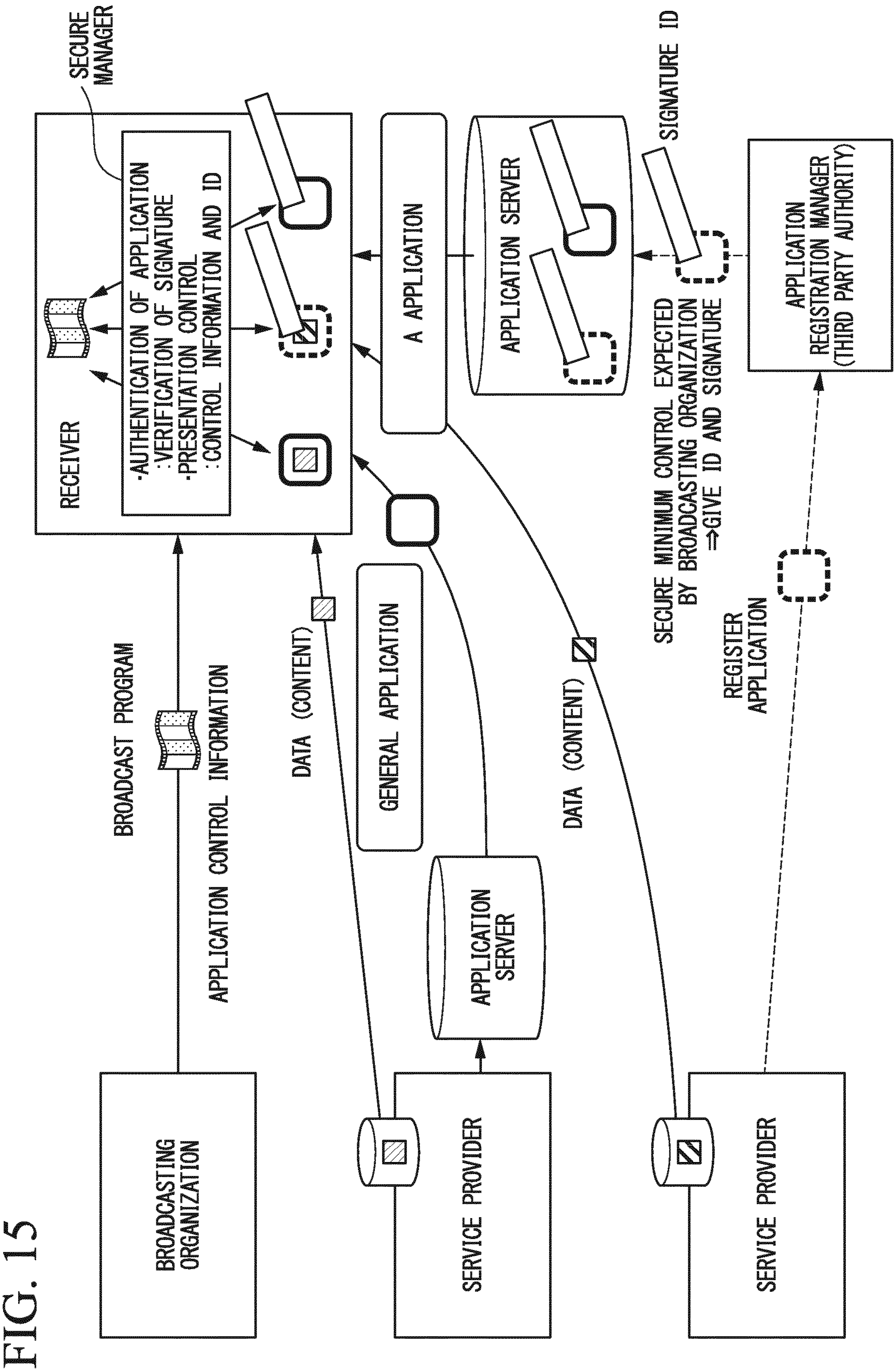
BROADCASTING ORGANIZATION
SERVICE PROVIDER
SERVICE PROVIDER
BROADCAST PROGRAM
APPLICATION CONTROL INFORMATION
DATA (CONTENT)
GENERAL APPLICATION
APPLICATION SERVER
DATA (CONTENT)
REGISTER APPLICATION
RECEIVER
SECURE MANAGER
·AUTHENTICATION OF APPLICATION
:VERIFICATION OF SIGNATURE
·PRESENTATION CONTROL
:CONTROL INFORMATION AND ID
A APPLICATION
APPLICATION SERVER
SIGNATURE ID
SECURE MINIMUM CONTROL EXPECTED BY BROADCASTING ORGANIZATION
⇒GIVE ID AND SIGNATURE
APPLICATION REGISTRATION MANAGER (THIRD PARTY AUTHORITY)

FIG. 16

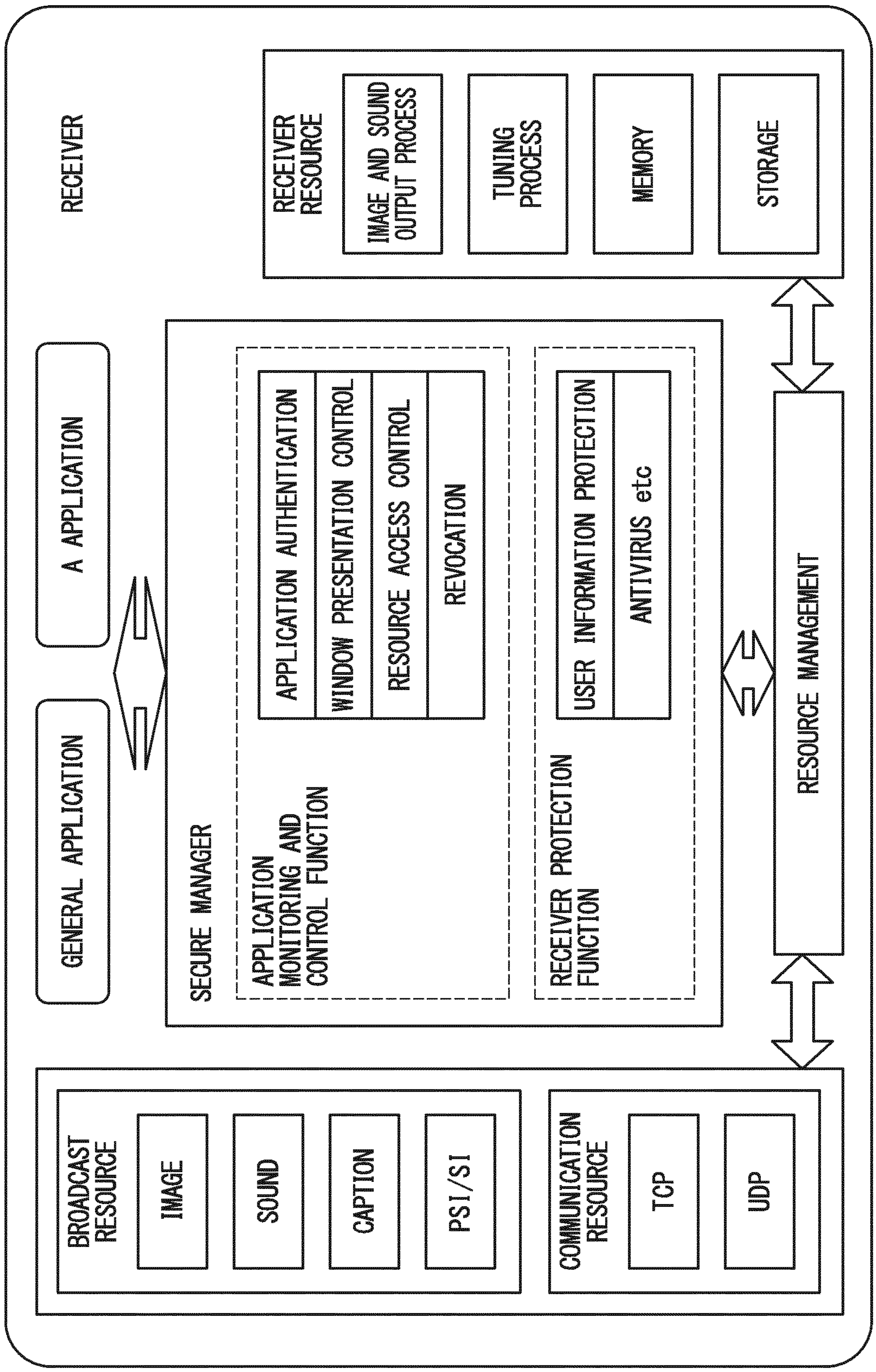
RECEIVER
GENERAL APPLICATION
A APPLICATION
SECURE MANAGER
APPLICATION MONITORING AND CONTROL FUNCTION
APPLICATION AUTHENTICATION
WINDOW PRESENTATION CONTROL
RESOURCE ACCESS CONTROL
REVOCATION
RECEIVER PROTECTION FUNCTION
USER INFORMATION PROTECTION
ANTIVIRUS etc
RESOURCE MANAGEMENT
RECEIVER RESOURCE
IMAGE AND SOUND OUTPUT PROCESS
TUNING PROCESS
MEMORY
STORAGE
BROADCAST RESOURCE
IMAGE
SOUND
CAPTION
PSI/SI
COMMUNICATION RESOURCE
TCP
UDP

# FIG. 17

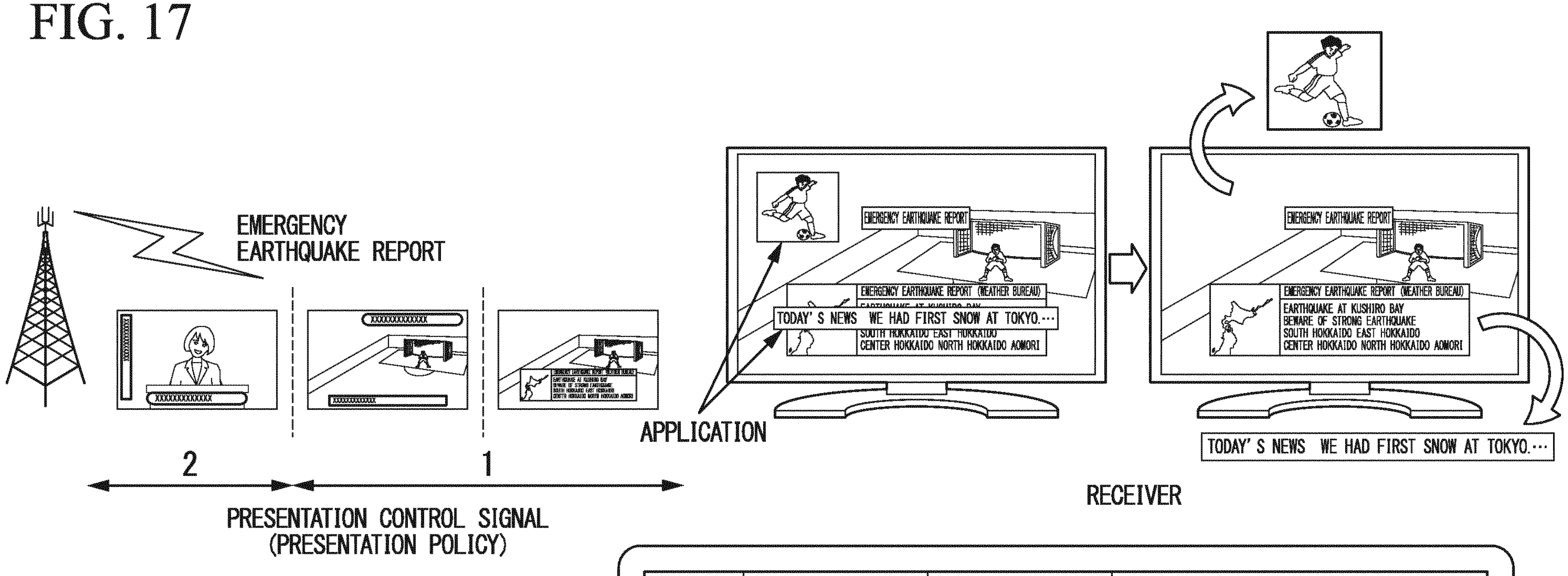


| POLICY LEVEL | SIMULTANEOUS DISPLAY | | Overlay | | SCHEDULED EVENT,PROGRAM (EXAMPLE) |
|---|---|---|---|---|---|
| | BROADCASTING | COMMUNICATION | BROADCASTING | COMMUNICATION | |
| 4 | × | × | × | × | EMERGENCY ALERT BROADCAST, EMERGENCY EARTHQUAKE REPORT |
| 3 | ○ | ○ | × | × | BREAKING NEWS, CAMPAIGN BROACAST, ELECTION BROADCAST |
| 2 | ○ | ○ | ○ | × | NEWS |
| 1 | ○ | ○ | ○ | ○ | OTHERS (SPORTS, VARIERY, etc) |

PRESENTATION RULE

FIG. 18

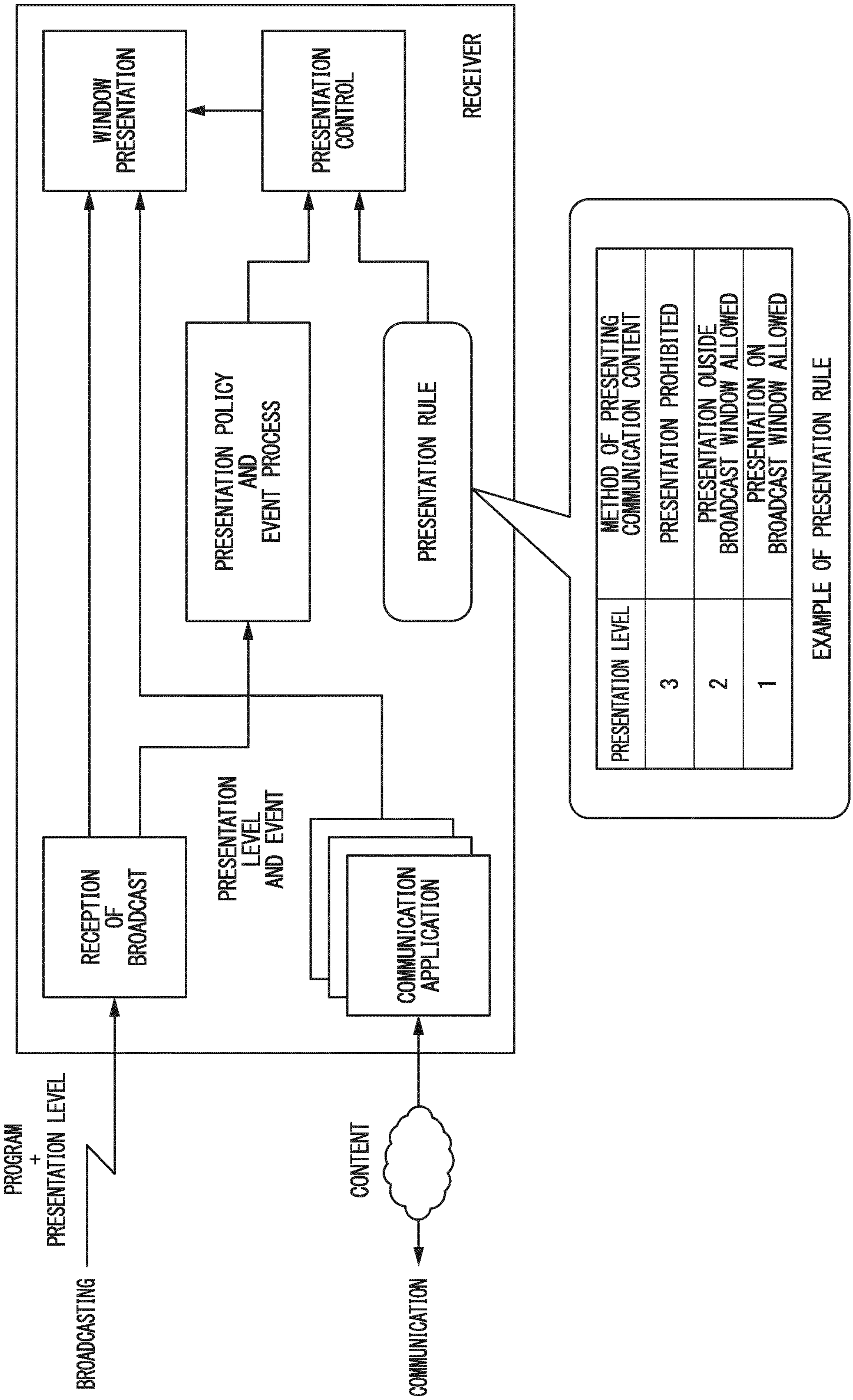
BROADCASTING
PROGRAM + PRESENTATION LEVEL
COMMUNICATION
CONTENT
RECEIVER
RECEPTION OF BROADCAST
COMMUNICATION APPLICATION
PRESENTATION LEVEL AND EVENT
PRESENTATION POLICY AND EVENT PROCESS
PRESENTATION RULE
WINDOW PRESENTATION
PRESENTATION CONTROL
PRESENTATION LEVEL
METHOD OF PRESENTING COMMUNICATION CONTENT
3
PRESENTATION PROHIBITED
2
PRESENTATION OUSIDE BROADCAST WINDOW ALLOWED
1
PRESENTATION ON BROADCAST WINDOW ALLOWED
EXAMPLE OF PRESENTATION RULE

FIG. 19

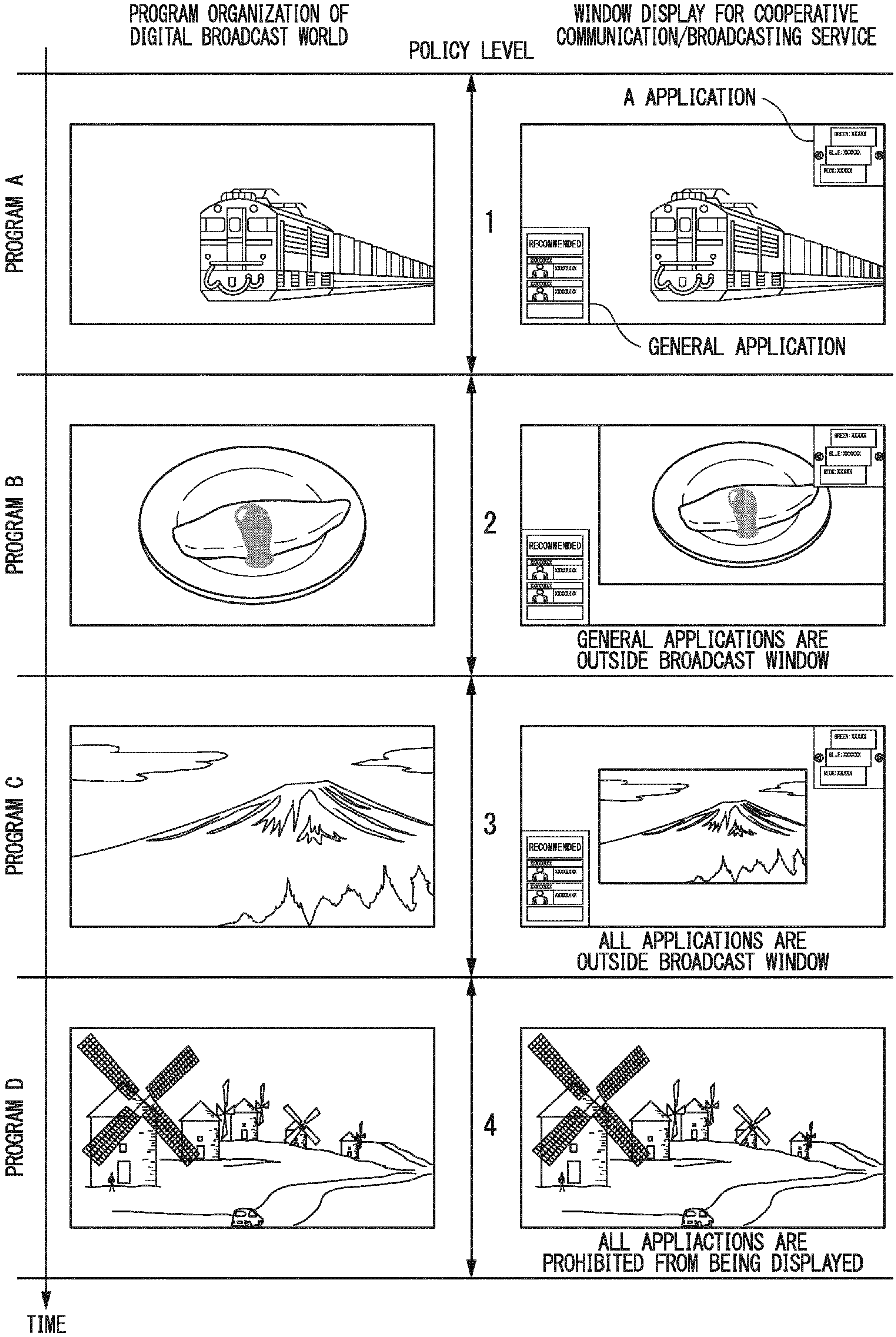
PROGRAM ORGANIZATION OF DIGITAL BROADCAST WORLD
POLICY LEVEL
WINDOW DISPLAY FOR COOPERATIVE COMMUNICATION/BROADCASTING SERVICE
PROGRAM A
1
A APPLICATION
RECOMMENDED
GENERAL APPLICATION
PROGRAM B
2
GENERAL APPLICATIONS ARE OUTSIDE BROADCAST WINDOW
PROGRAM C
3
ALL APPLICATIONS ARE OUTSIDE BROADCAST WINDOW
PROGRAM D
4
ALL APPLIACTIONS ARE PROHIBITED FROM BEING DISPLAYED
TIME

FIG. 20

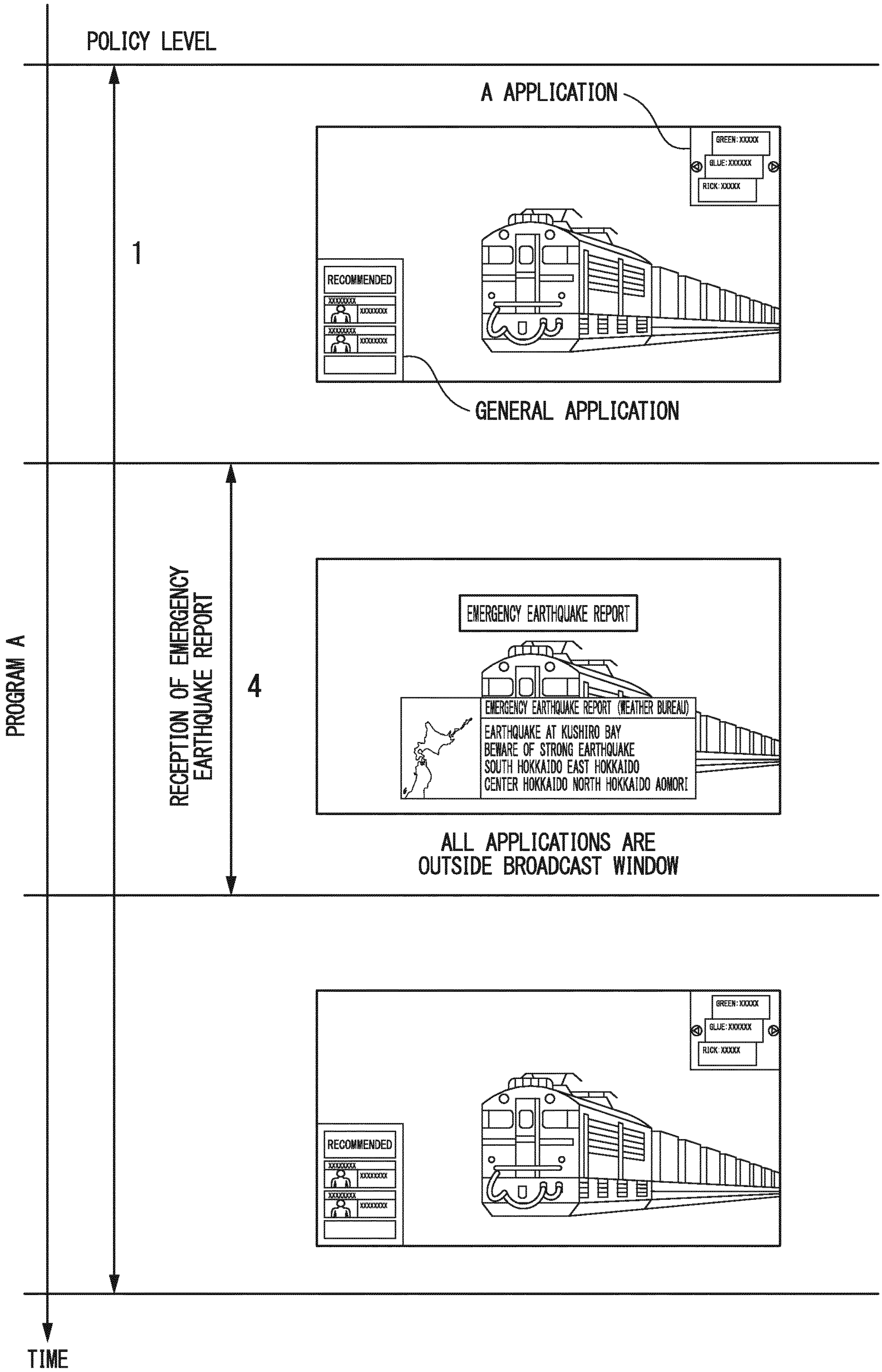
POLICY LEVEL
A APPLICATION
1
RECOMMENDED
GENERAL APPLICATION
PROGRAM A
RECEPTION OF EMERGENCY EARTHQUAKE REPORT
4
EMERGENCY EARTHQUAKE REPORT
EMERGENCY EARTHQUAKE REPORT (WEATHER BUREAU)
EARTHQUAKE AT KUSHIRO BAY
BEWARE OF STRONG EARTHQUAKE
SOUTH HOKKAIDO EAST HOKKAIDO
CENTER HOKKAIDO NORTH HOKKAIDO AOMORI
ALL APPLICATIONS ARE OUTSIDE BROADCAST WINDOW
RECOMMENDED
TIME

FIG. 21

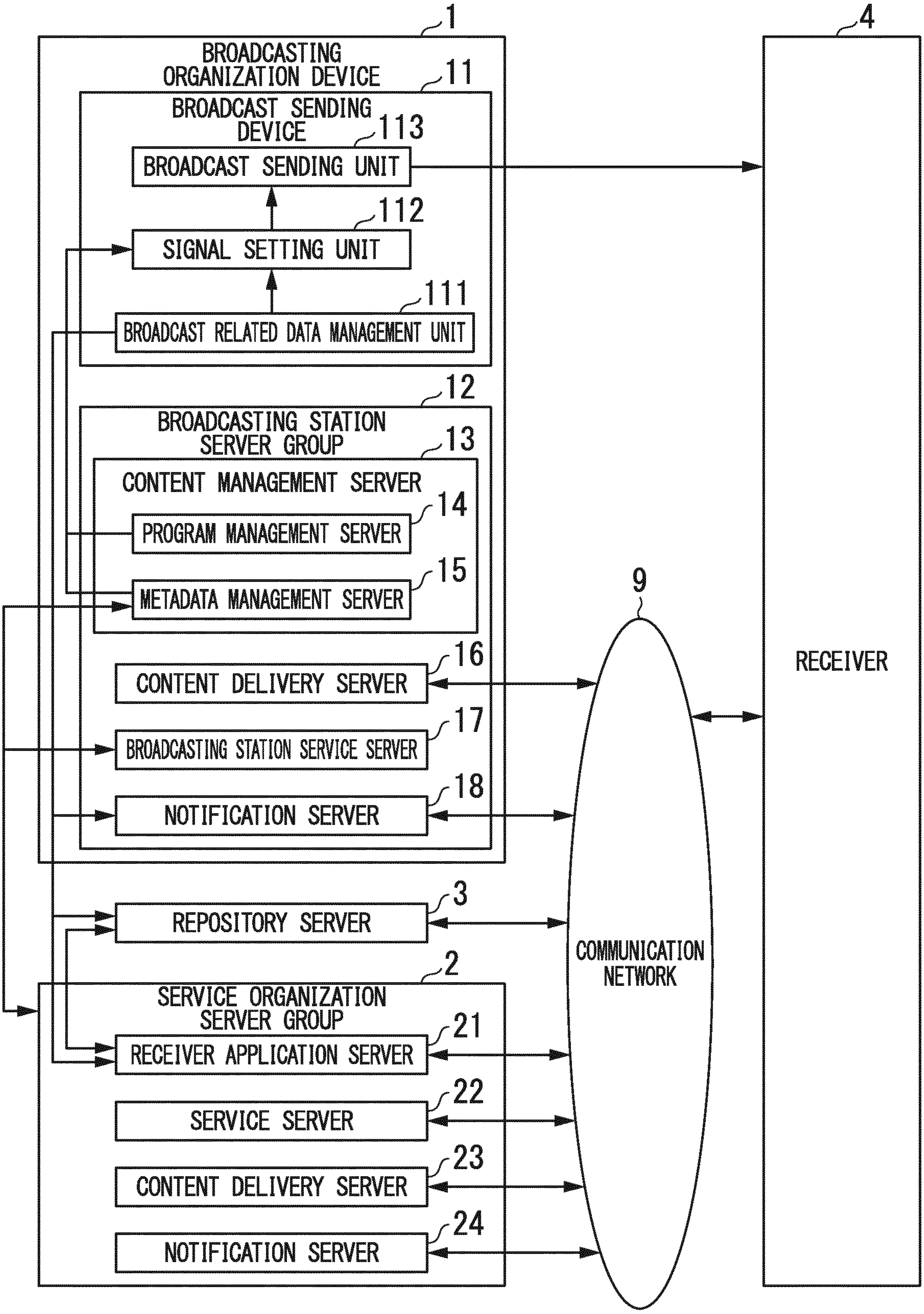
1
BROADCASTING ORGANIZATION DEVICE
11
BROADCAST SENDING DEVICE
113
BROADCAST SENDING UNIT
112
SIGNAL SETTING UNIT
111
BROADCAST RELATED DATA MANAGEMENT UNIT
12
BROADCASTING STATION SERVER GROUP
13
CONTENT MANAGEMENT SERVER
14
PROGRAM MANAGEMENT SERVER
15
METADATA MANAGEMENT SERVER
16
CONTENT DELIVERY SERVER
17
BROADCASTING STATION SERVICE SERVER
18
NOTIFICATION SERVER
3
REPOSITORY SERVER
2
SERVICE ORGANIZATION SERVER GROUP
21
RECEIVER APPLICATION SERVER
22
SERVICE SERVER
23
CONTENT DELIVERY SERVER
24
NOTIFICATION SERVER
9
COMMUNICATION NETWORK
4
RECEIVER

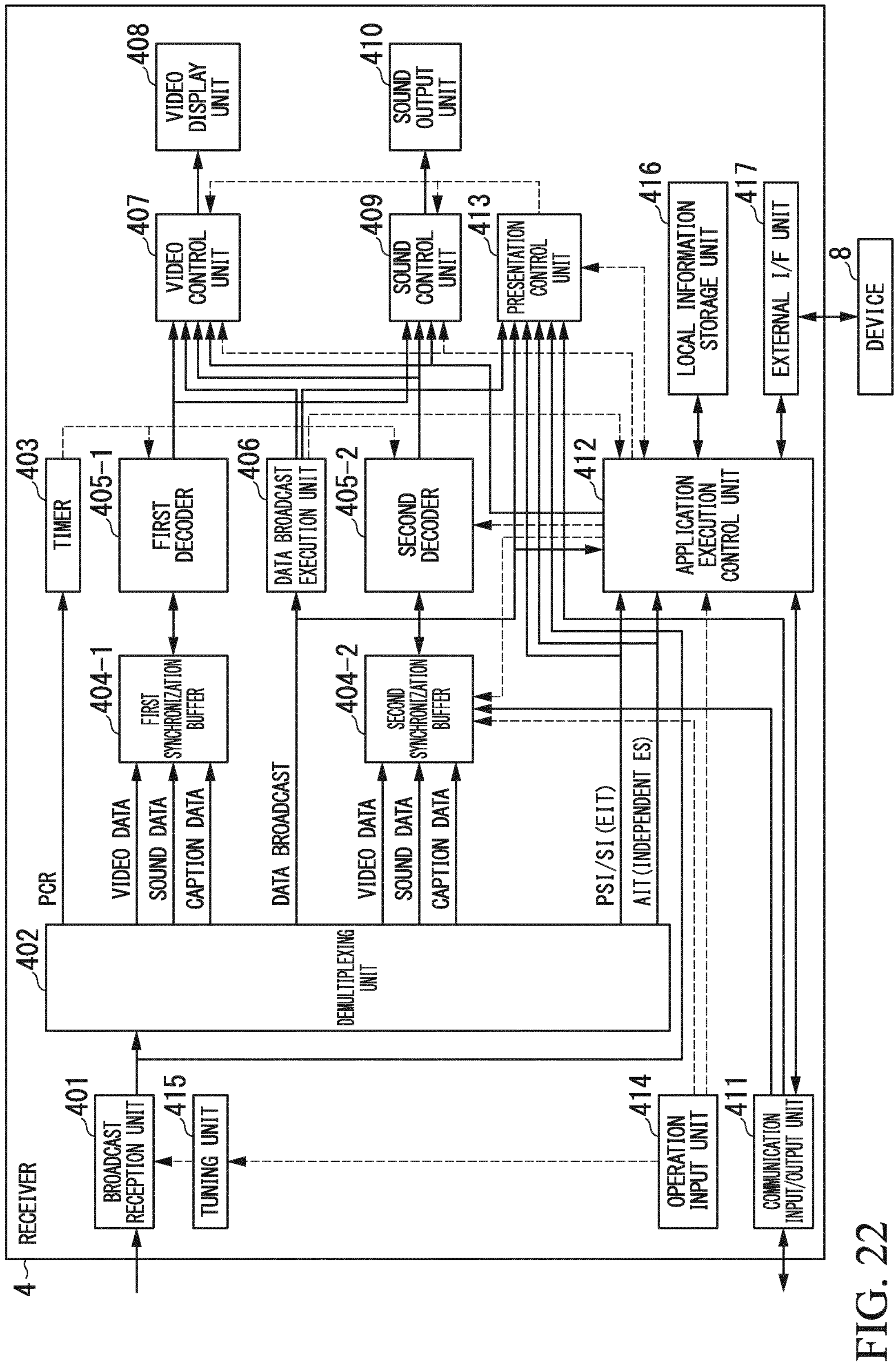
4
RECEIVER
401
BROADCAST RECEPTION UNIT
415
TUNING UNIT
402
DEMULTIPLEXING UNIT
PCR
VIDEO DATA
SOUND DATA
CAPTION DATA
DATA BROADCAST
VIDEO DATA
SOUND DATA
CAPTION DATA
PSI/SI(EIT)
AIT(INDEPENDENT ES)
403
TIMER
404-1
FIRST SYNCHRONIZATION BUFFER
405-1
FIRST DECODER
406
DATA BROADCAST EXECUTION UNIT
404-2
SECOND SYNCHRONIZATION BUFFER
405-2
SECOND DECODER
407
VIDEO CONTROL UNIT
408
VIDEO DISPLAY UNIT
409
SOUND CONTROL UNIT
410
SOUND OUTPUT UNIT
413
PRESENTATION CONTROL UNIT
412
APPLICATION EXECUTION CONTROL UNIT
416
LOCAL INFORMATION STORAGE UNIT
417
EXTERNAL I/F UNIT
8
DEVICE
414
OPERATION INPUT UNIT
411
COMMUNICATION INPUT/OUTPUT UNIT

FIG. 22

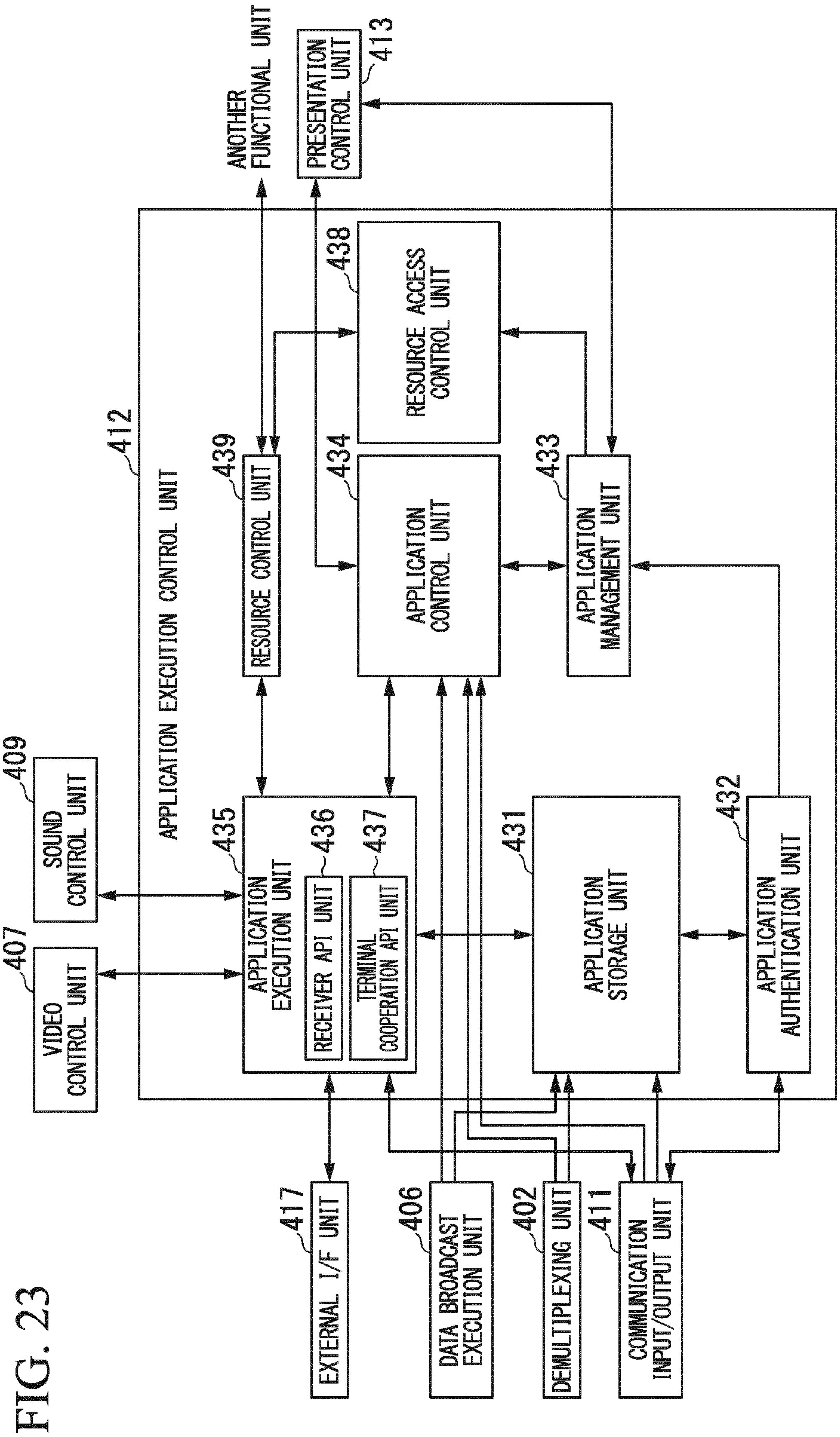
ANOTHER FUNCTIONAL UNIT
PRESENTATION CONTROL UNIT
413
412
APPLICATION EXECUTION CONTROL UNIT
438
RESOURCE ACCESS CONTROL UNIT
439
RESOURCE CONTROL UNIT
434
APPLICATION CONTROL UNIT
433
APPLICATION MANAGEMENT UNIT
409
SOUND CONTROL UNIT
407
VIDEO CONTROL UNIT
435
APPLICATION EXECUTION UNIT
436
RECEIVER API UNIT
437
TERMINAL COOPERATION API UNIT
431
APPLICATION STORAGE UNIT
432
APPLICATION AUTHENTICATION UNIT
417
EXTERNAL I/F UNIT
406
DATA BROADCAST EXECUTION UNIT
402
DEMULTIPLEXING UNIT
411
COMMUNICATION INPUT/OUTPUT UNIT

FIG. 23

FIG. 24

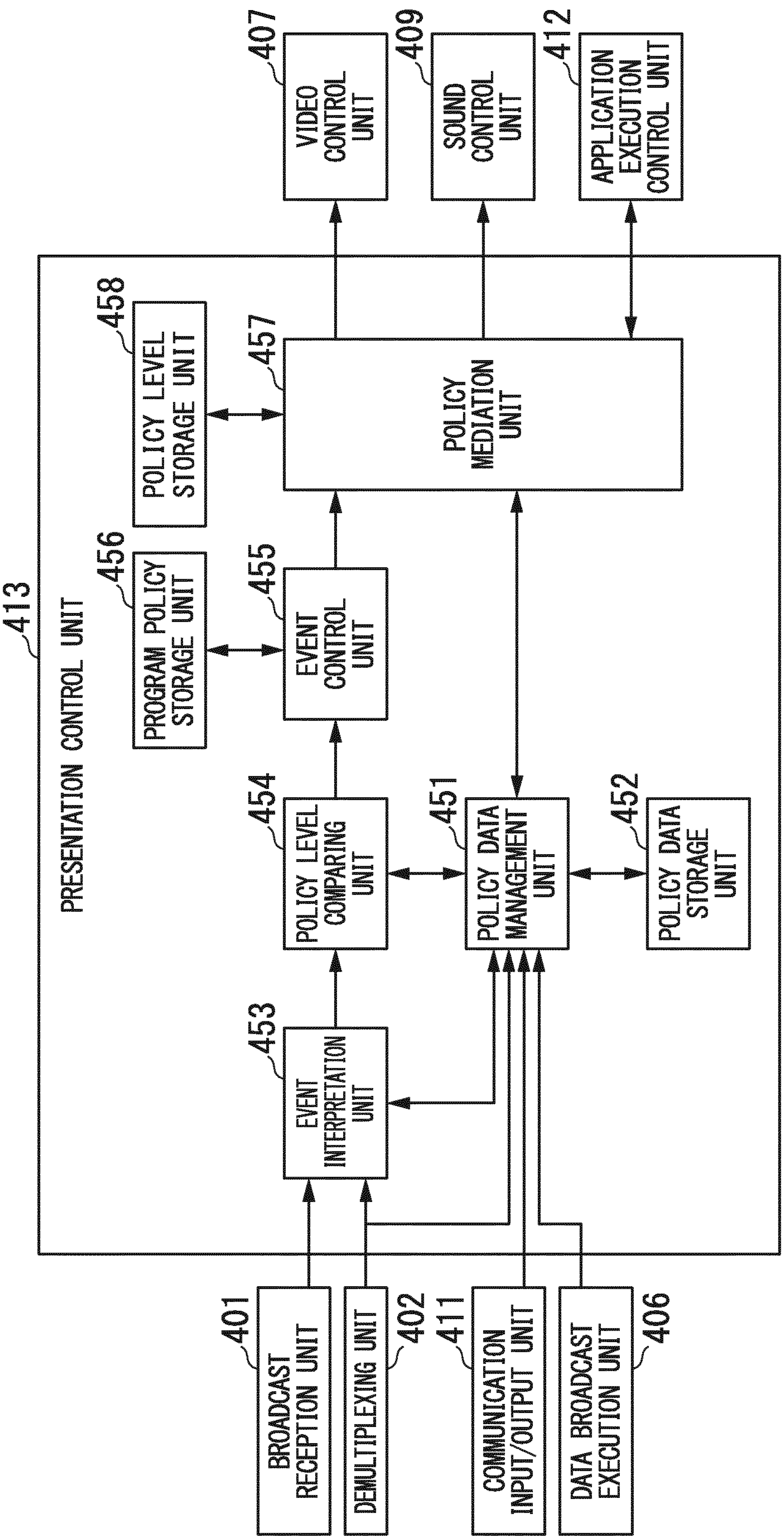
413
PRESENTATION CONTROL UNIT
401
BROADCAST RECEPTION UNIT
402
DEMULTIPLEXING UNIT
411
COMMUNICATION INPUT/OUTPUT UNIT
406
DATA BROADCAST EXECUTION UNIT
453
EVENT INTERPRETATION UNIT
454
POLICY LEVEL COMPARING UNIT
451
POLICY DATA MANAGEMENT UNIT
452
POLICY DATA STORAGE UNIT
455
EVENT CONTROL UNIT
456
PROGRAM POLICY STORAGE UNIT
457
POLICY MEDIATION UNIT
458
POLICY LEVEL STORAGE UNIT
407
VIDEO CONTROL UNIT
409
SOUND CONTROL UNIT
412
APPLICATION EXECUTION CONTROL UNIT

FIG. 25

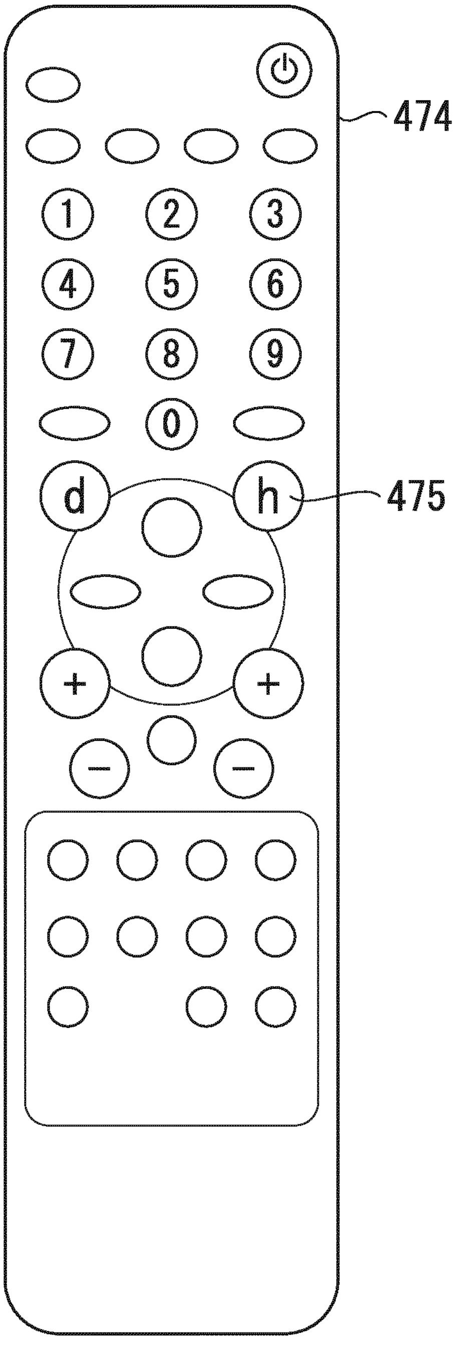

FIG. 26

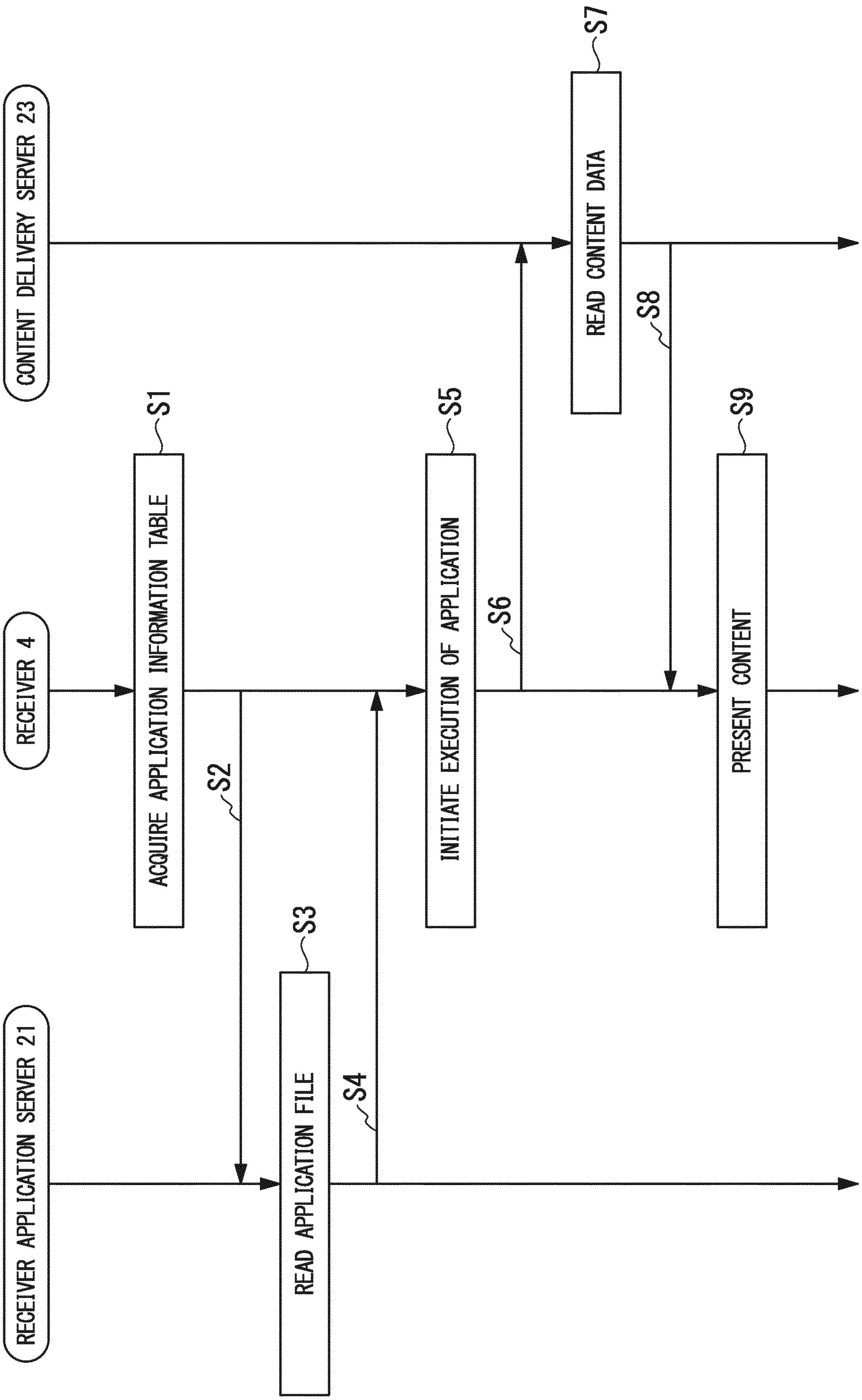
RECEIVER APPLICATION SERVER 21
RECEIVER 4
CONTENT DELIVERY SERVER 23
ACQUIRE APPLICATION INFORMATION TABLE
S1
S2
READ APPLICATION FILE
S3
S4
INITIATE EXECUTION OF APPLICATION
S5
S6
READ CONTENT DATA
S7
S8
PRESENT CONTENT
S9

FIG. 27

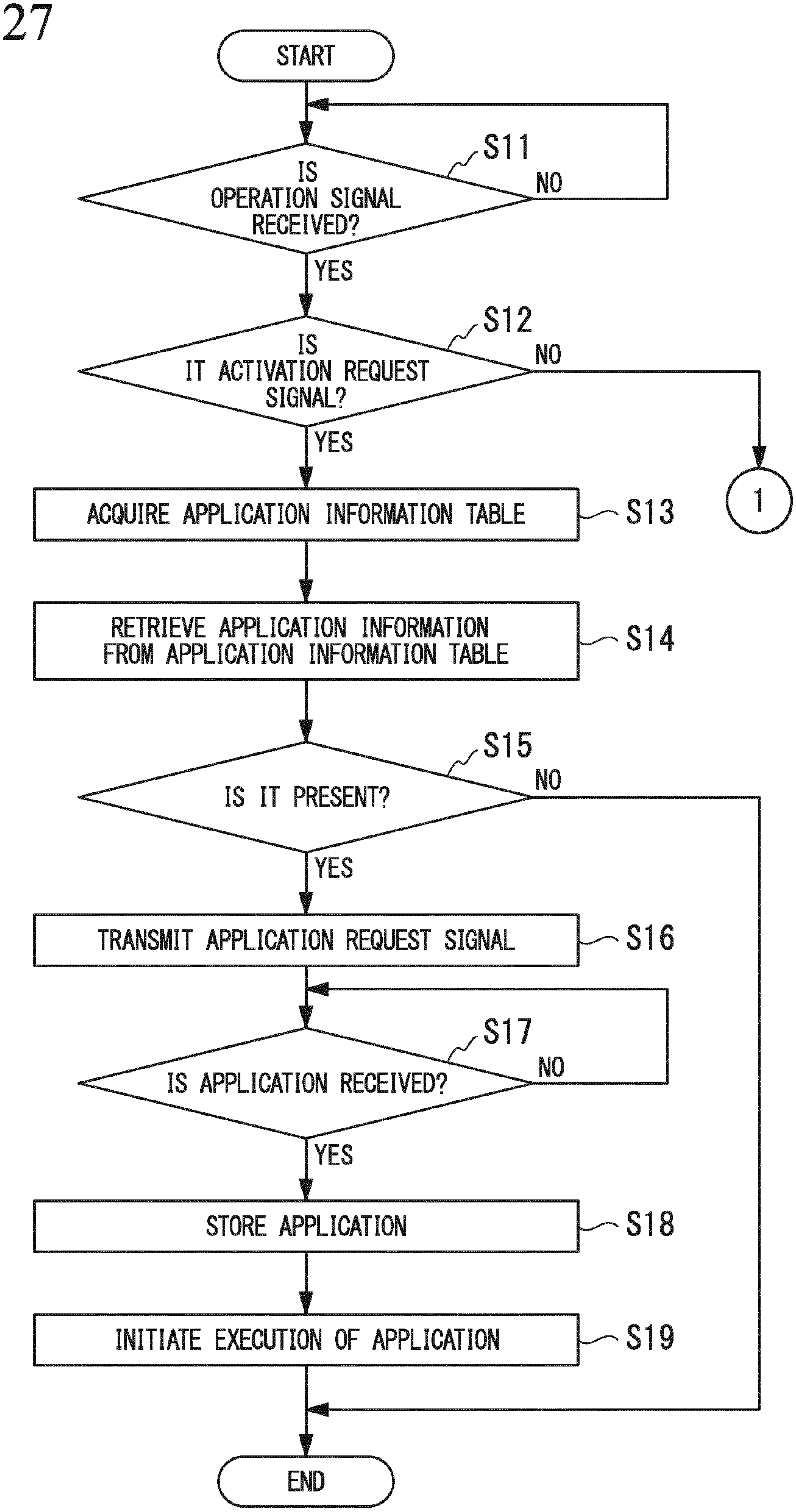
START
IS OPERATION SIGNAL RECEIVED?
S11
NO
YES
IS IT ACTIVATION REQUEST SIGNAL?
S12
NO
YES
ACQUIRE APPLICATION INFORMATION TABLE
S13
1
RETRIEVE APPLICATION INFORMATION FROM APPLICATION INFORMATION TABLE
S14
IS IT PRESENT?
S15
NO
YES
TRANSMIT APPLICATION REQUEST SIGNAL
S16
IS APPLICATION RECEIVED?
S17
NO
YES
STORE APPLICATION
S18
INITIATE EXECUTION OF APPLICATION
S19
END

FIG. 28

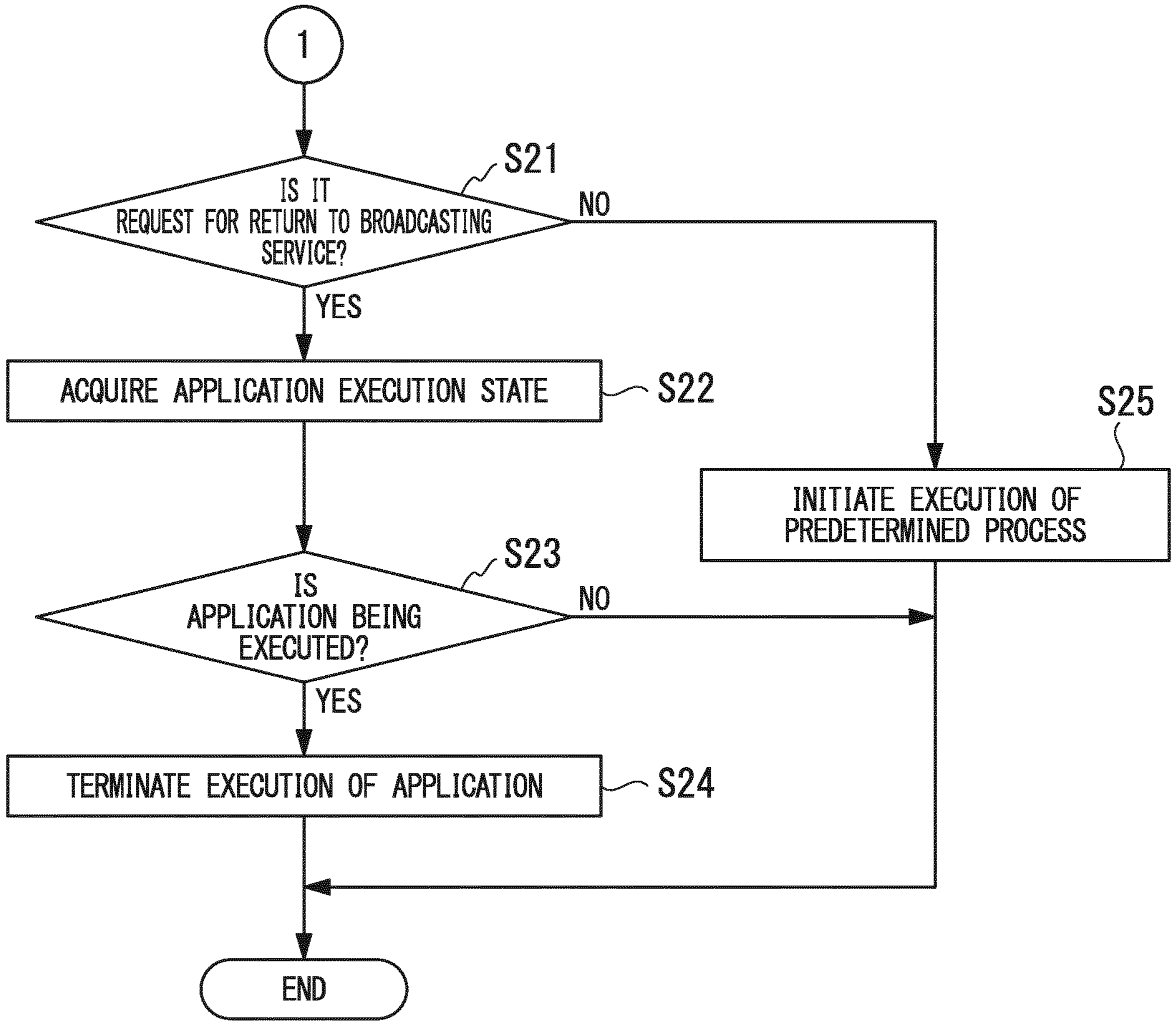
1
S21
IS IT REQUEST FOR RETURN TO BROADCASTING SERVICE?
NO
YES
ACQUIRE APPLICATION EXECUTION STATE
S22
S25
INITIATE EXECUTION OF PREDETERMINED PROCESS
S23
IS APPLICATION BEING EXECUTED?
NO
YES
TERMINATE EXECUTION OF APPLICATION
S24
END

FIG. 29

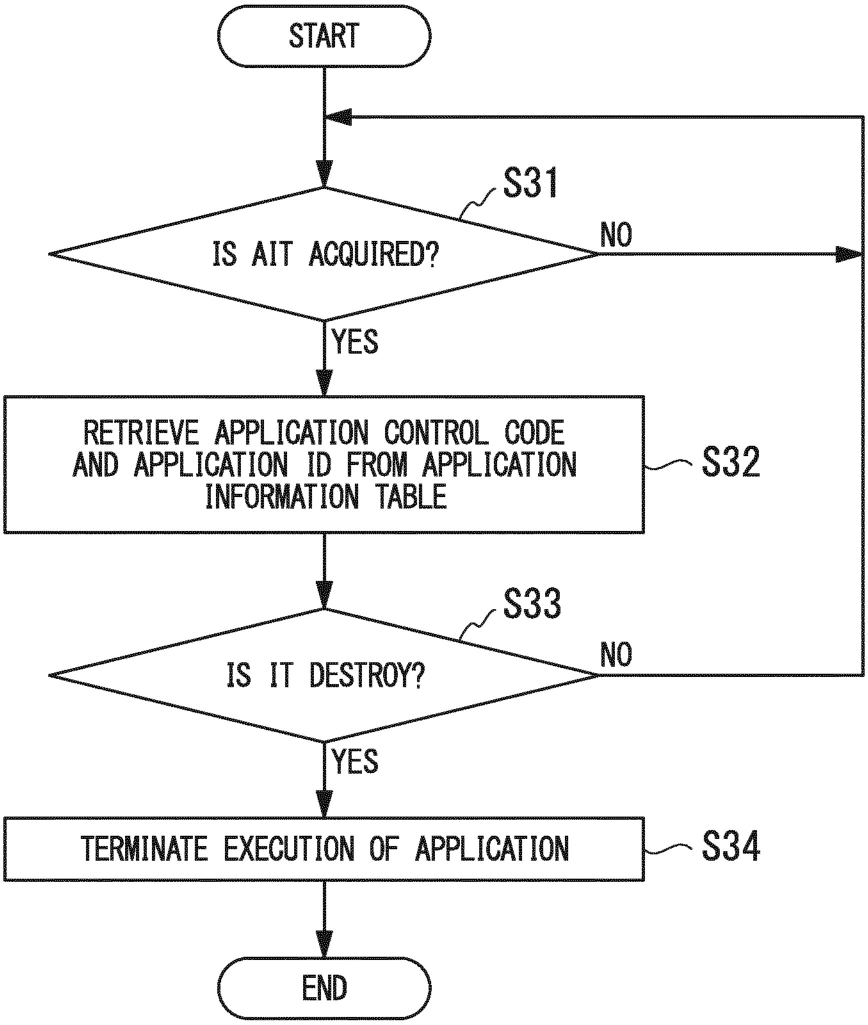
START
S31
IS AIT ACQUIRED?
NO
YES
RETRIEVE APPLICATION CONTROL CODE AND APPLICATION ID FROM APPLICATION INFORMATION TABLE
S32
S33
IS IT DESTROY?
NO
YES
TERMINATE EXECUTION OF APPLICATION
S34
END

FIG. 30

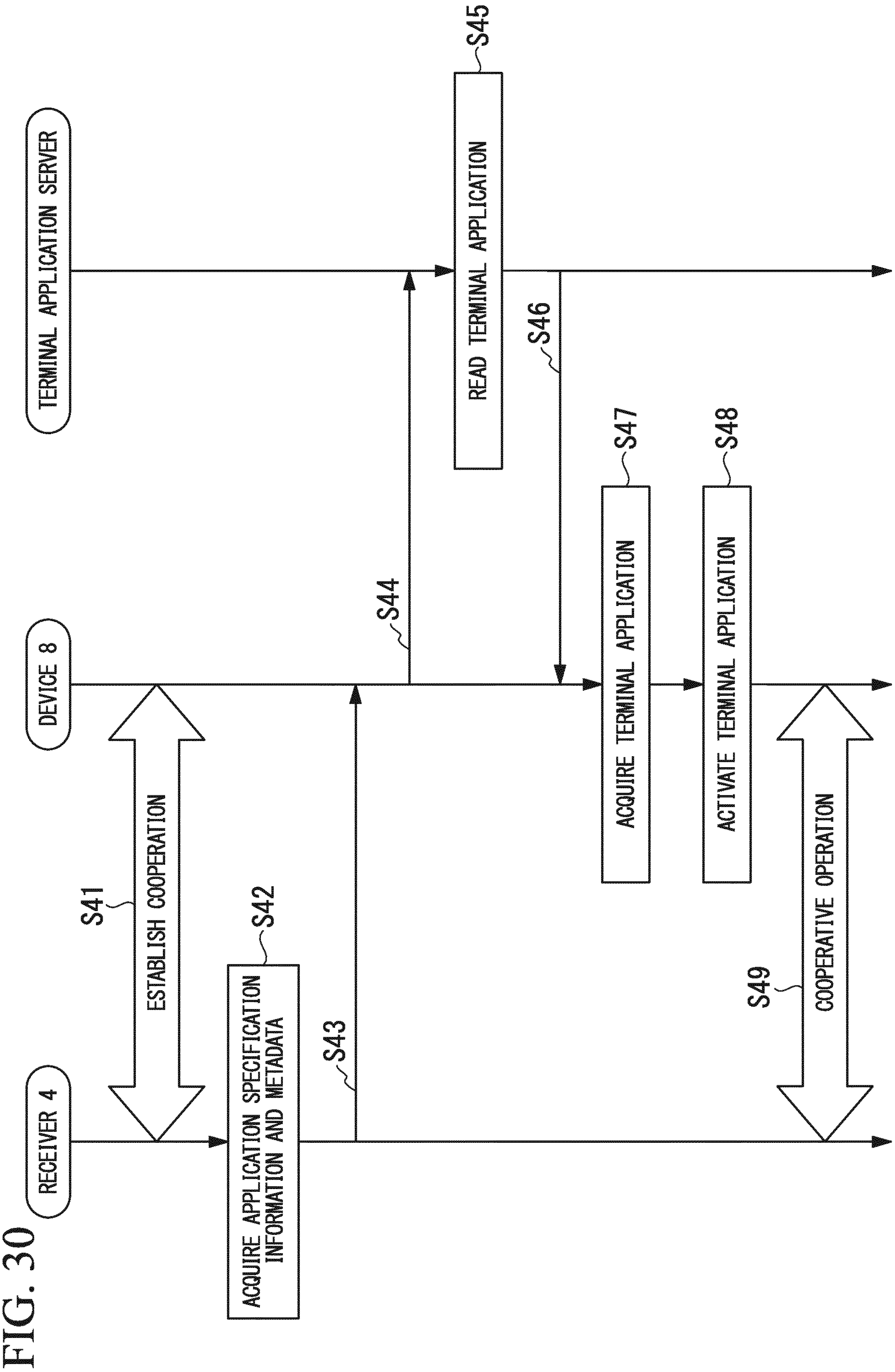

RECEIVER 4
DEVICE 8
TERMINAL APPLICATION SERVER
S41
ESTABLISH COOPERATION
S42
ACQUIRE APPLICATION SPECIFICATION INFORMATION AND METADATA
S43
S44
S45
READ TERMINAL APPLICATION
S46
S47
ACQUIRE TERMINAL APPLICATION
S48
ACTIVATE TERMINAL APPLICATION
S49
COOPERATIVE OPERATION

FIG. 31

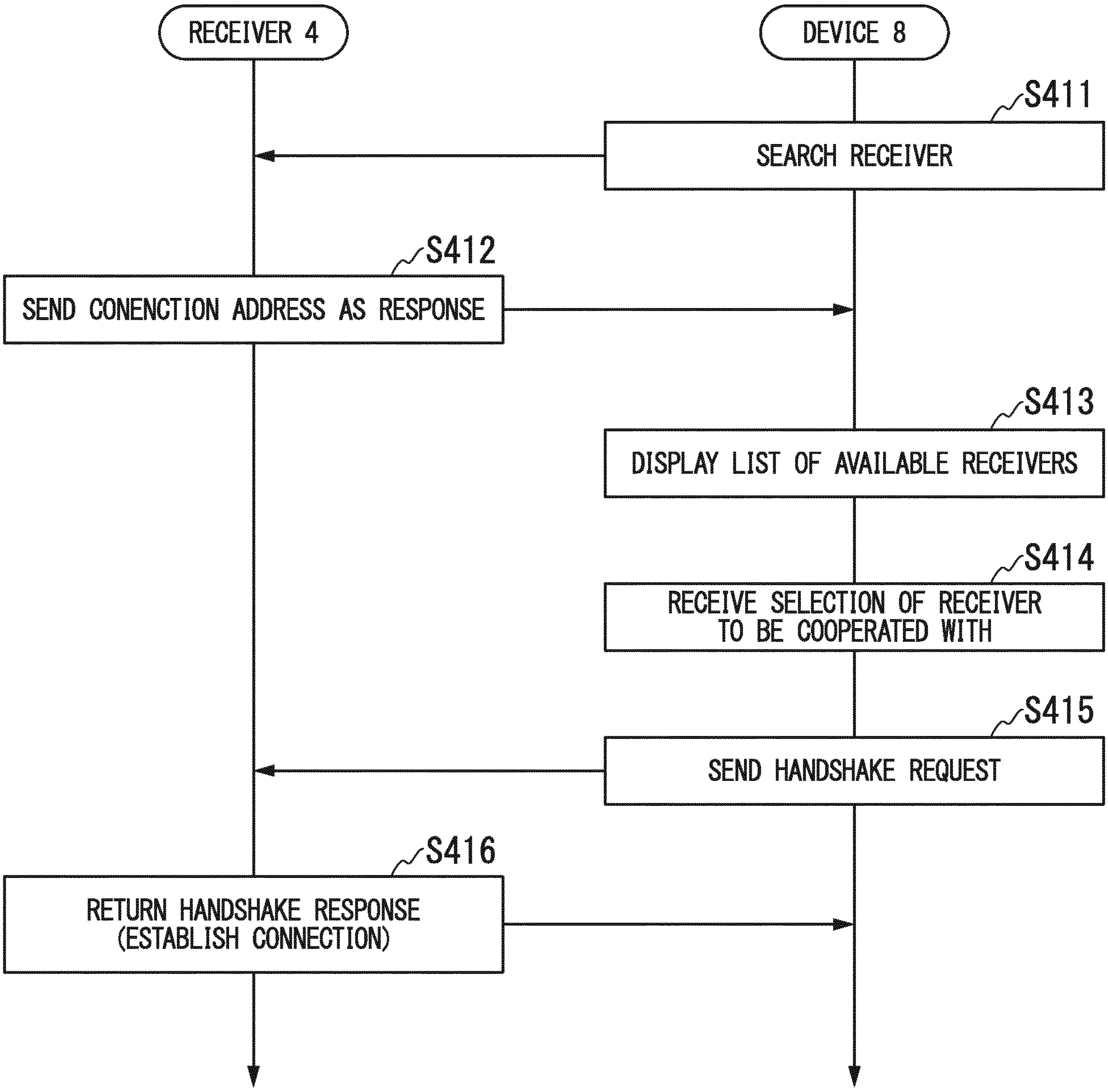
RECEIVER 4
DEVICE 8
S411
SEARCH RECEIVER
S412
SEND CONENCTION ADDRESS AS RESPONSE
S413
DISPLAY LIST OF AVAILABLE RECEIVERS
S414
RECEIVE SELECTION OF RECEIVER TO BE COOPERATED WITH
S415
SEND HANDSHAKE REQUEST
S416
RETURN HANDSHAKE RESPONSE (ESTABLISH CONNECTION)

FIG. 32

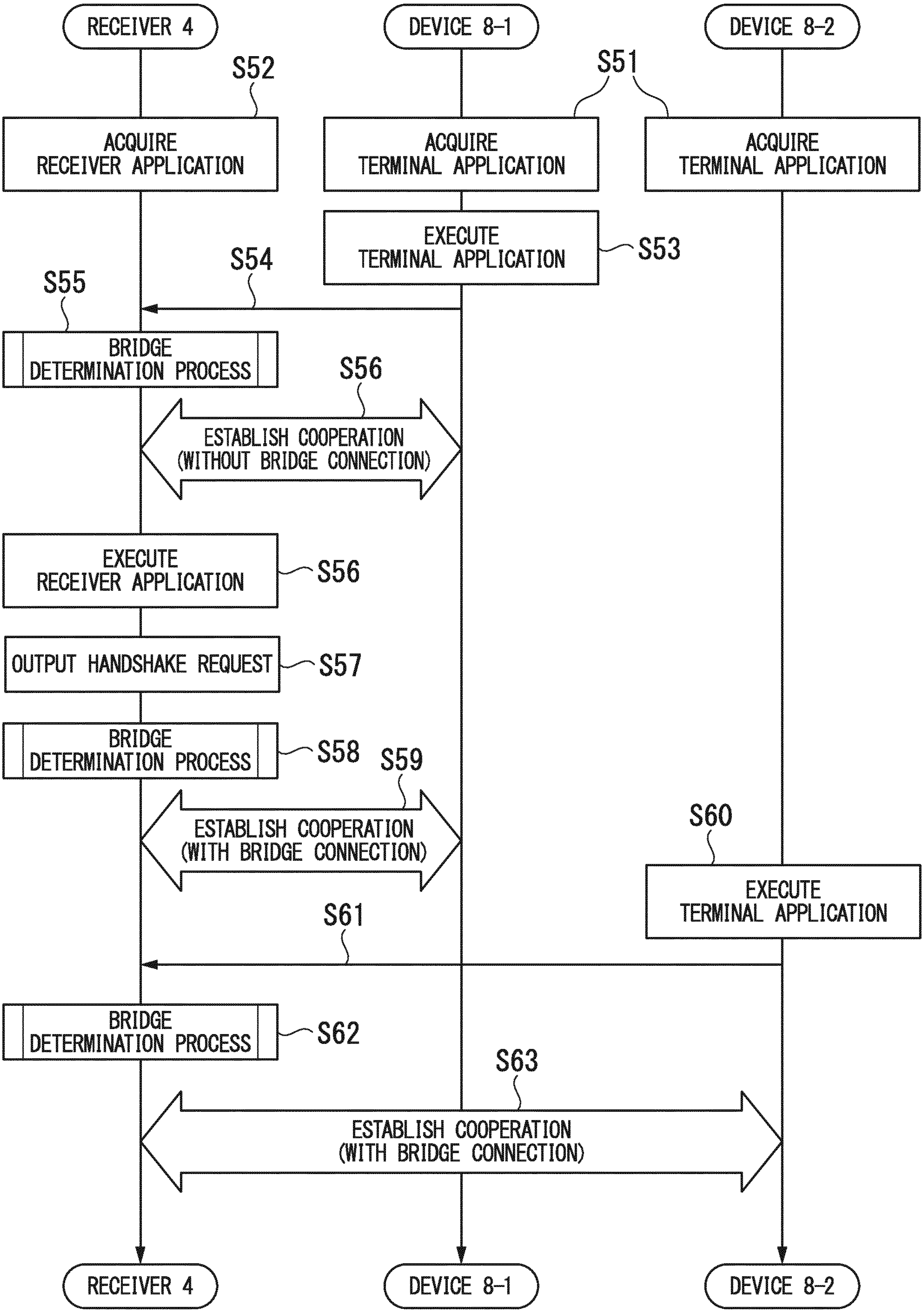
RECEIVER 4
DEVICE 8-1
DEVICE 8-2
S52
S51
ACQUIRE RECEIVER APPLICATION
ACQUIRE TERMINAL APPLICATION
ACQUIRE TERMINAL APPLICATION
EXECUTE TERMINAL APPLICATION
S53
S54
S55
BRIDGE DETERMINATION PROCESS
S56
ESTABLISH COOPERATION (WITHOUT BRIDGE CONNECTION)
EXECUTE RECEIVER APPLICATION
S56
OUTPUT HANDSHAKE REQUEST
S57
BRIDGE DETERMINATION PROCESS
S58
S59
ESTABLISH COOPERATION (WITH BRIDGE CONNECTION)
S60
EXECUTE TERMINAL APPLICATION
S61
BRIDGE DETERMINATION PROCESS
S62
S63
ESTABLISH COOPERATION (WITH BRIDGE CONNECTION)
RECEIVER 4
DEVICE 8-1
DEVICE 8-2

FIG. 33

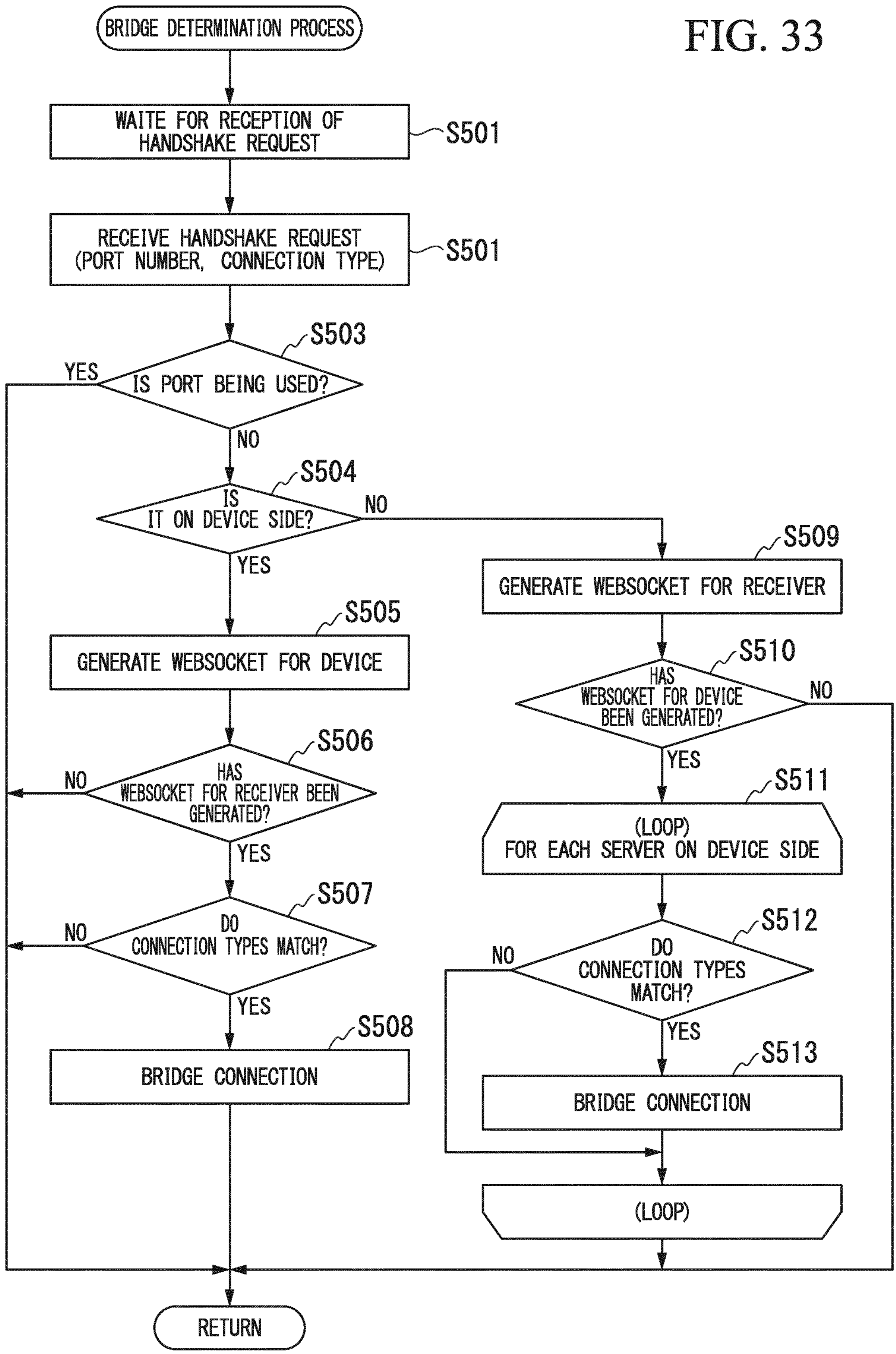
BRIDGE DETERMINATION PROCESS
WAITE FOR RECEPTION OF HANDSHAKE REQUEST
S501
RECEIVE HANDSHAKE REQUEST (PORT NUMBER, CONNECTION TYPE)
S501
S503
IS PORT BEING USED?
YES
NO
S504
IS IT ON DEVICE SIDE?
NO
YES
S505
GENERATE WEBSOCKET FOR DEVICE
S506
HAS WEBSOCKET FOR RECEIVER BEEN GENERATED?
NO
YES
S507
DO CONNECTION TYPES MATCH?
NO
YES
S508
BRIDGE CONNECTION
S509
GENERATE WEBSOCKET FOR RECEIVER
S510
HAS WEBSOCKET FOR DEVICE BEEN GENERATED?
NO
YES
S511
(LOOP) FOR EACH SERVER ON DEVICE SIDE
S512
DO CONNECTION TYPES MATCH?
NO
YES
S513
BRIDGE CONNECTION
(LOOP)
RETURN

# FIG. 34

EIT (EVENT INFORMATION TABLE)

| DATA STRUCTURE | NUMBER OF BITS |
|---|---|
| event_information_section() { | |
| table_id | 8 |
| section_syntax_indicator | 1 |
| reserved_future_use | 1 |
| reserved | 2 |
| section_length | 12 |
| service_id | 16 |
| reserved | 2 |
| version_number | 5 |
| current_next_indicator | 1 |
| section_number | 8 |
| last_section_number | 8 |
| transport_stream_id | 16 |
| original_network_id | 16 |
| segment_last_section_number | 8 |
| last_table_id | 8 |
| for (i=0; i<N; i++) { | |
| event_id | 16 |
| start_time | 40 |
| duration | 24 |
| running_status | 3 |
| free_CA_mode | 1 |
| descriptors_loop_length | 12 |
| for (j=0; j<M; j++) { | |
| descriptor() | |
| } | |
| } | |
| CRC_32 | 32 |
| } | |

**INTERNATIONAL SEARCH REPORT**

International application No.
PCT/JP2012/070925

A. CLASSIFICATION OF SUBJECT MATTER
*H04H60/13*(2008.01)i, *H04H20/08*(2008.01)i, *H04M11/08*(2006.01)i, *H04N7/173*(2011.01)i

According to International Patent Classification (IPC) or to both national classification and IPC

B. FIELDS SEARCHED

Minimum documentation searched (classification system followed by classification symbols)
H04H60/13, H04H20/08, H04M11/08, H04N7/173

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-222496 A (Matsushita Electric Industrial Co., Ltd.), 24 August 2006 (24.08.2006), paragraphs [0007], [0015], [0023] to [0024], [0035] to [0036]; fig. 2 (Family: none) | 1,3,13<br>2,4-6 |
| Y | JP 11-306013 A (Hitachi, Ltd.), 05 November 1999 (05.11.1999), paragraphs [0013], [0021] to [0026], [0033] to [0036], [0097] to [0110]; fig. 1, 2, 3 (Family: none) | 2 |
| Y | JP 2008-109341 A (Sharp Corp.), 08 May 2008 (08.05.2008), paragraphs [0052], [0081]; fig. 2 (Family: none) | 4 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 October, 2012 (17.10.12) | 30 October, 2012 (30.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2012/070925

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-88941 A (Sony Corp.), 23 April 2009 (23.04.2009), paragraphs [0031] to [0036]; fig. 1, 2 (Family: none) | 5 |
| Y | JP 2010-109568 A (Sharp Corp.), 13 May 2010 (13.05.2010), paragraphs [0106] to [0111] (Family: none) | 6 |

Form PCT/ISA/210 (continuation of second sheet) (July 2009)

**INTERNATIONAL SEARCH REPORT**

International application No.
PCT/JP2012/070925

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
1-6 and 13

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (July 2009)

INTERNATIONAL SEARCH REPORT

International application No.
PCT/JP2012/070925

Continuation of Box No.III of continuation of first sheet(2)

The common or corresponding technical feature between the invention in claim 1 and the invention in claim 7 is that a receiver, which separates a broadcast stream from received broadcast signals, establishes a connection and communicates with a terminal.

However, the above-said technical feature cannot be considered to be a special technical feature, since the technical feature does not make a contribution over the prior art in the light of the contents disclosed in JP 2006-222496 A (Matsushita Electric Industrial Co., Ltd.), 24 August 2006 (24.08.2006), paragraphs [0007], [0015], [0023] to [0024], [0035] to [0036]; fig. 2.

Accordingly, the following two invention groups are involved in claims.

(Invention 1) the inventions of claims 1-6 and 13

A receiver (receiving method) which establishes a connection with a terminal; and push-transmits, when predetermined first information is included in a broadcast stream separated from received broadcast signals, second information associated with the first information via the established connection to the terminal.

(Invention 2) the inventions of claims 7-12 and 14

A receiver (receiving method) which acquires, from a broadcast stream separated from received broadcast signals, information of an application to be executed; executes an application denoted by the acquired information; establishes a connection with a terminal; outputs a request, which is output by means of the execution of the application, via the established connection to a terminal; and outputs a request, which is output from the terminal, to an application executing unit.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011184564 A
- JP 2011184565 A
- JP 2012112968 A
- JP 2012112969 A
- JP 2009080593 A

### Non-patent literature cited in the description

- APPLICATION EXCECUTION ENGINE PLATFORM FOR DIGITAL BROADCASTING. *ARIB STD-B23,* July 2009
- *ARIB STD-B24 V5.4,* vol. 1
- TR-B 14. vol. 3
- *TR-B15,* vol. 3
- ARIB STD-B24. vol. 1